(19) Europäisches Patentamt
European Patent Office
Office européen des brevets

(11) EP 3 932 665 B1

(12) **EUROPEAN PATENT SPECIFICATION**

(45) Date of publication and mention of the grant of the patent:
**17.04.2024 Bulletin 2024/16**

(21) Application number: **20762951.0**

(22) Date of filing: **26.02.2020**

(51) International Patent Classification (IPC):
***B32B 27/00*** *(2006.01)* ***B32B 27/20*** *(2006.01)*
***G02B 5/08*** *(2006.01)* ***G02B 5/26*** *(2006.01)*
***B32B 7/022*** *(2019.01)* ***B32B 7/023*** *(2019.01)*
***B32B 3/30*** *(2006.01)*

(52) Cooperative Patent Classification (CPC):
(C-Sets available)
**C09K 19/586; C08F 8/14; C08F 290/046; C09D 151/003; C09J 7/29; G02B 5/124;**
C08F 220/14; C08F 220/325; C08F 2810/30; C09J 2203/354; C09J 2301/41; C09J 2400/163; C09K 2019/0448; C09K 2019/528; G02B 27/283

(Cont.)

(86) International application number:
**PCT/JP2020/007647**

(87) International publication number:
**WO 2020/175527 (03.09.2020 Gazette 2020/36)**

# (54) LAYERED BODY

SCHICHTKÖRPER

CORPS STRATIFIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.02.2019 JP 2019034079**

(43) Date of publication of application:
**05.01.2022 Bulletin 2022/01**

(73) Proprietor: **FUJIFILM Corporation**
**Tokyo 106-8620 (JP)**

(72) Inventor: **HAYATA, Yuichi**
**Kanagawa 250-0193 (JP)**

(74) Representative: **Kudlek, Franz Thomas**
**Dehns Germany**
**Theresienstraße 6-8**
**80333 München (DE)**

(56) References cited:
**JP-A- 2011 212 892**
**JP-A- 2016 139 006**
**US-A1- 2004 180 148**
**US-A1- 2016 259 102**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 932 665 B1

(52) Cooperative Patent Classification (CPC): (Cont.)

C-Sets
**C08F 8/14, C08F 220/325;**
**C08F 290/046, C08F 230/085;**
**C09D 151/003, C08L 33/12;**
C08F 220/14, C08F 220/325;
C08F 220/325, C08F 220/14

## Description

## BACKGROUND OF THE INVENTION

1. Field of the Invention

The present disclosure relates to a laminate, which can be suitably used as an automobile exterior member.

2. Description of the Related Art

Surfaces of base materials such as paper, wood, plastic, metal, glass, and inorganic materials are subjected to coating for imparting various performances such as hardness, scratch resistance, rub resistance, chemical resistance, and organic solvent resistance to protect the surfaces thereof, and painting for the intended purpose of designability.
In addition, surfaces of molded products after molding are subjected to coating with a coating agent for the intended purpose of protecting surfaces of plastic molded products that are used for cases of home appliances, personal computers, mobile phones, and the like, and painting for the intended purpose of designability.
In recent years, instead of the above coating or painting, a method in which a decorative layer is prepared as a decorative film for molding, the decorative film for molding is arranged on a mold, and the decorative layer is transferred to a molded product by a step of carrying out molding using a resin for molding is adopted.
In addition, examples of conventional laminate include those described below.
JP2011-154215A discloses an infrared light reflecting plate that reflects an infrared ray, including a substrate and at least four light reflecting layers X1, X2, X3, and X4, which are obtained by fixing a cholesteric liquid crystalline phase, where reflection center wavelengths of the light reflecting layers X1 and X2 are each $\lambda_1$ (nm) and are equal to each other, the light reflecting layers X1 and X2 respectively reflect circular polarizations which are opposite in direction with each other, and the reflection center wavelength $\lambda_1$ (nm) thereof is in a range of 1,010 to 1,070 nm, and where reflection center wavelengths of the light reflecting layers X3 and X4 are each $\lambda_2$ (nm) and are equal to each other, the light reflecting layers X3 and X4 reflect circular polarizations which are opposite in direction with each other, and the reflection center wavelength $\lambda_2$ (nm) thereof is in a range of 1,190 to 1,290 nm.
JP2018-077532A discloses an optical element which is an optical element having a shape layer having a structure body that forms a recessed part, an optical functional layer formed on the structure body that partially reflects incident light, a first layer with which the recessed part is filled and which has a first volume, and a second layer formed on the top of the first layer with a thickness having a second volume that is 15% or more of the first volume, in which an embedding resin layer formed of an energy ray-curable resin that embeds the structure body and the optical functional layer, and at least one of the shape layer or the embedding resin layer has translucency and an incident surface of the incident light, where the energy ray-curable resin has a curing shrinkage ratio of 8% by volume or more, and the optical functional layer is a wavelength selective reflective layer that directionally reflects light in the infrared band and transmits light in the visible light band.
JP2017-097113A discloses a reflective material including a circularly polarized light reflection layer and an elastic organic layer, in which the circularly polarized light reflection layer includes a layer obtained by fixing a cholesteric liquid crystalline phase, the circularly polarized light reflection layer has an uneven shape, one surface of the elastic organic layer is directly in contact with the circularly polarized light reflection layer, and the other surface thereof is a flat surface.
Further, JP2016-102952A discloses an infrared reflective material including a metal particle-containing layer on a support, in which the metal particle-containing layer has an uneven structure including at least one of a protruding part or a recessed part, at least one kind of metal particles is contained on at least one surface of the protruding part or the recessed part of the uneven structure of the metal particle-containing layer, the metal particles have 60% by particle number or more of hexagonal to circular flat metal particles, and the flat metal particles, which are plane-aligned in a range of 0° to ±30° of angle that is formed between the principal plane of the flat metal particle and the surface of the uneven structure closest to the flat metal particle, are 50% by particle number or more with respect to all the flat metal particles.
For example, US 2016/259102 A1 discloses a light-reflecting film including: a reflective layer having at least one or more laminate(s) in which a high refractive index layer containing a polymer and a low refractive index layer containing a polymer are laminated; a pressure-sensitive adhesive layer that is disposed on one outermost layer; and a hard coat layer that is disposed on another outermost layer, wherein the elastic modulus of the pressure-sensitive adhesive layer and the elastic modulus of the hard coat layer satisfy the following Formula: the elastic modulus of the hard coat layer [Pa]/the elastic modulus of the pressure-sensitive adhesive layer [Pa]≧3, and the instantaneous pressure-sensitive adhesive force exhibited when the pressure-sensitive adhesive layer is applied to glass is from 2 to 8 N/25 mm.
For example, US 2004/180148 A1 discloses a glass crack prevention laminate that has a glass crack prevention

adhesive layer having a dynamic storage elastic modulus G' of not larger than $1 \times 10^7$ Pa at 20° C., and a liquid crystal display optical film laminated on a surface of the glass crack prevention adhesive layer. Particularly, the liquid crystal display optical film is made of a polarizing plate or of a laminate of a polarizing plate and another optical layer. The thickness of the glass crack prevention adhesive layer is selected to be in a range of from 0.1 mm to 5 mm. For example, JP 2011 212892 A discloses a functional laminate having a functional layer formed to have a predetermined three dimensional shape and containing an inorganic layer; a first resin layer and a second resin layer which are brought into close contact with two main surfaces respectively and arranged to hold the functional layer in-between; and a first support and a second support arranged on the surface of the first resin layer which is opposed to the surface in contact with the functional layer and on the surface of the second resin layer which is opposed to the surface in contact with the functional layer respectively and having elastic modulus larger than that of the first resin layer and that of the second resin layer is formed as the functional laminate.

For example, JP 2016 139006 A discloses a polarizing plate that includes a substrate, an intermediate layer, an adhesive layer and a polarizer layer, in this order, in which the substrate includes at least a resin film and has a thickness of 120 μm or more, and the intermediate layer is a cured layer obtained by curing a thermosetting composition containing a thermally crosslinking compound by 0.10 mass% or more with respect to the total solid content. An elastic modulus Ea of the substrate, an elastic modulus Eb of the intermediate layer, and an elastic modulus Ec of the adhesive layer satisfy the expression: Ea>Eb>Ec.

## SUMMARY OF THE INVENTION

An object to be achieved by the present invention is to provide a laminate having excellent chipping resistance.

The present invention relates to a laminate as defined in the appended claims.

According to the embodiment of the present invention, it is possible to provide a laminate having excellent chipping resistance.

## BRIEF DESCRIPTION OF THE DRAWINGS

Fig. 1 is a schematic view of a mold forming an uneven structure in a corner cube shape in a case of being viewed from a direction perpendicular to the plane direction.

Fig. 2 is a schematic cross-sectional view obtained by cutting the mold forming an uneven structure in a corner cube shape illustrated in Fig. 1, along the inclined surfaces of corner cubes so that a cutting line passes through a portion where the highest points and the lowest points of the height of the protruding part in the direction perpendicular to the plane direction are arranged in a line.

Fig. 3 is a schematic cross-sectional view illustrating a cross-sectional shape of a mold for molding processing, which is used in molding processing.

Fig. 4 is a schematic view of a mold forming an uneven structure in a pyramid shape, in a case of being viewed in an oblique direction from a mold surface.

Fig. 5 is a schematic view of a mold forming an uneven structure in a hemispherical shape, in a case of being viewed in an oblique direction from a mold surface.

## DESCRIPTION OF THE PREFERRED EMBODIMENTS

Hereinafter, the contents of the present disclosure will be described in detail. The description of the configuration requirements described below is based on the representative embodiments of the present disclosure: however, the present disclosure is not limited to such embodiments.

In the present specification, "to" indicating a numerical range is used to mean that numerical values described before and after "to" are included as a lower limit value and an upper limit value, respectively.

In the numerical ranges described stepwise in the present specification, the upper limit value or the lower limit value described in one numerical range may be substituted with the upper limit value or the lower limit value of the numerical range described stepwise in other stages. Further, in the numerical ranges described in the present specification, the upper limit value or the lower limit value of the numerical range may be substituted with the value shown in Examples.

In addition, in the present specification, in a case where there are a plurality of substances corresponding to each component in the composition, the amount of each component in the composition means the total amount of the plurality of corresponding substances present in the composition unless otherwise particularly specified.

In the present specification, the term "step" includes not only an independent step but also a step that cannot

be clearly distinguished from other steps, as long as the intended purpose of the step is achieved.

In the present specification, the term "total solid content" refers to the total mass of components excluding the solvent from the total composition content of the composition. In addition, the "solid content" refers to a component excluding the solvent as described above and may be, for example, a solid or a liquid at 25°C.

In addition, in describing a group (atomic group) in the present specification, the description which does not indicate substituted or unsubstituted includes not only a group having no substituent but also a group having a substituent. For example, the "alkyl group" includes not only an alkyl group having no substituent (an unsubstituted alkyl group) but also an alkyl group having a substituent (a substituted alkyl group).

In the present disclosure, "% by mass" has the same meaning as "% by weight", and "parts by mass" has the same meaning as "parts by weight".

In the present disclosure, a combination of two or more preferred aspects is a more preferred aspect.

Unless otherwise specified, the weight-average molecular weight (Mw) and the number-average molecular weight (Mn) in the present disclosure are molecular weights converted using polystyrene as a standard substance, which are obtained by measuring with a gel permeation chromatography (GPC) analysis apparatus using TSKgel GMHxL, TSKgel G4000HxL, and TSKgel G2000HxL (trade names, all manufactured by TOSOH CORPORATION) as columns, tetrahydrofuran (THF) as a solvent, and a differential refractometer as a detector.

Hereinafter, the present disclosure will be described in detail.

(Laminate)

A laminate according to the present invention includes in the following order, a protective layer, a base material, a reflective layer having a maximum reflection wavelength in a wavelength range of 380 nm to 2,000 nm, and an adhesive layer, in which in a case where a modulus of elasticity of the protective layer is denoted by E1, a modulus of elasticity of the base material is denoted by E2, and a modulus of elasticity of the adhesive layer is denoted by E3, a relationship of $E1 \geq E2 > E3$ is satisfied.

In addition, the laminate according to the present disclosure can be used for various intended uses, and examples thereof include intended uses for the interior and exterior of automobiles, the interior and exterior of electric appliances, and packaging containers. Among the above, the laminate can be suitably used as interior and exterior members for an automobile and can be particularly suitably used as an automobile exterior member.

The inventors of the present invention found that a laminate having the conventional reflective layer does not have sufficient impact resistance on the surface, in the inside, or between layers, the structural destruction of the reflective layer cannot be sufficiently suppressed, and particularly a problem in chipping resistance occurs.

As a result of diligent studies, the inventors of the present invention have found that a laminate having excellent chipping resistance can be provided by adopting the above configurations.

The mechanism of the action of excellent effects due to these configurations is not clear, but it is presumed as follows.

It is presumed that in a case where a laminate has, in the following order, a protective layer, a base material, a reflective layer, and an adhesive layer, and in a case where a relationship of $E1 \geq E2 > E3$ is satisfied, where a modulus of elasticity of the protective layer is denoted by E1, a modulus of elasticity of the base material is denoted by E2, and a modulus of elasticity of the adhesive layer is denoted by E3, the surface protection due to the protective layer having a high modulus of elasticity and the stepwise impact absorption and diffusion due to the protective layer, the base material, and the adhesive layer occur, and thus the reflective layer having an uneven structure in which structural destruction easily occurs and reflectivity easily changes can be maintained, whereby the laminate having excellent chipping resistance can be obtained.

The laminate according to the present disclosure is also excellent in reflectivity due to adopting the above configuration.

Further, the laminate according to the present disclosure has excellent retroreflectivity due to having a cholesteric liquid crystal layer as the reflective layer, and in the case of this laminate, a color such as a structural color can be visible, a color change depending on the viewing angle and the visible color itself can be adjusted, and thus the designability is also excellent.

Hereinafter, the laminate according to the present disclosure will be described in detail.

<Modulus of elasticity of each layer and relationship thereof>

In the laminate according to the present disclosure, in a case where a modulus of elasticity of the protective layer is denoted by E1, a modulus of elasticity of the base material is denoted by E2, and a modulus of elasticity of the adhesive layer is denoted by E3, a relationship of $E1 \geq E2 > E3$ is satisfied, and a relationship of $E1 > E2 > E3$ is preferably satisfied. According to the above aspect, in a case of being collided with an object at high speed, it is possible

to reduce damage to a reflective layer, whereby the reflective layer has excellent chipping resistance and maintains high reflectance.

The modulus of elasticity of the reflective layer is not particularly limited; however, in a case where the modulus of elasticity of the reflective layer is denoted by E5, it is preferable to satisfy, E1 > E5 > E3.

According to the invention, the modulus of elasticity E1 of the protective layer is 1 GPa to 25 GPa, preferably 3 GPa to 15 GPa. In a case where E1 is 1 GPa or more, sufficient hardness can be obtained and the effect of dispersing the impact in the in-plane direction can be obtained, and in a case where E1 is 25 GPa or less, the cracking occurrence and the breakage in the protective layer itself can be suppressed.

According to the invention, the modulus of elasticity E2 of the base material is 0.1 GPa to 10 GPa, preferably 0.3 GPa to 5 GPa, and particularly preferably 0.5 GPa to 3 GPa. Within the above range, the impact absorbability is excellent, and the structural destruction of the reflective layer can be suppressed.

According to the invention, the modulus of elasticity E3 of the adhesive layer is 0.0001 GPa to 0.1 GPa, preferably 0.0002 GPa to 0.01 GPa. In a case where E3 is 0.0001 GPa or more, the displacement quantity at the time of applying an impact is suppressed, and in a case where E3 is 0.1 GPa or less, the cushioning effect of impact absorption is highly exhibited, and the breakage of the reflective layer can be suppressed.

Further, in a case where the laminate according to the present disclosure has a resin layer described later between the reflective layer, and the adhesive layer and the modulus of elasticity of the resin layer is E4, it is preferable to satisfy a relationship of E1 > E4 > E3, from the viewpoint of chipping resistance.

The modulus of elasticity E4 of the resin layer is preferably 0.05 GPa to 5 GPa, more preferably 0.1 GPa to 3 GPa, and particularly preferably 0.3 GPa to 1 GPa. Within the above range, the impact absorbability is excellent, and the structural destruction of the reflective layer can be suppressed.

Further, the relationship between E2 and E4 may be E2 > E4, E2 = E4, or E2 < E4; however, from the viewpoint of chipping resistance, it is preferable to be E2 ≥ E4 and more preferably to be E2 > E4.

In the method of measuring the modulus of elasticity of each of the layers in the present disclosure, an indentation hardness of each of the layers is measured as the modulus of elasticity using a dynamic ultra micro hardness tester (DUH-201S, manufactured by Shimadzu Corporation).

The measurement conditions are as follows.

- Kind of indenter: Vickers
- Test mode: Load-unload test
- Test force: 40 mN
- Load speed: 1.3239 mN/sec
- Retention time: 5 sec

Regarding the measurement for each layer, a cut cross section of the laminate may be subjected to the measurement, a layer to be measured may be exposed by cutting or the like and then subjected to the measurement, and the surface may be subjected to the measurement in the case of the above protective layer and the adhesive layer of the above laminate.

<Relationship of respective thicknesses of layers>

According to the invention, in a case where the thickness of the protective layer is denoted by T1, the thickness of the base material is denoted by T2, and the thickness of the adhesive layer is denoted by T3, the thicknesses of the layers satisfy the relationship of T2 > T3 and the relationship of T2 > T3 ≥ T1 from the viewpoint of chipping resistance.

Further, in the laminate according to the present disclosure, in a case where the thickness of the resin layer described later is denoted by T4, it is preferable to be T4 > T3, more preferable to be T2 > T4 > T3, and particularly preferable to be T2 > T4 > T3 ≥ T1, from the viewpoint of chipping resistance and retroreflectivity.

In the laminate according to the present disclosure, in a case where the thickness of the reflective layer is denoted by T5, it is preferable to be T1 > T5, more preferable to be T2 > T3 ≥ T1 > T5, and particularly preferable to be T2 > T4 > T3 ≥ T1 > T5, from the viewpoints of chipping resistance and retroreflectivity.

The thickness of each of the layers in the present disclosure can be measured by the following method.

In the cross-sectional observation image in the thickness direction of the laminate, the arithmetic mean value of the layer thicknesses measured at 10 randomly selected points is obtained, and the obtained value is defined as the layer thickness. The cross-sectional observation image of the laminate in the thickness direction can be obtained by using a scanning electron microscope (SEM) or a laser microscope.

<Protective layer>

The laminate according to the present disclosure has a protective layer.

The protective layer may be a layer having sufficient strength to protect the reflective layer or the like; however, it is preferably a layer containing a resin having excellent durability against light, heat, humidity, and the like.

Further, it may be a protective layer having antireflection performance from the viewpoints of visibility and denseness of black (the suppressibility of reflected glare due to the reflected light from the outside, for example, the suppression of reflected glare of the fluorescent lamp).

Further, the protective layer is preferably a layer obtained by curing a layer containing a material described later, and more preferably a layer obtained by curing a layer containing the material described later, after molding processing.

From the viewpoint of durability, the protective layer according to the invention contains a resin, preferably contains at least one resin selected from the group consisting of a siloxane resin, fluororesin, a urethane resin, an acrylic resin, a polyester resin, a melamine resin, and a polyolefin resin, and still more preferably contains at least one resin selected from the group consisting of a siloxane resin, fluororesin, and a urethane resin.

The fluororesin is not particularly limited; however, examples thereof include those described in paragraphs 0076 to 0106 of JP2009-217258A and paragraphs 0083 to 0127 of JP2007-229999A.

Examples of the fluororesin include a fluoroalkyl resin in which hydrogen in an olefin is substituted with fluorine, and examples thereof include copolymers such as polytetrafluoroethylene, polychlorotrifluoroethylene, polyvinylidene fluoride, polyvinyl fluoride, perfluoroalkoxy alkane, perfluoroethylene propene, and ethylene tetrafluoroethylene, or fluororesin dispersions that are obtained by copolymerization with a component that enhances affinity with an emulsifier or water and by water dispersification. Specific examples of such a fluororesin include LUMIFLON (registered trade mark) and Obbligato (registered trade mark), manufactured by AGC Inc.; ZEFFLE (registered trade mark) and NEOFLON (registered trade mark), manufactured by DAIKIN INDUSTRIES, Ltd.; Teflon (registered trade mark) manufactured by DuPont de Nemours, Inc.; and KYNAR (registered trade mark) manufactured by Arkema S.A.

Further, for example, a compound having at least one of a polymerizable functional group or a crosslinking functional group and containing a fluorine atom may be used, and examples thereof include radically polymerizable monomers such as a perfluoroalkyl (meth)acrylate, a vinyl fluoride monomer, and a vinylidene fluoride monomer, and cationic polymerizable monomers such as perfluorooxetane. Specific examples of such a fluorine compound include LINC3A manufactured by Kyoeisha Chemical Co., Ltd., OPTOOL manufactured by DAIKIN INDUSTRIES, Ltd., OPSTAR manufactured by Arakawa Chemical Industries, Ltd., and tetrafluorooxetane manufactured by DAIKIN INDUSTRIES, Ltd.

-Siloxane compound-

The coating liquid for forming a protective layer preferably contains a siloxane compound. In a case where a siloxane compound is hydrolyzed to be condensed, a suitable siloxane resin can be obtained.

In particular, the siloxane compound is preferably at least one compound (hereinafter, also referred to as a specific siloxane compound) selected from the group consisting of a siloxane compound represented by Formula 1 and a hydrolysis condensate of the siloxane compound represented by Formula 1.

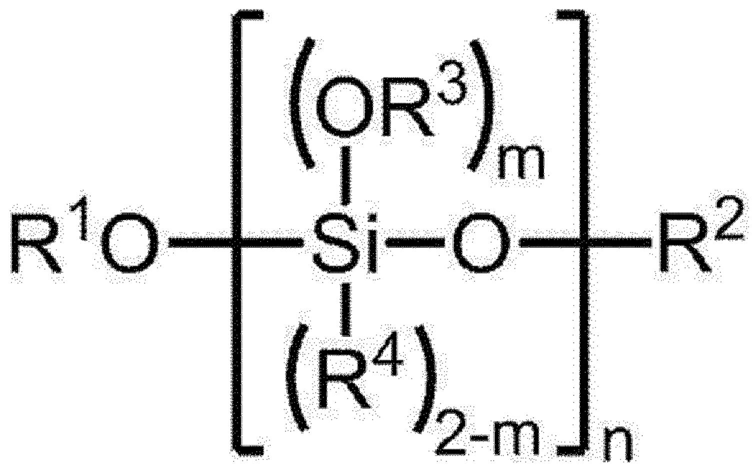

Formula 1

In Formula 1, $R^1$, $R^2$, and $R^3$ each independently represent an alkyl group or an alkenyl group, which has 1 to 6 carbon atoms, in a case of being present in plurality, $R^4$'s each independently represent an alkyl group, a vinyl group,

or an alkyl group having a group selected from the group consisting of a vinyl group, an epoxy group, a vinylphenyl group, a (meth)acryloxy group, a (meth)acrylamide group, an amino group, an isocyanurate group, a ureido group, a mercapto group, a sulfide group, a polyoxyalkyl group, a carboxy group, and a quaternary ammonium group, m represents an integer of 0 to 2, and n represents an integer of 1 to 20.

The hydrolysis condensate of the siloxane compound represented by Formula 1 refers to a compound obtained by condensing a siloxane compound represented by Formula 1 with a compound in which at least part of the substituents on the silicon atom of the siloxane compound represented by Formula 1 have been hydrolyzed to become a silanol group.

The alkyl group or alkenyl group having 1 to 6 carbon atoms in $R^1$, $R^2$, and $R^3$ in Formula 1 may be linear, may be branched, or may have a ring structure. The alkyl group or alkenyl group having 1 to 6 carbon atoms is preferably an alkyl group from the viewpoints of the strength, light transmittance, and haze of the protective layer.

Examples of the alkyl group having 1 to 6 carbon atoms include a methyl group, an ethyl group, a propyl group, an isopropyl group, an n-butyl group, a tert-butyl group, an n-pentyl group, an n-hexyl group, and a cyclohexyl group, a methyl group or an ethyl group is preferable, and a methyl group is more preferable.

In a case of being present in plurality, $R^4$'s in Formula 1 are each independently preferably an alkyl group and more preferably an alkyl group having 1 to 8 carbon atoms, from the viewpoints of the strength, light transmittance, and haze of the protective layer.

Further, the number of carbon atoms of $R^4$ in Formula 1 is preferably 1 to 40, more preferably 1 to 20, and particularly preferably 1 to 8.

From the viewpoint of the strength, light transmittance, and haze of the protective layer, m in Formula 1 is preferably 1 or 2 and more preferably 2.

n in Formula 1 is preferably an integer of 2 to 20 from the viewpoint of the strength, light transmittance, and haze of the protective layer.

Examples of the specific siloxane compound include KBE-04, KBE-13, KBE-22, KBE-1003, KBM-303, KBE-403, KBM-1403, KBE-503, KBM-5103, KBE-903, KBE-9103P, KBE-585, KBE-803, KBE-846, KR-500, KR-515, KR-516, KR-517, KR-518, X-12-1135, X-12-1126, and X-12-1131, manufactured by Shin-Etsu Chemical Co., Ltd.; Dynasylan 4150 manufactured by EVONIK JAPAN Co., Ltd.; MKC Silicate MS51, MS56, MS57, and MS56S, manufactured by Mitsubishi Chemical Corporation; and Ethyl silicate 28, N-propyl silicate, N-Butyl silicate, and SS-101, manufactured by COLCOAT Co., Ltd.

-Urethane resin-

The urethane resin that can be suitably used in the present disclosure can be obtained by a reaction of a diisocyanate compound with a polyol, a polymerization reaction of a urethane acrylate compound, or the like.

Examples of the polyol that is used for synthesizing the urethane resin include a polyester polyol, a polyether polyol, a polycarbonate polyol, and a polyacrylic polyol. Among them, a polyester polyol or a polyacrylic polyol is preferable from the viewpoint of impact resistance.

The polyester polyol can be obtained by a known method of using an esterification reaction in which a polybasic acid and a polyhydric alcohol are used.

A polycarboxylic acid is used as the polybasic acid component of the polyester polyol; however, a monobasic fatty acid or the like may also be used as necessary. Examples of the polycarboxylic acid include phthalic acid, isophthalic acid, terephthalic acid, tetrahydrophthalic acid, tetrahydroisophthalic acid, hexahydrophthalic acid, hexahydroterephthalic acid, trimellitic acid, pyromellitic acid, and other such aromatic polycarboxylic acids, adipic acid, sebacic acid, succinic acid, azelaic acid, phthalic acid, maleic acid, itaconic acid, and other such aliphatic polycarboxylic acids, and anhydrides of these compounds. These polybasic acids may be used alone or in a combination of two or more thereof.

Examples of the polyhydric alcohol component of the polyester polyol and similarly, the polyhydric alcohol that is used in the synthesis of the urethane resin include a glycol and a trihydric or higher polyhydric alcohol. Examples of the glycol include ethylene glycol, propylene glycol, diethylene glycol, triethylene glycol, tetraethylene glycol, dipropylene glycol, polyethylene glycol, polypropylene glycol, neopentyl glycol, hexylene glycol, 1,3-butanediol, 1,4-butanediol, 1,5-pentanediol, 1,6-hexanediol, 2-butyl-2-ethyl-1,3-propanediol, methylpropanediol, cyclohexanedimethanol, and 3,3-diethyl-1,5-pentanediol. Examples of the trihydric or higher polyhydric alcohol include glycerol, trimethylolethane, trimethylolpropane, pentaerythritol, and dipentaerythritol. These polyhydric alcohols can be used alone, or a combination of two or more of them can also be used.

Examples of the dimethylol alkanoate include dimethylol propionate, dimethylol butanoate, dimethylol pentanoate, dimethylol heptaonate, dimethylol octanoate, and dimethylol nonanoate. These dimethylol alkanoates can be used alone, or a combination of two or more of them can also be used.

As the polyacrylic polyol, various known polyacrylic polyols having a hydroxy group capable of reacting with an isocyanate group can be used. Examples thereof can include polyacrylic polyols having, as a monomer, at least one or more of (meth)acrylic acid, various (meth)acrylic acids to which a hydroxy group is attached, a (meth)acrylic acid alkyl

ester, (meth)acrylamide and a derivative thereof, a vinyl alcohol carboxylic acid ester, an unsaturated carboxylic acid, a hydrocarbon having a chain-like unsaturated alkyl moiety, or the like.

Examples of the polyisocyanate compound include aromatic diisocyanates such as 4,4'-diphenylmethane diisocyanate, 2,4- or 2,6-tolylene diisocyanate, 1,5-naphthalene diisocyanate, p-phenylene diisocyanate or m-phenylene diisocyanate, xylylene diisocyanate, and m-tetramethylxylene diisocyanate; alicyclic diisocyanates such as isophorone diisocyanate, 4,4'-dicyclohexylmethane diisocyanate, 1,4-cyclohexylene diisocyanate, and a hydrogenated tolylene diisocyanate; and aliphatic diisocyanates such as hexamethylene diisocyanate. Among them, an alicyclic diisocyanate is preferable in terms of resistance to discoloration and the like. These diisocyanate compounds may be used alone, or a combination of two or more thereof can be used.

The above urethane (meth)acrylate will be described. Examples of the method of producing the urethane (meth)acrylate include a method in which a compound having a hydroxy group and a (meth)acryloyl group and a polyisocyanate compound are subjected to a urethanization reaction.

Examples of the compound having a hydroxy group and a (meth)acryloyl group include monofunctional (meth)acrylates having a hydroxy group, such as 2-hydroxyethyl (meth)acrylate, 3-hydroxypropyl (meth)acrylate, 4-hydroxy-n-butyl (meth)acrylate, 2-hydroxypropyl (meth)acrylate, 2-hydroxy-n-butyl (meth)acrylate, 3-hydroxy-n-butyl (meth)acrylate, 1,4-cyclohexanedimethanol mono(meth)acrylate, N-(2-hydroxyethyl)(meth)acrylamide, glycerin mono(meth)acrylate, polyethylene glycol mono(meth)acrylate, polypropylene glycol mono(meth)acrylate, 2-hydroxy-3-phenoxypropyl (meth)acrylate, 2-(meth)acryloyloxyethyl-2-hydroxyethylphthalate, and a lactone-modified (meth)acrylate having a hydroxy group at the terminal; and polyfunctional (meth)acrylates having a hydroxy group, such as trimethylpropan di(meth)acrylate, isocyanurate ethylene oxide (EO)-modified diacrylate, pentaerythritol tri(meth)acrylate,and dipentaerythritol penta(meth)acrylate. Among these, pentaerythritol triacrylate or dipentaerythritol pentaacrylate is preferable since the scratch resistance of the protective layer is improved. The compounds having these hydroxy groups and (meth)acryloyl groups can be used alone, or two or more thereof can be used in combination.

Examples of the polyisocyanate compound include aromatic diisocyanate compounds such as tolylene diisocyanate, diphenylmethane diisocyanate, m-xylylene diisocyanate, and m-phenylenebis(dimethylmethylene) diisocyanate; and aliphatic or alicyclic diisocyanate compounds such as hexamethylene diisocyanate, lysine diisocyanate, and 1,3-bis(isocyanatomethyl)cyclohexane, 2-methyl-1,3-diisocyanatocyclohexane, 2-methyl-1,5-diisocyanatocyclohexane, 4,4'-dicyclohexylmethane diisocyanate, and isophorone diisocyanate.

The urethane (meth)acrylate can be cured by irradiation with actinic rays. These actinic rays refer to ionizing radiations such as ultraviolet rays, electron beams, $\alpha$ rays, $\beta$ rays, and $\gamma$ rays. In a case where the protective layer is cured by irradiation with ultraviolet rays as actinic rays after molding, it is preferable to add a photopolymerization initiator in the protective layer to improve the curability. Further, as necessary, a photosensitizer can be further added to improve the curability.

In the present disclosure, a layer containing an ultraviolet (UV) absorber is preferably provided on the visible side of the reflective layer from the viewpoint of protecting the reflective layer, particularly, the cholesteric liquid crystal layer. The ultraviolet absorbent may be contained in the protective layer or the base material, or a layer (an ultraviolet absorbing layer) containing the ultraviolet absorbent may be separately provided.

In the present disclosure, the ultraviolet absorbent is a compound having a molecular weight of less than 5,000 and having an ultraviolet absorbability. The molecular weight refers to a weight-average molecular weight measured by the above-described method in a case where the ultraviolet absorbent has a molecular weight distribution. In a case of the ultraviolet absorbent does not have a molecular weight distribution, the molecular weight thereof is measured, for example, using electrospray ionization mass spectrometry (ESI-MS).

The ultraviolet absorbent is preferably a compound having a maximumal absorption wavelength of 380 nm or less and more preferably a compound having a maximumal absorption wavelength of 250 nm to 380 nm (particularly preferably 270 nm to 380 nm).

Examples of the ultraviolet absorbent include a triazine compound, a benzotriazole compound, a benzophenone compound, a salicylic acid compound, and metal oxide particles.

From the viewpoint of ultraviolet absorbability, the ultraviolet absorbent preferably contains a triazine compound or a benzotriazole compound and more preferably contains a triazine compound.

The total content of the triazine compound and the benzotriazole compound in the ultraviolet absorbent is preferably 80% by mass or more with respect to the total amount of the ultraviolet absorbent.

In a case where a layer containing a UV absorber is separately provided, the UV absorber is preferably contained in the binder polymer. The binder is not particularly limited; however, it is preferably at least one selected from the group consisting of an acrylic resin, polyester, a urethane resin, polyolefin, a siloxane resin, and a fluoropolymer, more preferably at least one selected from the group consisting of an acrylic resin, polyester, a urethane resin, and polyolefin, and still more preferably an acrylic resin.

-Surfactant-

The coating liquid for forming a protective layer preferably contains a surfactant.
Examples of the surfactant include a nonionic surfactant, an anionic surfactant, a cationic surfactant, and an amphoteric surfactant, which are an ionic surfactant, and all of them can be suitably used in the present disclosure.
Among them, from the viewpoints of the efficient formation of core-shell particles by the attractive force interacting with the above-described specific siloxane compound, storage stability, and the light transmittance and the haze of the protective layer, at least one surfactant selected from the group consisting of a nonionic surfactant and a cationic surfactant is preferable, and a cationic surfactant is more preferable.

-Other components-

The coating liquid for forming a protective layer may contain other components depending on the intended purpose, in addition to the above-described components.
As the other components, known additives can be used, and examples thereof include antistatic agent, a condensation catalyst for a siloxane compound, and a preservative.

· Antistatic agent

The coating liquid for forming a protective layer may contain an antistatic agent.
The antistatic agent is used for the intended purpose of suppressing the adhesion of contaminants by imparting antistatic properties to the protective layer.
The antistatic agent for imparting antistatic properties is not particularly limited.
As the antistatic agent used in the present disclosure, at least one selected from the group consisting of a metal oxide particle, a metal nanoparticle, a conductive polymer, and an ionic liquid can be preferably used. Two or more antistatic agents may be used in combination.
The metal oxide particles need to be added in a relatively large quantity in order to impart antistatic properties; however, the antifouling property of the protective layer can be further improved by the inclusion of the metal oxide particles since the metal oxide particles are inorganic particles.
The metal oxide particles are not particularly limited; however, examples thereof include tin oxide particles, antimony-doped tin oxide particles, tin-doped indium oxide particles, zinc oxide particles, and silica particles.
The metal oxide particles have a large refractive index, and in a case where the particle diameter is large, there is a concern that the light transmittance may decrease due to scattering of transmitted light. For this reason, the average primary particle diameter of the metal oxide particles is preferably 100 nm or less, preferably 50 nm or less, and particularly preferably 30 nm or less. The lower limit value thereof is preferably 2 nm or more.
The shape of the particles is not particularly limited and may be spherical, plate-shaped, or needle-shaped.
The average primary particle diameter of the metal oxide particles can be determined from the photomicrograph obtained by observing the dispersed particles with a transmission electron microscope. A projected area of the particles is obtained from the image of the photomicrograph, and an equivalent circle diameter is obtained from the projected area, which is used as the average particle diameter (the average primary particle diameter). As the average primary particle diameter in the present specification, a value calculated by measuring the projected areas of 300 or more particles and obtaining the equivalent circle diameter is used.
In a case where the shape of the metal oxide particles is not spherical, the particle diameter may be obtained by another method, for example, a dynamic light scattering method.
Only one kind of antistatic agent may be contained in the coating liquid for forming a protective layer, or two or more kinds thereof may be contained. In a case where two or more kinds of metal oxide particles are contained, two or more kinds thereof having average primary particle diameters, shapes, and materials, which are different from each other, may be used.
In the coating liquid for forming a protective layer, the content of the antistatic agent is preferably 40% by mass or less, more preferably 30% by mass or less, and particularly preferably 20% by mass or less, with respect to the total solid content of the coating liquid for forming a protective layer.
In a case where the content of the antistatic agent is set in the above range, the antistatic property can be effectively imparted to the protective layer without deteriorating the film forming property of the coating liquid for forming a protective layer.
In a case where the metal oxide particles are used as the antistatic agent, the content thereof is preferably 30% by mass or less, more preferably 20% by mass or less, and particularly preferably 10% by mass or less, with respect to the total mass of the coating liquid for forming a protective layer.
In a case where the content of the metal oxide particles is set in the above range, the dispersibility of the metal

oxide particles in the coating liquid for forming a protective layer is improved, the occurrence of aggregation is suppressed, and the required antistatic property is imparted to the protective layer.

· Condensation catalyst-

The coating liquid for forming a protective layer preferably contains a condensation catalyst that promotes the condensation of the siloxane compound.

In a case where the coating liquid for forming a protective layer contains a condensation catalyst, a protective layer having more excellent durability can be formed.

The method of forming a protective layer is not particularly limited; however, examples thereof include a method in which a coating liquid for forming a protective layer is applied onto the underlayer of the protective layer, dried to form a layer, and then three-dimensional molding and curing are carried out, and a method in which films are formed in advance, bonded to each other through a laminate or a pressure sensitive adhesive, and then three-dimensional molding and curing are carried out.

Alternatively, a protective layer may be formed after three-dimensional molding.

-Preparation of coating liquid forming protective layer-

The method of preparing a coating liquid for forming a protective layer is not particularly limited, and a known method can be used. Examples thereof include a method in which a siloxane compound, a surfactant, and water are mixed and a coating liquid is manufactured.

-Formation of protective layer-

The protective layer is formed by applying the above-described coating liquid for forming a protective layer onto the underlayer of the protective layer and drying the applied coating liquid.

The method of carrying out coating with the coating liquid for forming a protective layer is not particularly limited, and for example, any known coating method such as spray coating, brush coating, roller coating, bar coating, or dip coating can be applied.

Further, before carrying out coating with the coating liquid for forming a protective layer, the underlayer to which the coating liquid for forming a protective layer is applied may be subjected to a surface treatment such as a corona discharge treatment, a glow treatment, an atmospheric pressure plasma treatment, a flame treatment, or an ultraviolet irradiation treatment.

The coating liquid for forming a protective layer may be dried at room temperature (25°C) or dried by heating. It is preferable to carry out drying by heating to 40°C to 200°C from the viewpoints that the organic solvent contained in the coating liquid for forming a protective layer is sufficiently volatilized to form voids and from the viewpoints of the light transmittance and the coloration suppression of the protective layer, and further, from the viewpoint of heating at a temperature equal to or lower than the decomposition temperature of a resin base material in a case where the resin base material is used as a base material. Further, from the viewpoint of suppressing thermal deformation of the resin base material, it is more preferable to carry out drying by heating to 40°C to 120°C.

The heating time in a case of heating is not particularly limited; however, is preferably 1 to 30 minutes.

In addition, suitable examples of the coating liquid for forming a protective layer include a coating liquid for forming a protective layer, containing hollow particles.

Here, as the hollow particles, it is preferable to use hollow silica particles containing silica as a main component from the viewpoint of the affinity with the siloxane resin constituting the matrix.

Examples of hollow silica particles include the hollow particles described in JP2013-237593A and WO2007/060884.

In addition, the hollow silica particles may be hollow silica particles having an unmodified surface or hollow silica particles having a modified surface.

Further, for the intended purpose of achieving dispersion stabilization in the coating liquid for forming a protective layer or enhancing the affinity and bondability with the siloxane resin, the hollow particles may be subjected to a physical surface treatment such as a plasma discharge treatment or a corona discharge treatment, or a chemical surface treatment with a surfactant, a coupling agent, or the like.

The void volume in the protective layer is preferably 10% to 80%, more preferably 15% to 75%, and particularly preferably 20% to 55%, from the viewpoints of light transmittance and scratch resistance.

The diameter of the void in the protective layer (hereinafter, also referred to as the "void diameter") is preferably 25 nm or more and more preferably 30 nm or more from the viewpoint of strength, light transmittance, and haze. From the viewpoint of scratch resistance, the upper limit of the void diameter is preferably 80 nm or less and more preferably

70 nm or less.

The methods of measuring the void diameter, void volume, and coefficient of variation of the void diameter of the protective layer are as follows.

A decorative film having the protective layer is cut in a direction orthogonal to the film surface, and the cut surface is observed under a scanning electron microscope (SEM) to measure the void diameter and the void volume.

In an SEM image of the cut surface (magnification: 50,000 times), the respective equivalent circle diameters are calculated for 200 voids that are randomly selected, and the average value thereof is defined as the void diameter.

Regarding the void volume, the void portion and the matrix portion (that is, the portion excluding the voids containing the resin) in an SEM image of the cut surface (magnification: 50,000 times) is image-processed (binarized) by using an image processing software (ImageJ) and separated, and then, the proportion of the void portion is calculated and defined as the void volume.

In a case where there is no anisotropy in the diameter of the void, the void volume is obtained as the volume fraction of the voids in the resin.

The refractive index of the protective layer in the present disclosure is preferably 1.05 to 1.6, more preferably 1.2 to 1.5, and still more preferably 1.2 to 1.4, from the viewpoints of visibility and antireflection property.

In the present disclosure, the refractive index is a refractive index for light having a wavelength of 550 nm at 25°C.

In addition, in a case of being used for the exterior of an automobile or the like, in a case where the refractive index is set in a range close to refractive indexes of wax, gasoline, and the like, so that the contamination due to these materials is less noticeable, that is, in a range of 1.4 to 1.5, dirty marks are less noticeable, which is preferable.

Regarding the refractive index of each of the layers in the present disclosure, a transmittance obtained by measuring a transmittance spectrum for a single protective layer formed on the non-alkali glass OA-10G using a spectrophotometer and a transmittance calculated by the optical interferometry are used to carry out a fitting analysis from which the thickness and the refractive index of each layer are obtained. The measurement can also be carried out using a Kalnew Precision Refractometer (KPR-3000, manufactured by Shimadzu Corporation).

-Thickness of protective layer-

According to the invention, the thickness of the protective layer is 1 μm to 25 μm, preferably 2 μm to 20 μm, and particularly preferably 3 μm to 15 μm. In a case where the thickness of the protective layer is 1 μm or more, sufficient hardness is obtained, and the effect of dispersing the impact in the in-plane direction is obtained. In a case where the thickness thereof is 25 μm or less, the cracking occurrence and the breakage in the protective layer itself are suppressed, and thus chipping resistance is more excellent.

<Base material>

The laminate according to the present disclosure has the base material.

Conventionally known base materials can be used without particular limitation as the base material that is used for molding such as three-dimensional molding and insert molding, and the base material may be appropriately selected depending on the suitability for insert molding and the like.

Further, the shape and the material of the base material are not particularly limited and may be appropriately selected as desired. However, from the viewpoints of ease of insert molding and chipping resistance, the base material is preferably a resin base material and more preferably a resin film base material.

Further, the base material may have an uneven structure. For example, an uneven structure may be formed together with the reflective layer, or a base material having an uneven structure may be used as a mold forming the uneven structure on the reflective layer.

Specific examples of the base material include a resin film containing a resin such as a polyethylene terephthalate (PET) resin, a polyethylene naphthalate (PEN) resin, an acrylic resin, a urethane resin, a urethane-acrylic resin, a polycarbonate (PC) resin, an acrylic-polycarbonate resin, triacetyl cellulose (TAC), a cycloolefin polymer (COP), and an acrylonitrile/butadiene/styrene copolymer resin (an ABS resin).

According to the invention, the base material is an acrylic resin base material, a polycarbonate base material, or a polypropylene base material, and preferably an acrylic resin base material or a polycarbonate base material, from the viewpoints of moldability and strength.

Further, the base material may be a laminated resin base material having two or more layers. For example, an acrylic resin/polycarbonate resin laminated film is preferable.

The base material may contain additives, as necessary.

Examples of such additives include mineral oils, hydrocarbons, fatty acids, alcohols, fatty acid esters, fatty acid amides, metal soap, natural wax, lubricants such as silicone, inorganic flame retardants such as magnesium hydroxide and aluminum hydroxide, organic flame retardants such as a halogen-based flame retardant and a phosphorus-based

flame retardant, organic or inorganic fillers such as metal powder, talc, calcium carbonate, potassium titanate, glass fiber, carbon fiber, and wood powder, additives such as antioxidant, an ultraviolet inhibitor, a lubricating agent, a dispersing agent, a coupling agent, a foaming agent, and a coloring agent, and engineering plastics other than the above-described resins, such as a polyolefin resin, a polyester resin, a polyacetal resin, a polyamide resin, and polyphenylene ether resin.

As the base material, a commercially avaiable product may be used.

Examples of the commercially available product include Technolloy (registered trade mark) series (an acrylic resin film or an acrylic resin/polycarbonate resin laminated film, manufactured by Sumitomo Chemical Co., Ltd.), an ABS film (manufactured by Okamoto Industries, Inc.), an ABS sheet (manufactured by SEKISUI SEIKEI Co., Ltd.), Teflex (registered trade mark) series (a PET film, manufactured by TOYOBO FILM SOLUTIONS Ltd.), Lumirror (registered trade mark) easy-to-mold kind (a PET film, manufactured by TORAY INDUSTRIES, Inc.), and PURETHERMO (a polypropylene film, manufactured by Idemitus Unitech Co., Ltd.).

The thickness of the base material is determined depending on the intended use of the molded product to be produced, the handleability of the sheet, and the like, and is according to the invention 1 μm or more, preferably 10 μm or more, still more preferably 20 μm or more, and particularly preferably 50 μm or more. The upper limit thereof according to the invention is 500 μm or less, preferably 450 μm or less, and particularly preferably 200 μm or less.

<Reflective layer>

The laminate according to the present disclosure has a reflective layer having a maximum reflection wavelength in a wavelength range of 380 nm to 2,000 nm.

Regarding the maximumal absorption wavelength, the reflective layer preferably has a maximum reflection wavelength in a wavelength range of 780 nm to 1800 nm, more preferably has a maximum reflection wavelength in a wavelength range 820 nm to 1,500 nm, and particularly preferably has a maximum reflection wavelength in a wavelength range 850 nm to 1,000 nm, from the viewpoints of the retroreflectivity and the use in the automobile exterior member.

According to the invention, the reflective layer comprises a cholesteric liquid crystal compound or flat silver particles. Examples of the reflective layer include a cholesteric liquid crystal layer, a layer containing flat metal particles, an optical multilayer film, and a layer containing a chromic material.

Among them, from the viewpoints of molding processing suitability and impact resistance, a cholesteric liquid crystal layer or a layer containing flat metal particles is preferable, and a cholesteric liquid crystal layer is more preferable.

<<Cholesteric liquid crystal layer>>

The reflective layer is preferably a cholesteric liquid crystal layer from the viewpoints of retroreflectivity and designability.

Further, the reflective layer is preferably a layer containing a cholesteric liquid crystal compound from the viewpoints of retroreflectivity and designability.

From the viewpoint of further exhibiting the effects of the present disclosure, the laminate according to the present disclosure is preferably a laminate for being visible through the cholesteric liquid crystal layer and more preferably a laminate for being visible at least one of the resin layers described later through the cholesteric liquid crystal layer.

In the laminate according to the present disclosure, in a case of changing at least one selected from the group consisting of the pitch, the refractive index, and the thickness of the spiral structure in the cholesteric liquid crystal layer, it is possible to adjust the color change depending on the viewing angle and the visible color itself. The pitch of the spiral structure can be easily adjusted by changing the amount of the chiral agent added. Specifically, FUJIFII,M Research Report No. 50 (2005) p. 60 to 63 is referenced for a detailed description. Further, the pitch of the spiral structure can be adjusted by conditions such as temperature, illuminance, and irradiation time at the time of fixing the cholesteric alignment state.

The cholesteric liquid crystal layer is preferably a layer in which a liquid crystal compound is fixed in a cholesteric alignment state. The cholesteric alignment state may be an alignment state where dextrorotatory circularly polarized light is reflected, an alignment state where levorotatory circularly polarized light is reflected, or a state including both alignment states. The liquid crystal compound is not particularly limited, and various known liquid crystal compounds can be used.

<<<Liquid crystal composition>>>

The cholesteric liquid crystal layer is a layer obtained by curing a liquid crystal composition.

The liquid crystal compound that is used in the present disclosure is not particularly limited, and a known liquid crystal compound can be used.

The liquid crystal composition forming the cholesteric liquid crystal layer may contain, for example, a cholesteric

liquid crystal compound, a chiral agent, an alignment control agent, a polymerization initiator, an alignment assistant, and the like.

-Cholesteric liquid crystal compound-

The liquid crystal layer in the liquid crystal layer forming step contains a cholesteric liquid crystal compound.
Examples of the shape of the cholesteric liquid crystal compound include a rod shape kind and a disk shape kind. Further, each of these kinds includes a low molecular weight kind and a polymer kind. In the present disclosure, the "polymer" in the above cholesteric liquid crystal compound means a compound having a degree of polymerization of 100 or more (Polymer physics: Phase transition dynamics, by Masao Doi, p. 2, Iwanami Shoten, Publishers, 1992).
In the present disclosure, any cholesteric liquid crystal compound can be used; however, it is preferable to use a rod-like cholesteric liquid crystal compound.
In the present specification, in a case where a layer formed from a composition containing a cholesteric liquid crystal compound is described, the formed layer may not contain a compound having liquid crystallinity. For example, the layer may be a layer containing a compound that is polymerized and crosslinked, thereby becoming a high molecular weight compound and losing liquid crystallinity, by a reaction due to heat, light, or the like, where the reaction occurs due to a group that is contained in a low molecular weight cholesteric liquid crystal compound and reacts to heat, light, or the like.
Further, as the cholesteric liquid crystal compound, two or more kinds of rod-like cholesteric liquid crystal compounds, two or more kinds of disk-like liquid crystal compounds, or a mixture of a rod-like cholesteric liquid crystal compound and a disk-like cholesteric liquid crystal compound may be used. Since changes in temperature and humidity can be reduced, it is more preferable to use a rod-like cholesteric liquid crystal compound or a disk-like cholesteric liquid crystal compound, which has a reactive group, and it is still more preferable that at least one of the compounds has two or more reactive groups in one liquid crystal molecule. In a case of a mixture of two or more cholesteric liquid crystal compounds, it is preferable that at least one compound has two or more reactive groups.
Further, it is preferable to use a cholesteric liquid crystal compound having two or more kinds of reactive groups which differ in the crosslinking mechanism. In a case where the above compound is used, it is preferable to produce an optically anisotropic layer containing a polymer having an unreacted reactive group by selecting conditions and polymerizing only a part of two or more kinds of reactive groups.
The crosslinking mechanism is not particularly limited and includes, for example, condensation reaction, hydrogen bonding, and polymerization. However, at least one of two or more crosslinking mechanisms is preferably polymerization, and more preferably two or more different kinds of polymerizations are used. The crosslinking reaction in the above-described crosslinking can be used for not only a vinyl group, a (meth)acrylic group, an epoxy group, an oxetanyl group, and a vinyl ether group, which are used in polymerization, but also can be used for a hydroxy group, a carboxy group, an amino group, and the like.
The "compound having two or more kinds of reactive groups which differ in crosslinking mechanism" in the present disclosure are a compound that can be crosslinked using crosslinking reaction steps which are stepwise different from each other, and in each of the stepwise crosslinking reaction steps, a corresponding reactive group matching with each of the crosslinking mechanisms reacts as a functional group. Further, for example, in a case of a polymer having a hydroxy group in the side chain such as polyvinyl alcohol and in a case where the hydroxy group in the side chain is crosslinked with an aldehyde or the like after carrying out a polymerization reaction for polymerizing a polymer, two or more kinds of crosslinking mechanisms different from each other are used. In the present disclosure, in a case where a compound having two or more reactive groups different from each other is used, the compound is preferably a compound which has two or more reactive groups different from each other in a layer on a support or the like at the time when the layer has been formed, where the reactive groups of the compound can be crosslinked stepwise thereafter.
Further, the reactive group is preferably a polymerizable group. Examples of the polymerizable group include a radically polymerizable group and a cationically polymerizable group.
Among them, it is particularly preferable to use a cholesteric liquid crystal compound having two or more kinds of polymerizable groups.
For the reaction conditions for stepwise crosslinking, the temperature difference, the difference in the wavelength of light (irradiation rays), or the difference in polymerization mechanism can be used. However, it is preferable to use the difference in polymerization mechanisms, and it is more preferable to carry out control depending on the kind of polymerization initiator used, from the viewpoints of easy separation of the reactions.
The combination of the polymerizable groups is preferably a combination of a radically polymerizable group and a cationically polymerizable group. Among them, a combination in which the radically polymerizable group is a vinyl group or a (meth)acrylic group and the cationically polymerizable group is an epoxy group, an oxetanyl group or a vinyl ether group is particularly preferable since reactivity can be easily controlled.
Among them, the cholesteric liquid crystal compound preferably has a radically polymerizable group from the

viewpoints of the reactivity and the ease of fixing the pitch of the spiral structure.

Examples of reactive groups are shown below. It is noted that Et represents an ethyl group and n-Pr represents an n-propyl group.

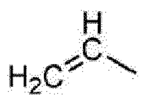
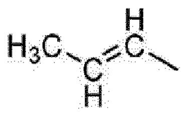
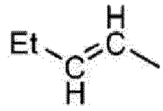
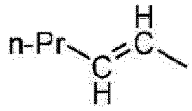
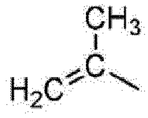
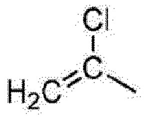
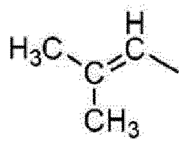
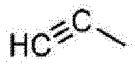
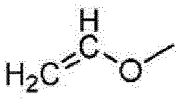
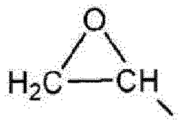
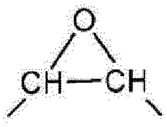
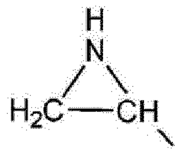
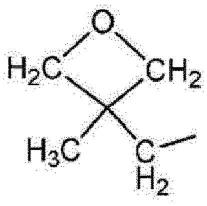
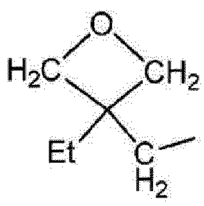
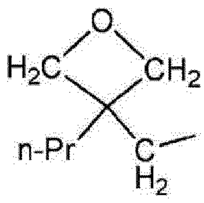

-SH -OH $-NH_2$

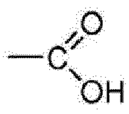
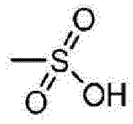
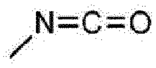
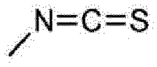

Preferred examples of the rod-like cholesteric liquid crystal compound include azomethines, azoxys, cyanobiphenyls, cyanophenyl esters, benzoic acid esters, cyclohexanecarboxylic acid phenyl esters, cyanophenylcyclohexanes, cyano-substituted phenylpyrimidines, and alkoxy-substituted phenylpyrimidines, phenyldioxanes, tolanes, and alkenylcyclohexylbenzonitriles. Not only the low molecular weight cholesteric liquid crystal compounds as described above but also a polymer cholesteric liquid crystal compound can be used. The polymer cholesteric liquid crystal compound is a polymer compound obtained by polymerizing a rod-like cholesteric liquid crystal compound having a low molecular weight reactive group. Examples of the rod-like cholesteric liquid crystal compound include those described in JP2008-281989A, JP1999-513019A (JP-H11-513019A) (WO1997/00600) or JP2006-526165A.

Specific examples of the rod-like cholesteric liquid crystal compound are shown below: however, the present invention is not limited thereto. The compounds shown below can be synthesized by the method disclosed in JP1999-513019A(JP-H11-513019A) (WO1997/00600).

I－1

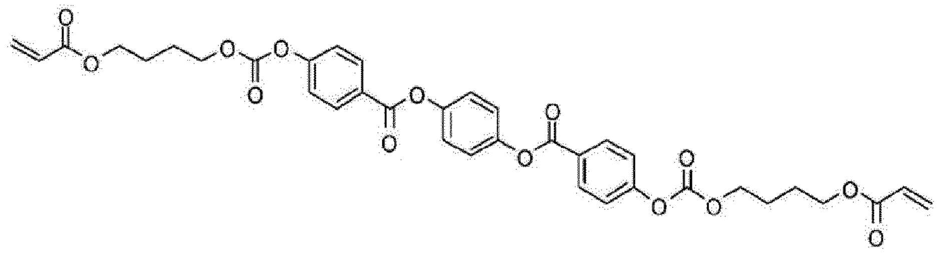

I－2

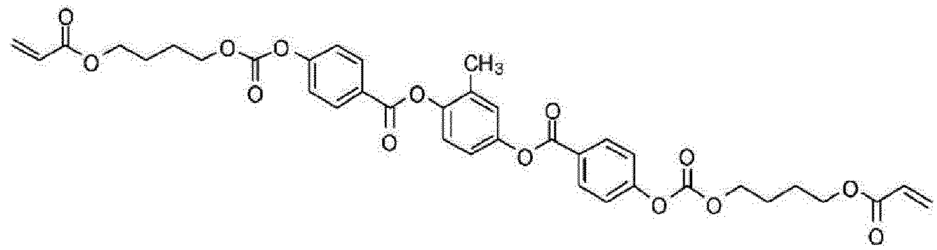

I－3

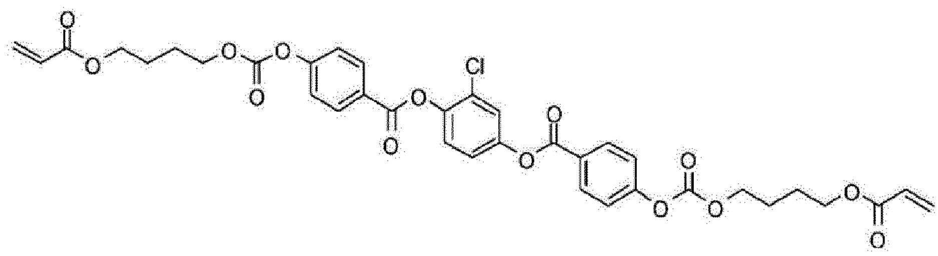

I－4

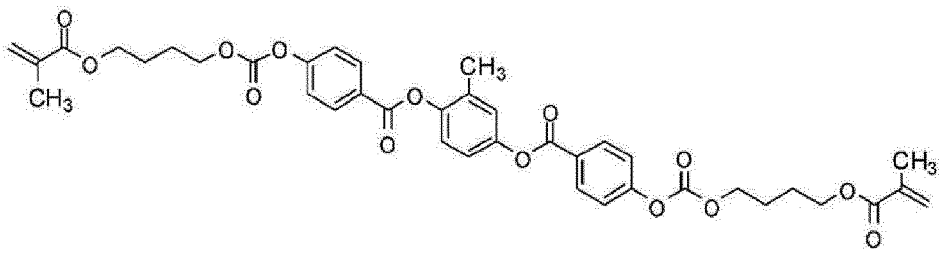

I－5

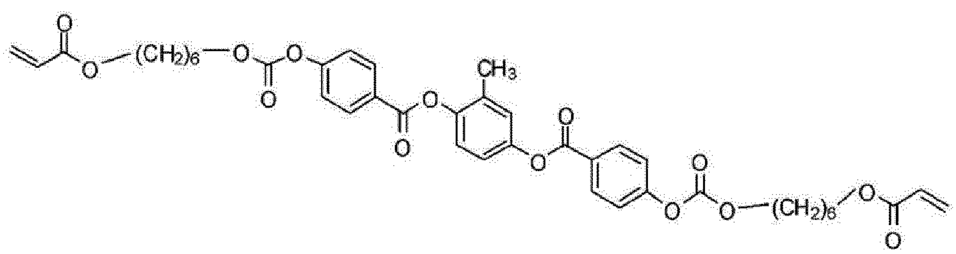

I－6

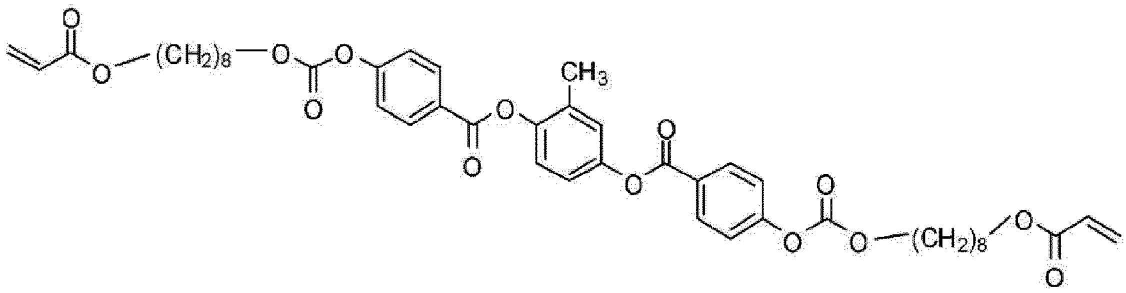

I－7

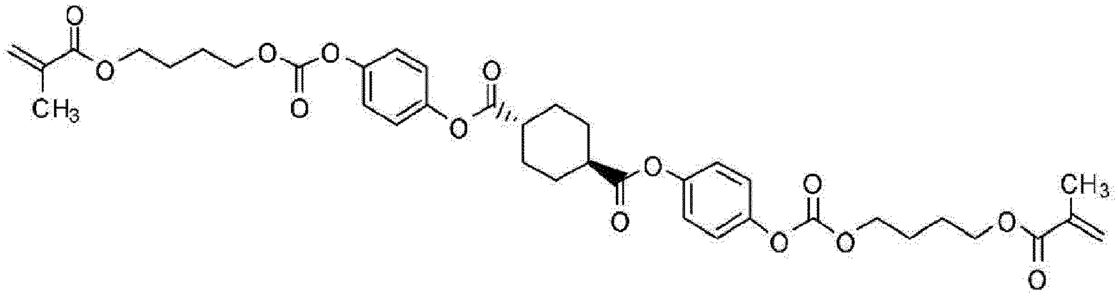

I－8

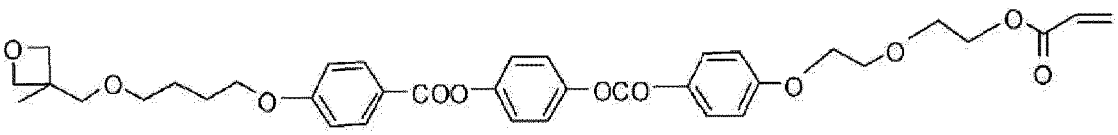

I－9

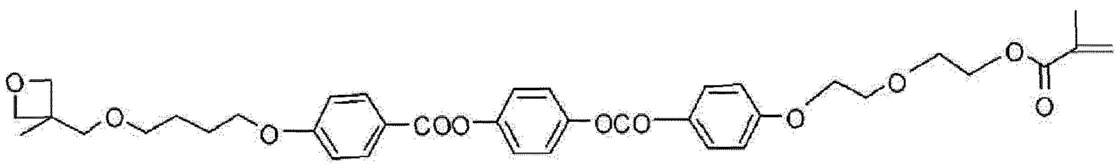

I－１０

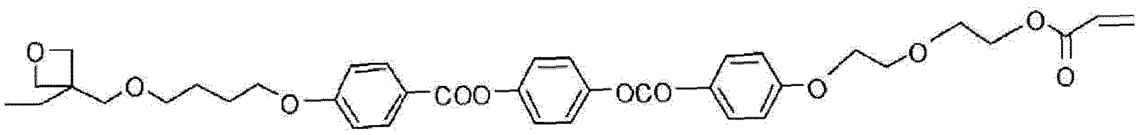

I－１１

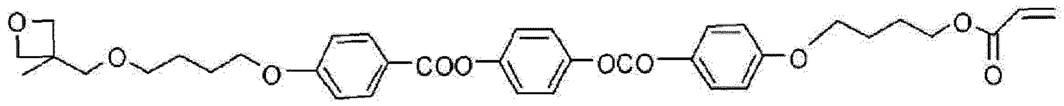

I－１２

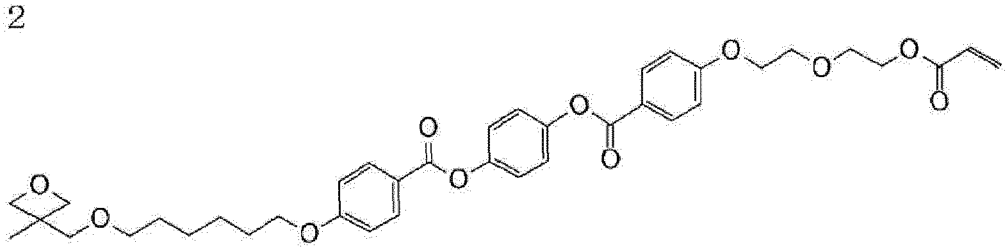

I - 13

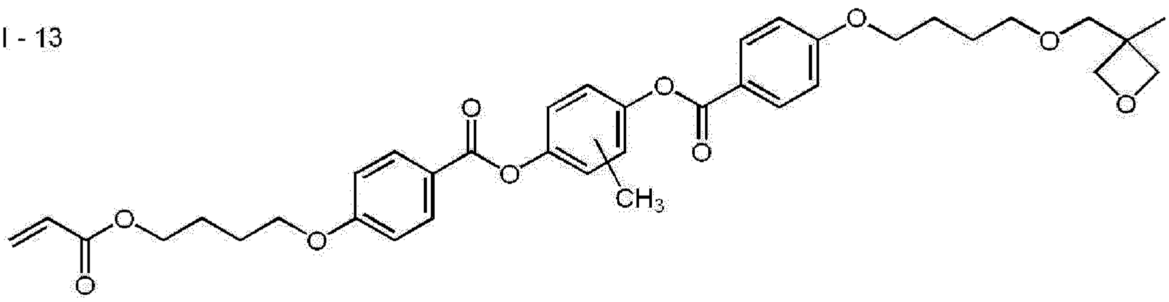

I - 14

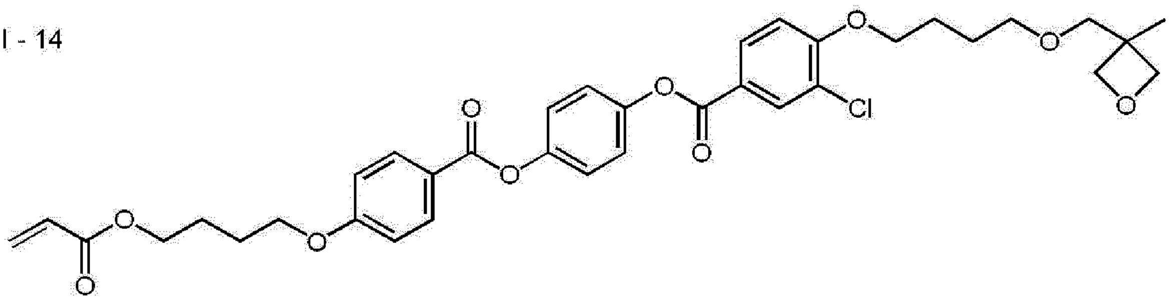

I - 15

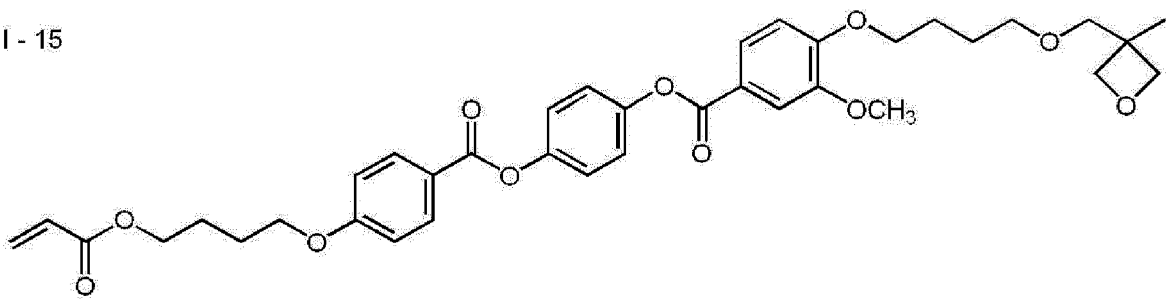

I - 16

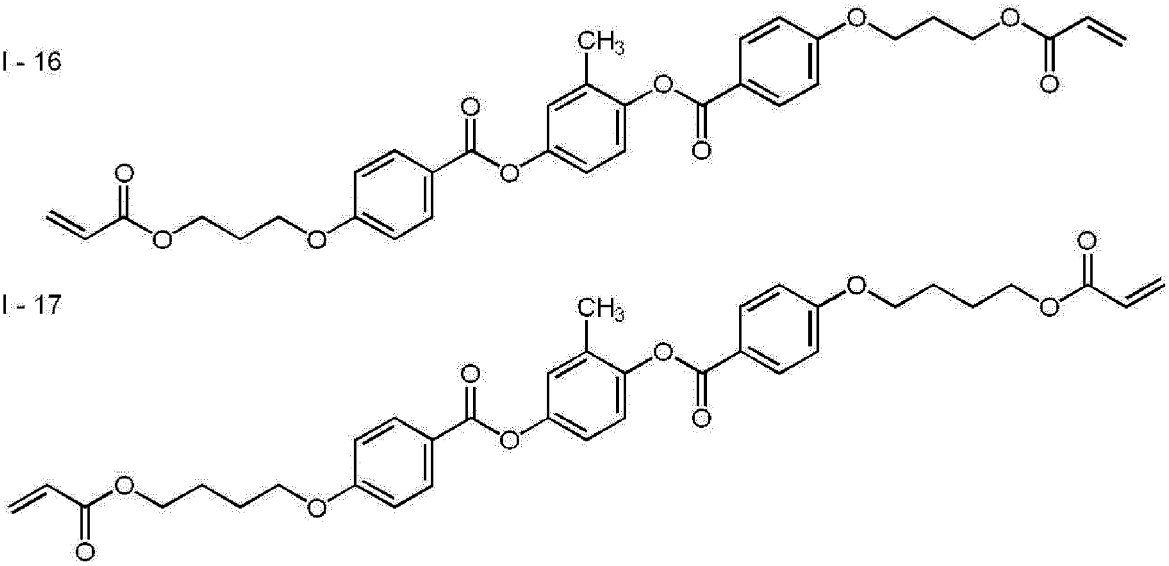

I - 17

I − 1 8

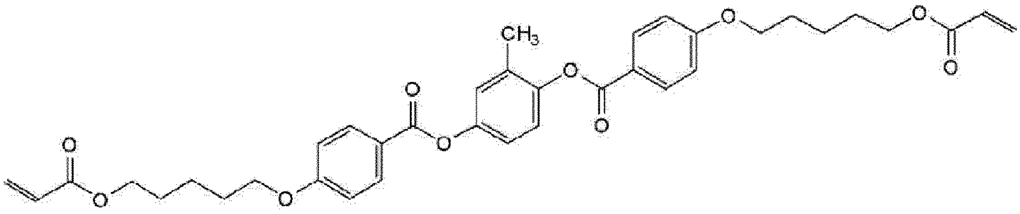

I − 1 9

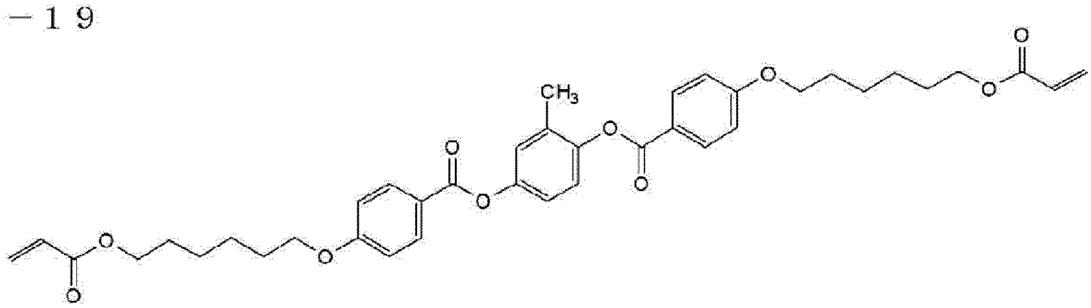

Examples of the disk-like cholesteric liquid crystal compound include a low molecular weight disk-like cholesteric liquid crystal compound such as a monomer, and a polymerizable disk-like cholesteric liquid crystal compound.

Examples of the disk-like cholesteric liquid crystal compound include benzene derivatives described in the research report by C. Destrade et al., Mol. Cryst., volume. 71, page 111 (1981), turxene derivatives described in the research report by C. Destrade et al., Mol. Cryst., volume 122, page 141 (1985), and Physics lett., A, volume 78, page 82 (1990), cyclohexane derivatives described in the research report by B. Kohne et al., Angew. Chem. volume 96, page 70 (1984) and azacrown-based or phenylacetylene-based macrocycles described in the research report by J. M. Lehn et al., J. Chem. Commun., page 1794 (1985), and the research report by J. Zhang et al., J. Am. Chem. Soc., volume 116, page 2655 (1994).

The above disk-like cholesteric liquid crystal compound has a structure, in which the above various structures are used as a disk-like mother nucleus at the center of the molecule, and groups (L) such as a linear alkyl group, an alkoxy group, and a substituted benzoyloxy group are radially substituted, exhibits liquid crystallinity, and includes a compound that is generally called a disk-like liquid crystal. In a case where aggregates of such a molecule are uniformly aligned, negative uniaxiality is exhibited; however, it is not limited to this description. Examples of the disk-like cholesteric liquid crystal compound include those described in paragraphs 0061 to 0075 of JP2008-281989A.

In a case where a disk-like cholesteric liquid crystal compound having a reactive group is used as the cholesteric liquid crystal compound, it may be fixed in any alignment state of horizontal alignment, vertical alignment, inclined

alignment, and twisted alignment in the cured liquid crystal layer described later.

The cholesteric liquid crystal layer may contain one kind of cholesteric liquid crystal compound alone or may contain two or more kinds thereof.

From the viewpoint of designability, the content of the cholesteric liquid crystal compound is preferably 30% by mass or more and 99% by mass or less, more preferably 40% by mass or more and 99% by mass or less, still more preferably 60% by mass or more and 99% by mass or less, and particularly preferably 70% by mass or more and 98% by mass or less, with respect to the total mass of the cholesteric liquid crystal layer.

-Chiral agent (optically active compound)-

The liquid crystal composition preferably contains a chiral agent (an optically active compound) from the viewpoints of the easy formation of the cholesteric liquid crystal layer and the easy adjustment of the pitch of the spiral structure.

The chiral agent has the function of inducing a spiral structure in the cholesteric liquid crystal layer.

The chiral agent provides a spiral twisting direction or spiral pitch, which is different depending on the spiral structure induced from the liquid crystal compound, and thus it may be selected according to the intended purpose.

The chiral agent is not particularly limited, and known compounds (for example, those described in Handbook of Liquid Crystal Device, Chapter 3, Section 4-3, page 199, Chiral Agent for Twisted Nematic (TN) and Super-Twisted Nematic (STN), edited by the 142th Committee of the Society, Japan Society for the Promotion of Science, 1989), isosorbide, isomannide derivatives, and the like can be used.

The chiral agent generally contains an asymmetric carbon atom; however, an axially asymmetric compound or a planarly asymmetric compound, which does not contain an asymmetric carbon atom, can also be used as the chiral agent.

Preferred examples of the axially asymmetric compound or the planarly asymmetric compound include a binaphthyl compound, a helicene compound, and a paracyclophane compound.

From the viewpoint of the suppression of the change in reflectance after molding, the liquid crystal composition preferably contains, as the chiral agent, a chiral agent having a polymerizable group, and more preferably contains a chiral agent containing a polymerizable group and a chiral agent containing no polymerizable group.

The polymerizable group is not particularly limited as long as it is a polymerizable group; however, the polymerizable group is preferably an ethylenic unsaturated group or a cyclic ether group, and more preferably an ethylenic unsaturated group, from the viewpoints of the reactivity and the suppression of the change in reflectance after molding.

Examples of the preferred aspects of the ethylenic unsaturated group and the cyclic ether group in the chiral agent include a vinyl group, a (meth)acrylic group, an epoxy group, an oxetanyl group, and a vinyl ether group.

Further, the chiral agent having a polymerizable group is preferably a chiral agent having two or more polymerizable groups, more preferably a chiral agent having two or more ethylenic unsaturated groups or a chiral agent having two or more cyclic ether groups, and particularly preferably a chiral agent having two or more ethylenic unsaturated groups, from the viewpoints of the reactivity and the suppression of the change in reflectance after molding.

In addition, the chiral agent may be a cholesteric liquid crystal compound.

As will be described later, in a case where the size of the spiral pitch of the cholesteric liquid crystal layer is controlled by light irradiation at the time of manufacturing the cholesteric liquid crystal layer, a chiral agent (hereinafter, also referred to as a "photosensitive chiral agent") capable of changing the spiral pitch of the cholesteric liquid crystal layer in response to light is preferably contained.

The photosensitive chiral agent is a compound of which the structure is changed by absorbing light and is capable of changing the spiral pitch of the cholesteric liquid crystal layer. Such a compound is preferably a compound that causes at least one of a photoisomerization reaction, a photodimerization reaction, or a photodegradation reaction.

The compound that causes a photoisomerization reaction is a compound that causes stereoisomerization or structural isomerization by the action of light. Examples of the photoisomerizable compound include an azobenzene compound and a spiropyran compound.

In addition, the compound that causes a photodimerization reaction means a compound that causes an addition reaction between two groups by irradiation with light so that the two groups are cyclized. Examples of the photodimerizable compound include a cinnamic acid derivative, a coumarin derivative, a chalcone derivative, and a benzophenone derivative.

The light is not particularly limited; however, examples thereof include ultraviolet light, visible light, and infrared light.

Preferred examples of the photosensitive chiral agent include a chiral agent represented by Formula (CH1). The chiral agent represented by Formula (CH1) is capable of changing the alignment structure such as the spiral pitch (the spiral period, the twist period) of the cholesteric liquid crystalline phase depending on the amount of light at the time of light irradiation.

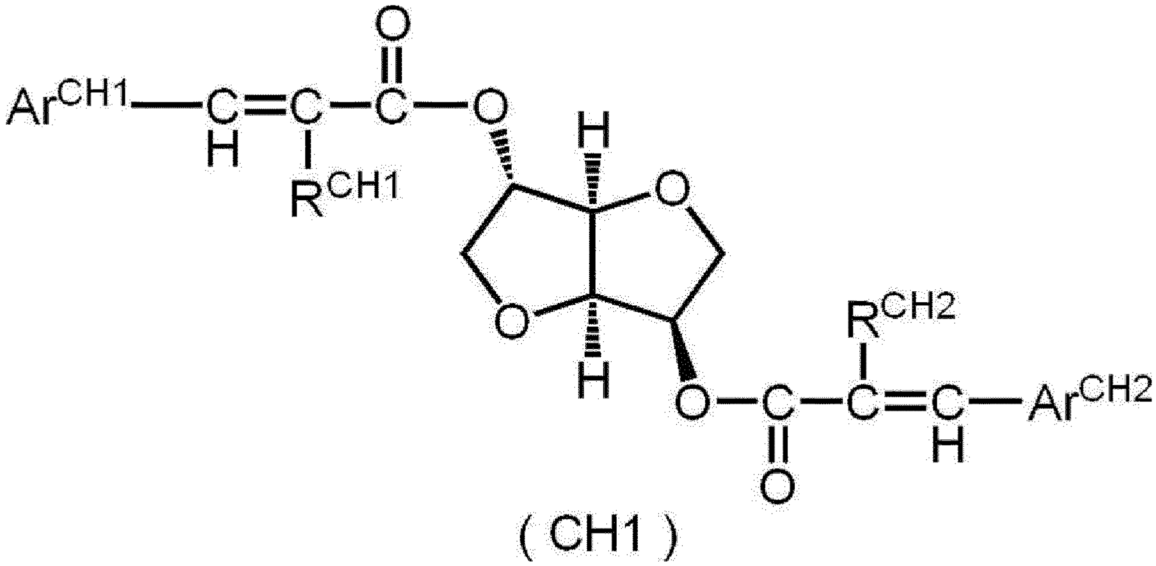

( CH1 )

In Formula (CH1), $Ar^{CH1}$ and $Ar^{CH2}$ each independently represent an aryl group or a heteroaromatic ring group, and $R^{CH1}$ and $R^{CH2}$ each independently represent a hydrogen atom or a cyano group.

It is preferable that $Ar^{CH1}$ and $Ar^{CH2}$ in Formula (CH1) are each independently an aryl group.

The aryl group as $Ar^{CH1}$ and $Ar^{CH2}$ in Formula (CH1) may have a substituent, preferably has a total number of carbon atoms of 6 to 40, and more preferably has a total number of carbon atoms of 6 to 30. The substituent is, for example, preferably a halogen atom, an alkyl group, an alkenyl group, an alkynyl group, an alkoxy group, a hydroxy group, an acyl group, an alkoxycarbonyl group, an aryloxycarbonyl group, an acyloxy group, a carboxy group, a cyano group, or a heterocyclic group, and more preferably a halogen atom, an alkyl group, an alkenyl group, an alkoxy group, a hydroxy group, an acyloxy group, an alkoxycarbonyl group, or an aryloxycarbonyl group.

It is preferable that $R^{CH1}$ and $R^{CH2}$ in Formula (CH1) are each independently a hydrogen atom.

Among them, $Ar^{CH1}$ and $Ar^{CH2}$ is preferably an aryl group represented by Formula (CH2) or Formula (CH3).

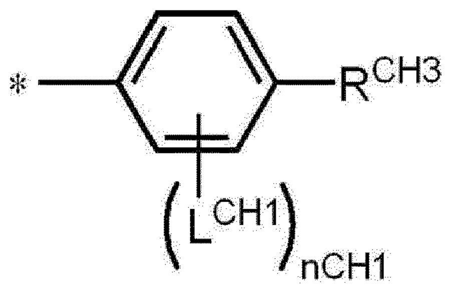

( CH2 )

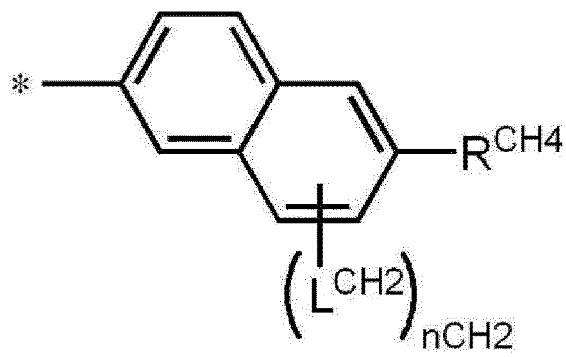

( CH3 )

In Formula (CH2) and Formula (CH3), $R^{CH3}$ and $R^{CH4}$ each independently represent a hydrogen atom, a halogen atom, an alkyl group, an alkenyl group, an alkynyl group, an aryl group, a heterocyclic group, an alkoxy group, a hydroxy group, an acyl group, an alkoxycarbonyl group, an aryloxycarbonyl group, an acyloxy group, a carboxy group, or a cyano group, $L^{CH1}$ and $L^{CH2}$ each independently represent a halogen atom, an alkyl group, an alkoxy group, or a hydroxy group, nCH1 represents an integer of 0 to 4, nCH2 represents an integer of 0 to 6, and * represents a bond position to an ethylene unsaturated bond in Formula (CH1).

$R^{CH3}$ and $R^{CH4}$ in Formula (CH2) and Formula (CH3) are each independently preferably a hydrogen atom, a halogen atom, an alkyl group, an alkenyl group, an aryl group, an alkoxy group, a hydroxy group, an alkoxycarbonyl group, an aryloxycarbonyl group, or an acyloxy group, more preferably an alkoxy group, a hydroxy group, or an acyloxy group, and particularly preferably an alkoxy group.

$L^{CH1}$ and $L^{CH2}$ in Formula (CH2) and Formula (CH3) are each independently preferably an alkoxy group having

1 to 10 carbon atoms or a hydroxy group.

The nCH1 in Formula (CH2) is preferably 0 or 1.

The nCH2 in Formula (CH3) is preferably 0 or 1.

The heteroaromatic ring group as $Ar^{CH1}$ and $Ar^{CH2}$ in Formula (CH1) may have a substituent, preferably has a total number of carbon atoms of 4 to 40, and more preferably has a total number of carbon atoms of 4 to 30. The substituent is, for example, preferably a halogen atom, an alkyl group, an alkenyl group, an alkynyl group, an aryl group, an alkoxy group, a hydroxy group, an acyl group, an alkoxycarbonyl group, an aryloxycarbonyl group, an acyloxy group, or a cyano group, and more preferably a halogen atom, an alkyl group, an alkenyl group, an aryl group, an alkoxy group, or an acyloxy group.

The heteroaromatic ring group is preferably a pyridyl group, a pyrimidinyl group, a furyl group, or a benzofuranyl group, and more preferably a pyridyl group or a pyrimidinyl group.

The liquid crystal composition may contain one kind of chiral agent alone or may contain two or more kinds thereof.

The content of the chiral agent can be appropriately selected depending on the structure of the cholesteric liquid crystal compound to be used and the desired pitch of the spiral structure. From the viewpoints of the easy formation of the cholesteric liquid crystal layer, the easy adjustment of the pitch of the spiral structure, and the suppression of the change in reflectance after molding, the content thereof is preferably 1% by mass or more and 20% by mass or less, more preferably 2% by mass or more and 15% by mass or less, and particularly preferably 3% by mass or more and 10% by mass or less, with respect to the total solid content of the liquid crystal composition.

In a case where a chiral agent having a polymerizable group is contained as the chiral agent, from the viewpoint of the suppression of the change in reflectance after molding, the content of the chiral agent having a polymerizable group is preferably 0.2% by mass or more and 15% by mass or less, more preferably 0.5% by mass or more and 10% by mass or less, still more preferably 1% by mass or more and 8% by mass or less, and particularly preferably 1.5% by mass or more and 5% by mass or less, with respect to the total solid content of the liquid crystal composition.

Further, in a case where a chiral agent having no polymerizable group is contained as the chiral agent, from the viewpoint of the suppression of the change in reflectance after molding, the content of the chiral agent having no polymerizable group is The content thereof is preferably 0.2% by mass or more and 20% by mass or less, more preferably 0.5% by mass or more and 15% by mass or less, and particularly preferably 1.5% by mass or more and 10% by mass or less, with respect to the total solid content of the liquid crystal composition.

Further, it is possible to easily change the pitch of the spiral structure of the cholesteric liquid crystal in the cholesteric liquid crystal layer, and the selective reflection wavelength and the range thereof described later by adjusting not only the kind of the liquid crystal compound to be used but also the content of the chiral agent. Although it cannot be said unconditionally, in a case where the content of the chiral agent in the liquid crystal composition is doubled, there is a case where the above pitch is halved and the central value of the selective reflection wavelength is halved.

· Polymerization initiator

The liquid crystal composition preferably contains a polymerization initiator and more preferably contains a photopolymerization initiator.

Examples of the polymerization initiator include a radical polymerization initiator and a cationic polymerization initiator.

As the polymerization initiator, a known polymerization initiator can be used.

Further, the polymerization initiator is preferably a photopolymerization initiator capable of initiating a polymerization reaction by irradiation with ultraviolet rays.

Examples of the photopolymerization initiator include $\alpha$-carbonyl compounds (described in the specifications of US2367661A and US2367670A), an acyloin ether compound (described in the specification of US2448828A), an aromatic acyloin compound substituted with $\alpha$-hydrocarbon (described in the specification of US2722512A), polynuclear quinone compounds (described in the specifications of US3046127A and US2951758A), a combinations of a triarylimidazole dimer and a p-aminophenyl ketone (described in the specification of US3549367A), an acridine compound and a phenazine compound (described in the specifications of JP1985-105667A (JP-S60-105667A) and US4239850A), and an oxadiazole compound (described in the specification of US4212970A).

Further, as the photoradical polymerization initiator, a known photoradical polymerization initiator can be used.

Preferred examples of the photoradical polymerization initiator include an $\alpha$-hydroxyalkylphenone compound, an $\alpha$-aminoalkylphenone compound, and an acylphosphine oxide compound.

Further, as the photocationic polymerization initiator, a known photocationic polymerization initiator can be used.

Preferred examples of the photocationic polymerization initiator include an iodonium salt compound and a sulfonium salt compound.

The liquid crystal composition may contain one kind of polymerization initiator alone or may contain two or more

kinds thereof.

The content of the polymerization initiator can be appropriately selected depending on the structure of the cholesteric liquid crystal compound to be used and the desired pitch of the spiral structure. From the viewpoints of the easy formation of the cholesteric liquid crystal layer, the easy adjustment of the pitch of the spiral structure, the polymerization rate, and the strength of the cholesteric liquid crystal layer, the content thereof is preferably 0.05% by mass or more and 10% by mass or less, more preferably 0.05% by mass or more and 5% by mass or less, still more preferably 0.1% by mass or more and 2% by mass or less, and particularly preferably 0.2% by mass or more and 1% by mass or less, with respect to the total solid content of the liquid crystal composition.

(Crosslinking agent)

The liquid crystal compound may contain a crosslinking agent for the intended purpose of improving the strength and the durability of the cholesteric liquid crystal layer after curing. As the crosslinking agent, a crosslinking agent that is cured by ultraviolet rays, heat, humidity, or the like can be suitably used.

The crosslinking agent is not particularly limited and may be appropriately selected depending on the intended purpose. Examples thereof include polyfunctional acrylate compounds such as trimethylolpropane tri(meth)acrylate and pentaerythritol tri(meth)acrylate; epoxy compounds such as glycidyl (meth)acrylate and ethylene glycol diglycidyl ether; aziridine compounds such as 2,2-bishydroxymethylbutanol-tris[3-(1-aziridinyl)propionate], 4,4-bis(ethyleneiminocarbonylamino)diphenylmethane; isocyanate compounds such as hexamethylene diisocyanate and a biuret kind isocyanate; polyoxazoline compounds having an oxazoline group in the side chain; and alkoxysilane compounds such as vinyltrimethoxysilane and N-(2-aminoethyl)-3-aminopropyltrimethoxysilane. Further, a known catalyst can be used depending on the reactivity of the crosslinking agent, whereby the productivity can be improved in addition to the improvement of the strength and the durability of the cholesteric liquid crystal layer.

The liquid crystal composition may contain one kind of crosslinking agent alone or may contain two or more kinds thereof.

From the viewpoints of the strength and the durability of the cholesteric liquid crystal layer, the content of the crosslinking agent is preferably 1% by mass or more and 20% by mass or less, and more preferably 3% by mass or more and 15% by mass, with respect to the total solid content of the liquid crystal composition.

-Polyfunctional polymerizable compound-

The liquid crystal composition preferably contains a polyfunctional polymerizable compound and more preferably contains a polyfunctional polymerizable compound having the same kind of polymerizable group from the viewpoint of the suppression of the change in reflectance after molding.

Examples of the polyfunctional polymerizable compound include a cholesteric liquid crystal compound having two or more ethylenic unsaturated groups and no cyclic ether groups, a cholesteric liquid crystal compound having two or more cyclic ether groups and having no ethylenic unsaturated groups, and a cholesteric liquid crystal compound having two or more ethylenic unsaturated groups and two or more cyclic ether groups, as the above-described compound; a chiral agent having two or more polymerizable group; and the above-described crosslinking agent.

Among them, the polyfunctional polymerizable compound preferably includes a cholesteric liquid crystal compound having two or more ethylenic unsaturated groups and no cyclic ether groups, a cholesteric liquid crystal compound having two or more cyclic ether groups and having no ethylenic unsaturated groups, or at least one compound selected from the group consisting of chiral agents having two or more polymerizable groups, and more preferably includes a chiral agent having two or more polymerizable groups.

The liquid crystal composition may contain one kind of polyfunctional polymerizable compound alone or may contain two or more kinds thereof.

From the viewpoint of the suppression of the change in reflectance after molding, the content of the polyfunctional polymerizable compound is preferably 0.5% by mass or more and 70% by mass or less, more preferably 1% by mass or more and 50% by mass or less, still more preferably 1.5% by mass or more and 20% by mass or less, and particularly preferably 2% by mass or more and 10% by mass or less, with respect to the total solid content of the liquid crystal composition.

-Other additives-

The liquid crystal composition may contain other additives in addition to those described above, as necessary.

As other additives, known additives can be used, and examples thereof include a surfactant, a polymerization inhibitor, antioxidant, a horizontal alignment agent, an ultraviolet absorbent, a light stabilizer, a coloring agent, and metal oxide particles.

Further, the liquid crystal composition may contain a solvent. The solvent is not particularly limited and may be appropriately selected depending on the intended purpose; however, an organic solvent is preferably used.

The organic solvent is not particularly limited and may be appropriately selected depending on the intended purpose. Examples thereof include ketones such as methyl ethyl ketone and methyl isobutyl ketone, alkyl halides, amides, sulfoxides, heterocyclic compounds, hydrocarbons, esters, and ethers. One kind of these may be used singly, or two or more kinds thereof may be used in combination. Among these, ketones are particularly preferable in consideration of the burden on the environment. In addition, the above-described components may function as a solvent.

The content of the solvent in the liquid crystal composition is not particularly limited, and the content of the solvent may be adjusted to obtain the desired coatability.

The content of the solid content with respect to the total mass of the liquid crystal composition is not particularly limited; however, it is preferably 1% by mass to 90% by mass, more preferably 5% by mass to 80% by mass, and particularly preferably 10% by mass to 80% by mass.

In a case of forming the cholesteric liquid crystal layer, the content of the solvent of the liquid crystal composition at the time of curing is preferably 5% by mass or less, more preferably 3% by mass or less, still more preferably 2% by mass or less, and particularly preferably 1% by mass or less, with respect to the total solid content of the liquid crystal composition.

The content of the solvent in the cholesteric liquid crystal layer obtained by curing the liquid crystal composition is preferably 5% by mass or less, more preferably 3% by mass or less, still more preferably 2% by mass or less, and particularly preferably 1% by mass or less, with respect to the total mass of the cholesteric liquid crystal layer.

-Application and curing of liquid crystal composition-

The liquid crystal composition can be applied by using a method in which the liquid crystal composition is made into a solution state by a solvent or made into a liquid state material such as a molten liquid by heating and then expanded by an appropriate method such as a roll coating method, a gravure printing method, or a spin coating method. Further, the coating can be carried out by various methods such as a wire bar coating method, an extrusion coating method, a direct gravure coating method, a reverse gravure coating method, and a die-coating method. It is also possible to form a coating film by ejecting the liquid crystal composition from a nozzle using an inkjet device.

Then, the cholesteric liquid crystal layer is formed by curing the liquid crystal composition. By the curing, the alignment state of the molecules of the liquid crystal compound including the cholesteric liquid crystal compound is maintained and fixed. The curing is preferably carried out by a polymerization reaction of a polymerizable group such as an ethylenic unsaturated group or a cyclic ether group, which is contained in the cholesteric liquid crystal compound, the polymerizable compound, or the like.

In a case where the above solvent is used, it is preferable to dry the coating film by a known method after the coating of the liquid crystal composition and before the polymerization reaction for curing. For example, the coating film may be dried by leaving it to stand or may be dried by heating.

The drying is not limited as long as the liquid crystal compounds in the liquid crystal composition are aligned during application and after drying of the liquid crystal composition.

-Selective reflectivity of cholesteric liquid crystal layer-

The cholesteric liquid crystal layer preferably has selective reflectivity in a specific wavelength range.

In the present specification, the selective reflection wavelength is an average value of two wavelengths exhibiting a half-value transmittance, T1/2 (%), expressed by the following formula in a case where the minimum value of the transmittance of a target object (a member) is denoted by Tmin (%), and "having selective reflectivity" means having a specific wavelength range satisfying the selective reflection wavelength.

Expression for calculating half-value transmittance: $T1/2 = 100 - (100 - Tmin)/2$

The selective reflection wavelength in the cholesteric liquid crystal layer is not particularly limited and, for example, can be set in any range of visible light (380 nm to 780 nm) and near infrared light (more than 780 nm and 2,000 nm or less).

Among them, the cholesteric liquid crystal layer preferably has selective reflectivity in at least a part of the wavelength range of 380 nm to 1,200 nm.

<<Layer containing flat metal particles>>

The reflective layer is preferably a layer containing flat metal particles from the viewpoints of reflectivity and retroreflectivity.

Further, the reflective layer preferably contains flat metal particles from the viewpoints of reflectivity and retroreflectivity.

The flat metal particles are not particularly limited, and known flat metal particles can be used.

As the layer containing flat metal particles, it is also possible to use, for example, a layer which has 60% by particle number or more of hexagonal to circular flat metal particles and is plane-aligned in a range of 0° to ±30° of angle which is formed between the principal plane of the flat metal particle and the surface of the uneven structure closest to the flat metal particle, as described in JP2016-102952A, or a layer containing a pigment, in which thicknesses of a dielectric substance and a thin metal film are controlled to reflect infrared rays of a specific wavelength and the dielectric substance and the thin metal film are alternatingly laminated, as described in WO2016/006664.

Among them, the flat metal particles are preferably flat silver particles from the viewpoint of reflectivity.

<<Optical multilayer layer>>

The reflective layer may be an optical multilayer layer.

The optical multilayer layer is a wavelength selective reflective layer including an optical multilayer film that reflects light in a specific wavelength range (a first wavelength range) and transmits light in a wavelength range (a second wavelength range) other than the specific wavelength range. For example, the optical multilayer layer is formed from a laminated film which is obtained by alternately laminating a plurality of first refractive index layers (layers of low refractive index) and a plurality of second refractive index layers (layers of high refractive index) having a refractive index higher than that of the first refractive index layer. Alternatively, in a case of selectively reflecting infrared rays, the optical multilayer layer is formed from a laminated film which is obtained by alternately laminating metal layers having a high reflectance in the infrared region, and optical transparent layers or transparent conductive layers, having a high refractive index in the visible region and functioning as antireflection layers.

The metal layer having a high reflectance in the infrared region contains, for example, a simple substance such as Au, Ag, Cu, Al, Ni, Cr, Ti, Pd, Co, Si, Ta, W, Mo, or Ge, or an alloy containing two or more of these simple substances, as the main component. In a case where an alloy is used as the material of the metal layer, AlCu, AlTi, AlCr, AlCo, AlNdCu, AlMgCu, AgBi, AgPdCu, AgPdTi, AgCuTi, AgPdCa, AgPdMg, AgPdFe, or the like can be used for the metal layer.

The optical transparent layer contains, for example, a high dielectric substance such as niobium oxide, tantalum oxide, or titanium oxide, as the main component.

The transparent conductive layer contains, for example, tin oxide, zinc oxide, indium-doped tin oxide (ITO), carbon nanotube-containing substance, indium-doped zinc oxide, antimony-doped tin oxide, or the like, as the main component. Alternatively, a layer in which nanoparticles of the above materials or nanoparticles, nanorods, or nanowires of conductive materials such as a metal are dispersed in a resin at a high concentration may be used.

These optical transparent layers or transparent conductive layers may contain a dopant such as Al or Ga. This is because in a case where the metal oxide layer is formed by a sputtering method or the like, the film quality and smoothness are improved. For example, in a case of a ZnO-based oxide, it is possible to use at least one selected from the group consisting of Ga and Al-doped zinc oxide (GAZO), Al-doped zinc oxide (AZO), and Ga-doped zinc oxide (GZO).

The refractive index of the layer of high refractive index contained in the laminated film is preferably 1.7 or more and 2.6 or less, more preferably 1.8 or more and 2.6 or less, and still more preferably 1.9 or more and 2.6 or less. This is because it is possible to realize antireflection in the visible light region with a thin film in which cracking does not occur. Here, the refractive index is a value at 25°C and a wavelength of 550 nm.

The layer of high refractive index is, for example, a layer containing a metal oxide as the main component. As the metal oxide, it may be preferable to use a metal oxide other than zinc oxide from the viewpoints of relaxing the stress of the layer and suppressing the cracking occurrence. In particular, it is preferable to use at least one selected from the group consisting of a niobium oxide (for example, niobium pentoxide), a tantalum oxide (for example, tantalum pentoxide), and a titanium oxide.

The thickness of the layer of high refractive index is preferably 10 nm or more and 120 nm or less, more preferably 10 nm or more and 100 nm or less, and still more preferably 10 nm or more and 80 nm or less. Within the above range, the reflection of visible light can be suppressed, the transmittance is excellent, and the cracking occurrence tends to be suppressed.

The optical multilayer layer is not limited to the multilayer film of thin films made of an inorganic material and may be a film obtained by laminating thin films made of a polymer material or laminating layers obtained by dispersing particles or the like in a polymer.

As a method of forming the optical multilayer layer, for example, dry processing such as a sputtering method or a vacuum vapor deposition method, or wet processing such as a dip coating method or a die-coating method can be used.

<<Layer containing chromic material>>

The reflective layer may be a layer containing a chromic material.

The chromic material is a functional layer of which the reflection performance or the like is reversibly changed by an external stimulus, the layer containing the chromic material may be used as a single layer or a plurality of layers or may be used in combination with the above-described laminated film and a transparent conductive layer.

The chromic material is a material that reversibly changes a structure thereof by an external stimulus such as heat, light, or an invading molecule.

Examples of the chromic material include a photochromic material, a thermochromic material, a gas-chromic material, and an electrochromic material.

The laminate according to the present disclosure may have two or more reflective layers.

Further, each of the two or more reflective layers may be a layer having the same composition or a layer having a different composition.

-Thickness of reflective layer-

According to the invention, the thickness of the reflective layer is 0.05 μm or more and 20 μm or less, preferably 0.3 μm or more and 15 μm or less, still more preferably 0.5 μm or more and 9 μm or less, and particularly preferably 0.6 μm or more and 3 μm or less, from the viewpoints of chipping resistance, reflectivity, and retroreflectivity.

In a case where two or more reflective layers are provided, it is preferable that each of the reflective layers is independently in the above range of the thickness.

-Uneven structure of reflective layer-

The reflective layer in the laminate according to the present disclosure is preferably a layer having an uneven structure.

The uneven structure may include only a plurality of protruding parts, may include only a plurality of recessed parts, or may include a plurality of protruding parts and a plurality of recessed parts. Examples of the uneven structure including only a plurality of protruding parts include a structure in which hemispherical protruding parts are formed. Examples of the uneven structure including a plurality of protruding parts and a plurality of recessed parts include a prism shape, a pyramid shape, and a corner cube shape.

The uneven structure preferably has a prism shape, a pyramid shape, a hemispherical shape, or a corner cube shape.

Further, the uneven structure more preferably includes a plurality of protruding parts and a plurality of recessed parts, more preferably has a prism shape, a pyramid shape, or a corner cube shape, and particularly preferably has a corner cube shape.

In the present specification, the corner cube shape refers to a shape in which three planes are combined to be orthogonal to each other, and a shape further deformed from the shape in which three planes are combined to be orthogonal to each other, within an optically acceptable range, is also included.

For example, in a case where only perfect retroreflection is carried out by a perfect corner cube shape, retroreflected light cannot be observed unless an observer is positioned on the optical path of the incident light or an extension line of the optical path. Accordingly, in a case where the laminate according to the present disclosure is irradiated with infrared rays in the wavelength range of 780 nm to 2,000 nm, it is difficult to completely match the orientations of the infrared irradiation unit and the optical receiver (or the observer), and thus the laminate according to the present disclosure is preferably deformed from the perfect corner cube shape so that reflected light can easily enter the optical receiver rather than being retroreflected completely.

The reflective layer preferably has at least one of a protruding part or a recessed part at a periodic pitch as the uneven structure.

Regarding the width of the protruding part or the recessed part, in the case of a protruding part, the width of the protruding part is the distance between the lowest points in a case where the protruding part is cut by a plane which is perpendicular to the surface direction and passes through the highest point and the lowest point of the protruding part, in the case of a recessed part, the width of the recessed part is the distance between the highest points in a case where the recessed part is cut by a plane which is perpendicular to the surface direction and passes through the highest point and the lowest point of the recessed part, and in a case where the individual pitch sizes are different, the width of the protruding part or the recessed part is the average value of the above-described distances between the lowest points or the average value of the above-described distances between the highest points described above. In the case of a protruding part, the pitch refers to the distance between the highest points, and in the case of a recessed part, the pitch is the distance between the lowest points.

In a case where the uneven structure has a hemispherical shape, the pitch is the distance between the apexes of the two hemispherical protruding parts that are in closest contact with each other, and the width of the hemispherical protruding part corresponds to the diameter of the hemispherical portion.

Further, in a case where the uneven structure has a hemispherical shape, the pitch and the width of the protruding part may not match.

In a case where the uneven structure has the corner cube shape illustrated in Fig. 1 and Fig. 2, the pitch corresponds to the distance between the apexes of the two corner cube-shaped protruding parts that are in closest contact with each other, and the width of the protruding part or the recessed part is the same as the above pitch.

In a case where the uneven structure has the pyramid shape illustrated in Fig. 4, the pitch corresponds to the distance between the apexes of the two pyramid-shaped protruding parts that are in closest contact with each other, and the width of the protruding part or the recessed part is the same as the above pitch.

The depth (or the height) of the uneven structure is preferably 1 μm to 100 μm and more preferably 3 μm to 80 μm from the viewpoints of reflectivity and retroreflectivity.

The width of the uneven structure is preferably 1 μm to 100 μm and more preferably 3 μm to 80 μm from the viewpoints of reflectivity and retroreflectivity.

The ratio of the depth to the width in the uneven structure is preferably width: depth = 100:1 to 1:2 and more preferably 50:1 to 1:1 from the viewpoints of the shape retention, the reflectivity, and the retroreflectivity at the time of molding.

Further, the ratio of the thickness $H_T$ of the reflective layer to the depth $H_D$ of the uneven structure in the reflective layer is preferably $H_D/H_T > 1.0$ and more preferably $3 < H_D/H_T < 100$, and particularly preferably $5 < H_D/H_T < 50$. Even in the case of a reflective layer having the above-described uneven structure in which the depth of the uneven structure is larger than the layer thickness as in the above range and structural destruction is more likely to occur, the laminate according to the present disclosure has excellent chipping resistance.

The method of forming the uneven structure in the reflective layer is not particularly limited; however, suitable examples thereof include a method in which a mold having a shape corresponding to the uneven structure is prepared in advance and the above uneven shape is transferred to a base material on which a reflective layer which does not have the uneven structure is laminated, and a method in which the uneven shape is transferred to a base material before forming the reflective layer, and then the reflective layer is formed along the uneven shape.

In any case, a resin layer described later in which the uneven shape is easily applied can also be provided on the base material.

Examples of the transferring method include a method of directly pressurizing a mold against the base material and a method of pressurizing using a vacuum laminator.

<<Alignment layer>>

In a case where the reflective layer is the cholesteric liquid crystal layer, the laminate according to the present disclosure may have an alignment layer which is in contact with the cholesteric liquid crystal layer. The alignment layer is used to align the molecules of the liquid crystal compound in the liquid crystal composition in a case of forming a layer containing the liquid crystal compound.

The alignment layer is used in a case of forming a layer such as a liquid crystal layer, and the laminate according to the present disclosure may or may not include the alignment layer.

The alignment layer can be provided by means such as rubbing treatment of an organic compound (preferably a polymer), oblique vapor deposition of an inorganic compound such as SiO, or formation of a layer having microgrooves. Furthermore, there has been also known an alignment layer having an aligning function that is imparted by applying an electrical field, applying a magnetic field, or by irradiation with light.

Depending on the material of the underlayer such as the base material and the cholesteric liquid crystal layer, the underlayer can be subjected to a direct alignment treatment (for example, a rubbing treatment) to function as the alignment layer without providing the alignment layer. Examples of such a base material for the underlayer include polyethylene terephthalate (PET).

Further, in a case where a layer is directly laminated on the cholesteric liquid crystal layer, the cholesteric liquid crystal layer as the underlayer actions as an alignment layer, and thus the liquid crystal compound for manufacturing the upper layer may be aligned. In such a case, the liquid crystal compound in the upper layer can be aligned without providing the alignment layer and without carrying out a special alignment treatment (for example, a rubbing treatment).

The thickness of the alignment layer is not particularly limited; however, it is preferably in a range of 0.01 μm to 10 μm.

Hereinafter, a rubbing-treated alignment layer that is used by rubbing a surface and a photoalignment layer will be described as preferred examples.

<Rubbing-treated alignment layer>

Examples of the polymer that can be used for the rubbing-treated alignment layer include a methacrylate-based copolymer, a styrene-based copolymer, polyolefin, polyvinyl alcohol, and modified polyvinyl alcohol, poly(N-methylolacrylamide), polyester, polyimide, a vinyl acetate copolymer, carboxymethyl cellulose, and polycarbonate, which are described in paragraph 0022 of JP1996-338913A (JP-H8-338913). A silane coupling agent can be used as a polymer. A water-soluble polymer (for example, poly(N-methylolacrylamide), carboxymethyl cellulose, gelatin, polyvinyl alcohol, or modified polyvinyl alcohol) is preferable, gelatin, polyvinyl alcohol, or modified polyvinyl alcohol is more preferable, and polyvinyl alcohol or modified polyvinyl alcohol is particularly preferable.

The liquid crystal composition is applied onto the rubbing-treated surface of the alignment layer to align the molecules of the liquid crystal compound. Then, as necessary, the alignment layer polymer is reacted with the polyfunctional monomer contained in the cholesteric liquid crystal layer, or the alignment layer polymer is crosslinked with a crosslinking agent, whereby the cholesteric liquid crystal layer can be formed.

-Rubbing treatment-

The surfaces of the alignment layer, the support, or the other layer on which the composition forming a cholesteric liquid crystal layer is applied may be subjected to a rubbing treatment, as necessary. The rubbing treatment can be generally carried out by rubbing the surface of the film containing a polymer as the main component with paper or cloth in a predetermined direction. A general method of the rubbing treatment is described in, for example, "Liquid Crystal Handbook" (published by Maruzen Publishing Co., Ltd., October 30, 2000).

As a method of changing the rubbing density, the method described in "Liquid Crystal Handbook" (published by Maruzen Publishing Co., Ltd.) can be used. The rubbing density (L) is quantified by Expression (A).

$$\text{Expression (A): } L = Nl(1 + 2\pi rn/60v)$$

In Expression (A), N is the number of times of rubbing, l is the contact length of the rubbing roller, r is the radius of the roller, n is the rotation speed (revolutions per minute, rpm) of the roller, and v is the stage moving speed (in terms of the second).

Increasing the rubbing density may be carried out by increasing the number of times of rubbing, increasing the contact length of the rubbing roller, increasing the radius of the roller, increasing the rotation speed of the roller, or slowing down the stage moving speed. On the other hand, decreasing the rubbing density may be carried out by reversing each of the above operations. Further, as conditions for the rubbing treatment, the description of JP4052558B can also be referred to.

-Photoalignment layer-

The photoalignment material used for a photoalignment layer formed by irradiation with light is described in many documents. Preferred examples thereof include azo compounds described in JP2006-285197A, JP2007-076839A, JP2007-138138A, JP2007-094071A, JP2007-121721A, JP2007-140465A, JP2007-156439A, JP2007-133184A, JP2009-109831A, JP3883848B, and JP4151746B, aromatic ester compounds described in JP2002-229039A, maleimide and/or alkenyl-substituted nadimide compounds having photo-alignable units described in JP2002-265541A and JP2002-317013A, photo-crosslinkable silane derivatives described in JP4205195B and JP4205198B, and photo-crosslinkable polyimides, polyamides, and esters described in JP2003-520878A, JP2004-529220A, and JP4162850B. Azo compounds, photo-crosslinkable polyimides, polyamides, or esters are particularly preferable.

To a photoalignment layer formed from the above-described material, linearly polarized light or non-polarized light is applied to manufacture the photoalignment layer.

In the present specification, the "linearly polarized light irradiation" is an operation for causing a photoreaction to the photoalignment material. The wavelength of the light used varies depending on the photoalignment material used and is not particularly limited as long as the wavelength is a wavelength necessary for the photoreaction. The peak wavelength of the light used for light irradiation is preferably 200 nm to 700 nm, and ultraviolet light having a light peak wavelength of 400 nm or less is more preferable.

The light source used for light irradiation is a known light source, and examples thereof include lamps such as a tungsten lamp, a halogen lamp, a xenon lamp, a xenon flash lamp, a mercury lamp, a mercury/xenon lamp, and a carbon arc lamp, various lasers (for example, a semiconductor laser, a helium/neon laser, an argon ion laser, a helium/cadmium laser, and a YAG laser), light emitting diodes, and cathode ray tubes.

As means for obtaining linearly polarized light, a method using a polarizing plate (for example, an iodine polarizing

plate, a dichroic dye polarizing plate, or a wire grid polarizing plate), a method using a prism-based element (for example, a GLAN-THOMPSON prism) or a reflective polarizer using a BREWSTER angle, or a method using light emitted from a polarized laser light source can be employed. Only light having a necessary wavelength may be selectively applied by using a filter, a wavelength conversion element, or the like.

In a case where linearly polarized light is used as light for irradiation, a method of irradiating the alignment layer with light from an upper surface or a rear surface in a direction vertical or oblique from the alignment layer surface is exemplified. The incidence angle of light varies depending on the photoalignment material; however, it is preferably 0° to 90° (vertical) and more preferably 40° to 90° with respect to the alignment layer.

In a case of using non-polarized light, the non-polarized light is emitted obliquely. The incidence angle is preferably 10° to 80°, more preferably 20° to 60°, and particularly preferably 30° to 50°.

The irradiation time is preferably 1 minute to 60 minutes and more preferably 1 minute to 10 minutes.

<Adhesive layer>

The laminate according to the present disclosure has an adhesive layer from the viewpoints of the easy attachment to other members and the enhancement of adhesiveness between layers.

The material of the adhesive layer is not particularly limited, as long as it satisfies the above relationship of modulus of elasticity, and can be appropriately selected depending on the intended purpose.

According to the invention, the adhesive layer comprises pressure sensitive adhesive.

-Pressure sensitive adhesive-

Examples of the pressure sensitive adhesive include an acrylic pressure sensitive adhesive, a rubber-based pressure sensitive adhesive, and a silicone-based pressure sensitive adhesive. In addition, examples of the pressure sensitive adhesive include the acrylic pressure sensitive adhesive, the ultraviolet (UV) curable-kind pressure sensitive adhesive, the silicone pressure sensitive adhesive, which are described in Chapter 2 of "Characteristic Evaluation and Control Technology of Peeling Paper, Pealing Film, and Adhesive Tape" (JOHOKIKO Co., Ltd., 2004). The acrylic pressure sensitive adhesive refers to a pressure sensitive adhesive containing a polymer (a (meth)acrylic polymer) of a (meth)acrylic monomer.

In a case where a pressure sensitive adhesive is contained, a viscosity imparting agent may be further contained.

-adhesive-

Examples of the adhesive include urethane resin adhesives, polyester adhesives, acrylic resin adhesives, ethylene vinyl acetate resin adhesives, polyvinyl alcohol adhesives, polyamide adhesives, silicone adhesives, and the like. A urethane resin adhesive or a silicone adhesive is preferable from the viewpoint of higher adhesive strength.

-Method of forming adhesive layer-

The method of forming an adhesive layer is not particularly limited, and examples thereof include a method of laminating a protective film on which an adhesive layer is formed so that an adhesive layer and a resin layer are in contact with each other, a method of laminating an adhesive layer alone to be in contact with a resin layer or a reflective layer, and a method of applying the above-described pressure sensitive adhesive or a composition containing an adhesive onto a resin layer or a reflective layer. Preferred examples of the laminating method or the coating method include the same methods as the method of laminating a transparent film or the coating method for a composition forming a resin layer, described above.

According to the invention, the thickness of the adhesive layer is 15 μm to 150 μm, preferably 20 μm to 120 μm, and particularly preferably 24 μm to 80 μm. In a case where the thickness of the adhesive layer is 15 μm or more, the cushioning effect of impact absorption is highly exhibited, and in a case where the thickness of the adhesive layer is 150 μm or less, the displacement quantity at the time of applying an impact is suppressed, the breakage of the reflective layer can be suppressed, and thus has excellent chipping resistance.

<Resin layer>

From the viewpoint of chipping resistance, the laminate according to the present disclosure preferably further has a resin layer and more preferably has a resin layer between the reflective layer and the adhesive layer.

Further, the resin layer preferably contains a coloring agent from the viewpoint of designability.

The position of the resin layer in the laminate according to the present disclosure is not particularly limited and

can be provided at a desired position; however, the following two aspects are preferably mentioned.

In one aspect, it is preferable to further have a resin layer between the base material and the reflective layer in the laminate according to the present disclosure from the viewpoint of designability.

In another aspect, it is preferable to further have a resin layer between the reflective layer and the adhesive layer from the viewpoints of designability, moldability, and durability.

Further, the laminate according to the present disclosure may have only one resin layer or two or more resin layers.

In the laminate according to the present disclosure, it is preferable that at least one of the resin layers is a layer for being visible through the cholesteric liquid crystal layer.

It is presumed that in a case of at least one layer of the resin layer is viewed through the cholesteric liquid crystal layer, the color is changed depending on the angle at which the resin layer is visible, based on the anisotropy depending on the angle of the incidence ray in the cholesteric liquid crystal layer, whereby a special designability is exhibited. In addition, the visibility of the reflected light is also improved.

Further, in a case where the laminate according to the present disclosure has two or more resin layers having a coloring agent, examples of the preferred aspect include an aspect in which at least one of the resin layers is a layer for being visible through the reflective layer, and at least one of the other resin layers is a layer closer to the visible direction than the reflective layer (also referred to as the "color filter layer").

The resin layer (the color filter layer) closer to the visible direction than the reflective layer is a layer having high transparence to light of at least a specific wavelength. The layer configuration of the resin layer is not particularly limited, and the resin layer may be a color filter layer for single color or may be a color filter layer having a color filter structure for two or more colors and, as necessary, a black matrix or the like.

In a case where the color filter layer is provided, it is possible to obtain a laminate which has further designability and with which only a specific wavelength range is visible.

Further, the total light transmittance of the resin layer for being visible through at least one layer of the resin layer, preferably through the reflective layer, is preferably 10% or less from the viewpoint of visibility.

The color of the resin layer is not particularly limited and can be appropriately selected depending on the intended use of the laminate and the like. Examples of the color of the resin layer include black, gray, white, red, orange, yellow, green, blue, and purple. In addition, the color of the resin layer may be a metallic color.

Further, from the viewpoint of designability, it is preferable to have at least one black resin layer as the resin layer.

The resin layer contains a resin from the viewpoints of strength and scratch resistance. Examples of the resin include a binder resin described later. Further, the resin layer is preferably a layer obtained by curing a polymerizable compound. A polymerization initiator can be suitably used for curing the polymerizable compound.

The polymerizable compound and the photopolymerization initiator are not particularly limited, and a conventionally known polymerizable compound and photopolymerization initiator can be used.

-Coloring agent-

Examples of the coloring agent include a pigment and a dye, and a pigment is preferable from the viewpoint of durability. For making the resin layer metallic, metal particles, a pearl pigment, or the like can be applied, and a method such as vapor deposition or plating can also be applied.

The pigment is not particularly limited, and a known inorganic pigment, an organic pigment, or the like can be applied.

Examples of the inorganic pigment include white pigments such as titanium dioxide, zinc oxide, lithopone, light calcium carbonate, white carbon, aluminum oxide, aluminum hydroxide, and barium sulfate, black pigments such as carbon black, titanium black, titanium carbon, iron oxide, and graphite, iron oxide, barium yellow, cadmium red, and chrome yellow.

As the inorganic pigment, the inorganic pigments described in paragraphs 0015 and 0114 of JP2005-007765A can also be applied.

Examples of the organic pigments include phthalocyanine pigments such as phthalocyanine blue and phthalocyanine green, azo pigments such as azo red, azo yellow, and azo orange, quinacridone-based pigments such as quinacridone red, cinquasia red, and cinquasia magenta, perylene pigments such as perylene red and perylene maroon, carbazole violet, anthrapyridine, flavanthrone yellow, isoindrine yellow, indanthrone blue, dibromoanthanthrone red, anthraquinone red, and diketopyrrolopyrrole.

Specific examples of the organic pigment include red pigments such as C.I. Pigment Red 177, 179, 224, 242, 254, 255, and 264, yellow pigments such as C.I. Pigment Yellow 138, 139, 150, 180, and 185, orange pigments such as C.I. Pigment Orange 36, 38, and 71, green pigments such as C.I. Pigment Green 7, 36, and 58, blue pigments such as C.I. Pigment Blue 15: 6, and purple pigments such as C.I. Pigment Violet 23.

As the organic pigment, the organic pigment described in paragraph 0093 of JP2009-256572A can also be

applied.

The pigment may include a pigment (a so-called lustrous pigment) having light transmittance and light reflectivity. Examples of the lustrous pigment include a lustrous pigment made of a metal such as aluminum, copper, zinc, iron, nickel, tin, aluminum oxide, or an alloy thereof, an interference mica pigment, a white mica pigment, a graphite pigment, and a glass flake pigment. The lustrous pigment may be uncolored or colored.

In a case where exposure is performed in the manufacture of a laminate, the lustrous pigment is preferably used within a range that does not interfere with curing by exposure.

The coloring agent may be used alone or a combination of two or more thereof may be used. Further, in a case where two or more kinds of coloring agents are used, an inorganic pigment and an organic pigment may be combined.

From the viewpoint of the realization of the target color and the molding processing suitability, the content of the coloring agent in the resin layer is preferably 1% by mass to 50% by mass, more preferably 5% by mass to 50% by mass, and particularly preferably 10% by mass to 40% by mass, with respect to the total mass of the resin layer.

(Dispersing agent)

From the viewpoint of improving the dispersibility of the coloring agent, particularly the pigment, contained in the resin layer, the resin layer may contain a dispersing agent. In a case where a dispersing agent is contained, the dispersibility of the coloring agent in the formed resin layer is improved, and thus the color of the obtained decorative film can be made uniform.

The dispersing agent can be appropriately selected depending on the kind, shape, and the like of the coloring agent, and a polymer dispersing agent is preferable.

Examples of the polymer dispersing agent include a silicone polymer, an acrylic polymer, and a polyester polymer. In a case where it is desired to impart heat resistance to the decorative film, it is preferable to use, for example, a silicone polymer such as a graft type silicone polymer as a dispersing agent.

The weight-average molecular weight of the dispersing agent is preferably 1,000 to 5,000,000, more preferably 2,000 to 3,000,000, and particularly preferably 2,500 to 3,000,000. In a case where the weight-average molecular weight is 1,000 or more, the dispersibility of the coloring agent is further improved.

As the dispersing agent, a commercially available product may be used. Examples of the commercially available products include EFKA 4300 (an acrylic polymer dispersing agent) manufactured by BASF Japan Ltd., HOMOGENOL L-18, HOMOGENOL L-95, and HOMOGENOL L-100, manufactured by Kao Corporation, Solsperse 20000 and Solsperse 24000, manufactured by Lubrizol Japan Limited., and DISPERBYK-110, DISPERBYK-164, DISPERBYK-180, and DISPERBYK-182, manufactured by BYK JAPAN KK. "HOMOGENOL", "Solsperse", and "DISPERBYK" are all registered trade marks.

The dispersing agent may be used alone or a combination of two or more thereof may be used.

The content of the dispersing agent in the resin layer is preferably 1 part by mass to 30 parts by mass with respect to 100 parts by mass of the coloring agent.

-Binder resin-

The resin layer preferably contains a binder resin from the viewpoint of molding processing suitability.

The binder resin is not particularly limited, and a known resin can be applied. From the viewpoint of obtaining a desired color, the binder resin is preferably a transparent resin, and specifically, a resin having a total light transmittance of 80% or more is preferable. The total light transmittance can be measured by a spectrophotometer (for example, a spectrophotometer UV-2100 manufactured by Shimadzu Corporation).

Examples of the binder resin include an acrylic resin, a silicone resin, polyester, a urethane resin, and polyolefin. The binder resin may be a homopolymer of a specific monomer or may be a copolymer of a specific monomer and another monomer.

The binder resin may be used alone or a combination of two or more thereof may be used.

From the viewpoint of moldability, the content of the binder resin in the resin layer is preferably 5% by mass to 70% by mass, more preferably 10% by mass to 60% by mass, and particularly preferably 20% by mass to 60% by mass, with respect to the total mass of the resin layer.

-Additive-

The resin layer may contain an additive in addition to the above components, as necessary. The additive is not particularly limited, and a known additive can be applied. Examples of the additive include the surfactants described in paragraph 0017 of JP4502784B, paragraphs 0060 to 0071 of JP2009-237362A, thermal polymerization inhibitor (also referred to as the polymerization inhibitor and phenothiazines is preferable) described in paragraph 0018 of JP4502784B,

and additives and the like described in paragraphs 0058 to 0071 of JP2000-310706A.

-Method of forming resin layer-

Examples of the method of forming a resin layer include a method of using a composition forming a resin layer and a method of bonding colored resin films to each other. Among the above, the method of forming a resin layer is preferably a method of using a composition forming a resin layer. Further, the resin layer may be formed by using a commercially available paint such as nax REAL series, nax Admira series, or nax Multi series (manufactured by Nippon Paint Co., Ltd.), or Retan PG series (manufactured by Kansai Paint Co., Ltd.).

Examples of the method of using a composition forming a resin layer include a method of carrying out coating with a composition forming a resin layer to form a resin layer and a method of carrying out printing with a composition forming a resin layer to form a resin layer. Examples of the printing method include screen printing, inkjet printing, flexo printing, gravure printing, and offset printing.

The composition forming a resin layer contains a coloring agent. Further, the composition forming a resin layer preferably contains an organic solvent and may contain each of the above components that can be contained in the resin layer.

The content of each of the above components that can be contained in the composition forming a resin layer is preferably adjusted in the range of the amount which is obtained by replacing the "resin layer" with the "composition forming a resin layer" in the description regarding the content of each of the above components in the resin layer.

The organic solvent is not particularly limited, and a known organic solvent can be applied. Examples of the organic solvent include ester compounds, ether compounds, ketone compounds, aromatic hydrocarbon compounds, and the like.

The organic solvent may be used alone or in a combination of two or more.

The content of the organic solvent in the composition forming a resin layer is preferably 5% by mass to 90% by mass and more preferably 30% by mass to 70% by mass with respect to the total mass of the composition forming a resin layer.

Examples of the method of preparing a composition forming a resin layer include a method of mixing an organic solvent with a component contained in the resin layer, such as a coloring agent. In addition, in a case where a composition forming a resin layer contains a pigment as a coloring agent, it is preferable to prepare the composition forming a resin layer using a pigment dispersion liquid containing a pigment and a dispersing agent from the viewpoints of further enhancing the uniform dispersibility and the dispersion stability of the pigment.

-Thickness of resin layer-

The thickness of the resin layer is not particularly limited; however, from the viewpoints of chipping resistance and visibility, it is preferably 0.5 μm or more, more preferably 3 μm or more, still more preferably 3 μm to 50 μm, and particularly preferably 3 μm to 20 μm.

In a case where two or more of the resin layers are provided, it is preferable that each of the resin layers is independently in the above range of the thickness.

<<Transparent resin layer>>

The laminate according to the present disclosure may further have a transparent resin layer as the resin layer between the reflective layer and the adhesive layer.

The transparent resin layer is preferably a layer containing a resin of which kind is different from the protective layer.

The transparent resin layer is more preferably a layer made of a transparent film from the viewpoint of visibility.

The transparent film is not particularly limited as long as it has the required strength and scratch resistance.

In the present disclosure, "transparent" in a transparent film means that the total light transmittance is 85% or more. The total light transmittance of the transparent film can be measured by the same method as the total light transmittance of the temporary support described above.

The transparent film is preferably a film obtained by making a transparent resin into a film, and specific examples thereof include resin films containing a polyethylene terephthalate (PET) resin, a polyethylene naphthalate (PEN) resin, an acrylic resin, a polycarbonate (PC) resin, triacetyl cellulose (TAC), a cycloolefin polymer (COP), and the like.

In particular, from the viewpoint of shape followability to the mold, the transparent film is preferably a resin film containing an acrylic resin, a polycarbonate resin, or a polyethylene terephthalate resin at a content of 60% by mass or more (more preferably 80% by mass or more and still more preferably 100% by mass or more) with respect to all the resin components contained in the transparent film. In particular, the transparent film is more preferably a resin film

containing an acrylic resin at a content of 60% by mass or more (more preferably 80% by mass or more and still more preferably 100% by mass or more) with respect to all the resin components contained in the transparent film.

The thickness of the transparent resin layer is not particularly limited; however, it is preferably 50 μm to 150 μm.

As the transparent film, a commercially available product may be used, and examples of the commercially available product include Acryplene (registered trade mark) HBS010 (an acrylic resin film, manufactured by Mitsubishi Chemical Corporation), TECHNOLLOY (registered trade mark) S001G (an acrylic resin film, manufactured by Sumitomo Chemical Co., Ltd.), C000 (a polycarbonate resin film, manufactured by Sumitomo Chemical Co., Ltd.), and C001 (an acrylic resin/polycarbonate resin laminated film, manufactured by Sumitomo Chemical Co., Ltd.).

-Formation of transparent resin layer-

The method of forming a transparent resin layer is not particularly limited; however, preferred examples thereof include a method of laminating a transparent film.

As the apparatus that is used for laminating a transparent film, a known laminator such as a laminator, a vacuum laminator, or an auto-cut laminator which is capable of further increasing productivity can be used.

It is preferable that the laminator has any heatable roller such as a rubber roller and pressurization and heating can be carried out by the laminator.

Due to heating from the laminator, at least one of the transparent film or the cholesteric liquid crystal layer is partially melted, and the adhesiveness between the cholesteric liquid crystal layer and the transparent film can be further improved.

The temperature at which the transparent film is laminated may be determined according to the material of the transparent film, the melting temperature of the cholesteric liquid crystal layer, etc.; however, the temperature is preferably a temperature which can make the temperature of the transparent film reach 60°C to 150°C, more preferably a temperature which can make the temperature of the transparent film reach 65°C to 130°C, and particularly preferably a temperature which can make the temperature of the transparent film reach 70°C to 100°C.

Further, in a case of laminating the transparent film, it is preferable to apply a linear pressure of 60 N/cm to 200 N/cm, more preferable to apply a linear pressure of 70 N/cm to 160 N/cm, and particularly preferable to apply a linear pressure of 80 N/cm to 120 N/cm between the transparent film and the cholesteric liquid crystal layer.

<Other layers>

The laminate according to the present disclosure may have other layers other than those described above.

Examples of the other layers include a self-repairing layer, antistatic layer, antifouling layer, an electromagnetic wave-proof layer, and a conductive layer, which are known layers in the laminates such as decorative film.

The other layers in the laminate according to the present disclosure can be formed by a known method. Examples thereof include a method in which a composition containing components contained in these layers (a composition for layer formation) is layeredly applied, dried, and as necessary, cured.

<Preferred layer configuration in laminate>

The layer configuration of the laminate according to the present disclosure is not particularly limited except that the protective layer, the base material, the reflective layer, and the adhesive layer are provided in order; however, preferred examples thereof include layer configurations described below. In each of the following layer configurations, an aspect in which viewing is carried out from the side of the layer described on the right side as the outermost layer is preferred.

Layer configuration 1: adhesive layer / reflective layer / base material / protective layer
Layer configuration 2: adhesive layer / resin layer / reflective layer / base material / protective layer
Layer configuration 3: adhesive layer / resin layer / reflective layer / base material / resin layer (color filter layer) / protective layer

Further, in a case where the reflective layer in each of the layer configurations is a cholesteric liquid crystal layer, it is preferable to, as necessary, provide an alignment layer on at least one of the upper side or lower side of the cholesteric liquid crystal layer.

Further, from the viewpoint of light resistance, it is preferable to further have an ultraviolet absorbing layer on the side of the visible direction from the reflective layer.

[Method of manufacturing laminate]

The method of manufacturing a laminate according to the present disclosure is not particularly limited, a known method can be used, and the laminate can be suitably manufactured by the above-described method of forming each of the layers.
Further, the method of manufacturing a laminate according to the present disclosure preferably includes a step of molding and a step of curing a protective layer.

<<Step of molding>>

The above-described molding is suitably, for example, at least one type of molding selected from the group consisting of three-dimensional molding and insert molding.
Hereinafter, the method of manufacturing the molded product (molding method) will be described in detail by taking insert molding as an example.
In the insert molding, for example, a molded product is obtained by arranging a laminate (for example, the above-described laminate before curing the protective layer) for molding in the mold in advance and injection-molding a base material resin in the mold. By this insert molding, a molded product in which a laminate for molding is integrated on the surface of the resin molded product can be obtained.
Hereinafter, an embodiment of a method of manufacturing a molded product by insert molding will be described.
The method of manufacturing a molded product includes a step of arranging a laminate for molding in a mold for injection molding and closing the mold, subsequently a step of injecting a molten resin into the mold, and further a step of taking out a molded product when the injection resin has been solidified.
A mold (that is, the molding mold) for injection molding that is used for manufacturing a decorative molded product has a mold (that is, a male mold) having a protruding shape and a mold (that is, a female mold) having a recessed shape matching with the protruding shape, and after arranging a laminate for molding on the molding surface which is the inner peripheral surface of the female mold, the mold is closed.
Here, before arranging the laminate for molding in the molding mold, it is also possible to impart a three-dimensional shape to the laminate for molding in advance by molding (preforming) the laminate for molding using the molding mold and to supply the laminate for molding to the molding mold.
Further, in a case of arranging the laminate for molding in the molding mold, it is necessary to register the laminate for molding and the molding mold in a state where the laminate for molding is inserted in the molding mold.
As a method of registering the laminate for molding and the molding mold in a state where the laminate for molding is inserted in the molding mold, there is a method in which a fixing pin of the male mold is inserted into a registration hole of the female mold to be held.
Here, in the female mold, the registration hole is formed in advance in the end part (the position where the three-dimensional shape is not imparted after molding) of the laminate for molding.
Further, the fixing pin is formed in advance at a position where the fixing pin fits with the registration hole in the male mold.
In addition, as a method of registering the laminate for molding and the molding mold in a state where the laminate for molding is inserted in the molding mold, it is possible to use the following method in addition to the method in which a fixing pin is inserted into a registration hole.
For example, there is a method of carrying out fine adjustment and registration to a target registration mark attached in advance to a position in the laminate for molding by the driving of the transportation device of the decorative molded film, where the three-dimensional shape is not imparted after molding. In the case of this method, it is preferable that the registration mark is recognized at two or more diagonal points in a case of being viewed from the product portion of the injection molded body (the decorative molded body).
After registering the laminate for molding and the molding mold and closing the molding mold, a molten resin is injected into the molding mold into which the laminate for molding has been inserted. At the time of injection, the molten resin is injected onto the resin base material side of the laminate for molding.
The temperature of the molten resin that is injected into the molding mold is set depending on the physical properties of the resin to be used. For example, in a case where the resin used is an acrylic resin, the temperature of the molten resin is preferably in a range of 240°C or higher and 260°C or lower.
The position of the inlet (the injection port) of the male mold may be set according to the shape of the molding mold and the kind of the molten resin for the intended purpose of suppressing abnormal deformation of the laminate for molding due to heat or gas generated in a case where the molten resin is injected into the molding mold.
After the molten resin injected into the molding mold into which the laminate for molding has been inserted is solidified, the molding mold is opened, and an intermediate decorative molded body in which the laminate for molding is fixed to the molding base material which is the solidified molten resin is taken out from the molding mold.

In the intermediate molded product, the burr and the dummy portion of the molded product are integrated around the decorative part that finally becomes the product (the molded product). Here, in the dummy portion, there exists an insertion hole formed by inserting the fixing pin in the above-described registration.

For this reason, a molded product can be obtained by carrying out a finishing processing of removing the above-described burr and dummy portion from the intermediate molded product before the finishing processing.

As the above-described molding, three-dimensional molding is also suitably mentioned.

Suitable examples of the three-dimensional molding include heat molding, vacuum molding, air pressure molding, and vacuum air pressure molding.

The method of carrying out vacuum molding is not particularly limited; however, a method of carrying out three-dimensional molding in a heated state under vacuum is preferable.

The vacuum refers to a state in which the room is evacuated to a degree of vacuum of 100 Pa or less.

The temperature at the time of three-dimensional molding may be appropriately set depending on the base material for molding to be used; however, it is preferably a temperature range of 60°C or higher, more preferably a temperature range of 80°C or higher, and still more preferably a temperature range of 100°C or higher. The upper limit of the temperature at the time of three-dimensional molding is preferably 200°C.

The temperature at the time of three-dimensional molding refers to the temperature of the base material for molding that is used for three-dimensional molding and is measured by attaching a thermocouple to the surface of the base material for molding.

The above vacuum molding can be performed by using a vacuum molding technique widely known in the molding field, and for example, vacuum molding may be performed using a Formech 508FS manufactured by NIHON SEIZUKI KYOGO Co., Ltd.

<<Step of curing protective layer>>

The method of manufacturing a laminate according to the present disclosure preferably includes a step of curing a protective layer.

The curing method in the step of curing the protective layer is not particularly limited and may be selected depending on the presence or absence of the crosslinkable group of the siloxane resin contained in the protective layer, the presence or absence of the ethylenic unsaturated group of the organic resin, and the polymerization initiator; however, it is preferably a method of curing the protective layer with light or heat and more preferably a method of curing the protective layer with light.

The exposure in the step of curing the protective layer may be performed from any side of the laminate for molding in a case of being possible; however, the exposure is preferably performed from the side of the protective layer.

In addition, in a case where a cover film is provided as the outermost layer on the side of the protective layer, the exposure may be performed in a state where the cover film is attached (before the cover film is peeled off). In a case where the exposure is performed from the side of the cover film, the total light transmittance of the cover film is preferably 80% or more and more preferably 90% or more.

As the exposure method, for example, the methods described in paragraphs 0035 to 0051 of JP2006-023696A can be suitably used in the present disclosure.

As the light source for exposure, any light source capable of irradiating light in a wavelength range (for example, 365 nm or 405 nm) in which the protective layer is capable of being cured can be appropriately selected and used.

Specific examples thereof include an ultra-high pressure mercury lamp, a high pressure mercury lamp, and a metal halide lamp.

The exposure amount is not particularly limited and may be appropriately set. It is preferably 5 $mJ/cm^2$ to 2,000 $mJ/cm^2$ and more preferably 10 $mJ/cm^2$ to 1,000 $mJ/cm^2$.

Further, in the step of curing the protective layer, not only the protective layer but also the resin layer may be cured simultaneously or sequentially, as necessary.

In a case where the resin layer is exposed, it is preferable that the resin layer contains a polymerizable compound and a photopolymerization initiator. In a case where a resin layer containing a polymerizable compound and a photopolymerization initiator is exposed, a cured resin layer can be obtained.

In the step of curing the protective layer, the heating temperature and the heating time in a case of curing by heat are not particularly limited and may be appropriately selected depending on the thermal polymerization initiator and the like to be used. For example, the heating temperature is preferably 60°C or higher and 200°C or lower, and the heating time is preferably 5 minutes to 2 hours. The heating means is not particularly limited, and known heating means can be used, and examples thereof include a heater, an oven, a hot plate, an infrared lamp, and an infrared laser.

<Other steps>

The method of manufacturing a laminate according to the present disclosure may include, as desired, any another step other than the above-described steps, for example, a step of attaching the above-described laminate to a molding member before curing the protective layer, a step of removing the burr from the molded product, a step of removing the dummy portion from the molded product, and the like as described above.

The other steps are not particularly limited and can be carried out by using known means and known methods.

The intended use of the laminate according to the present disclosure obtained as described above is not particularly limited and can be used for various articles; however, the intended use for the interior and exterior of an automobile, the interior and exterior of an electric appliance, a packaging container, or the like can be particularly suitably mentioned. Among them, interior and exterior members of an automobile are preferable, and an exterior member of an automobile is more preferable.

Examples

Hereinafter, the present disclosure will be described in detail with reference to Examples, but the present disclosure is not limited to these. In present Examples, "%" and "part" respectively mean "% by mass" and "part by mass", unless otherwise specified.

<Formation of alignment layer 1>

As a base material, an acrylic film having a thickness of 125 μm (TECHNOLLOY S001, manufactured by Sumika Acryl Co., Ltd.) was prepared, and a base layer coating liquid 1 was applied with a wire bar coater.

Then, drying was carried out at 100°C for 120 seconds to prepare a base material having an alignment layer 1 having a layer thickness of 1.5 μm.

[Composition of coating liquid forming alignment layer 1]

· Modified polyvinyl alcohol shown below: 28 parts by mass
· Citric acid ester (AS3, manufactured by Sankyo Kagaku Yakuhin Co., Ltd.): 1.2 parts by mass
· Photopolymerization initiator (IRGACURE 2959, manufactured by BASF SE): 0.84 parts by mass
· Glutaraldehyde: 2.8 parts by mass
· Water: 699 parts by mass
· Methanol: 226 parts by mass

Modified polyvinyl alcohol (the compound below, the number at the bottom right of each of the structural unit represents the molar ratio)

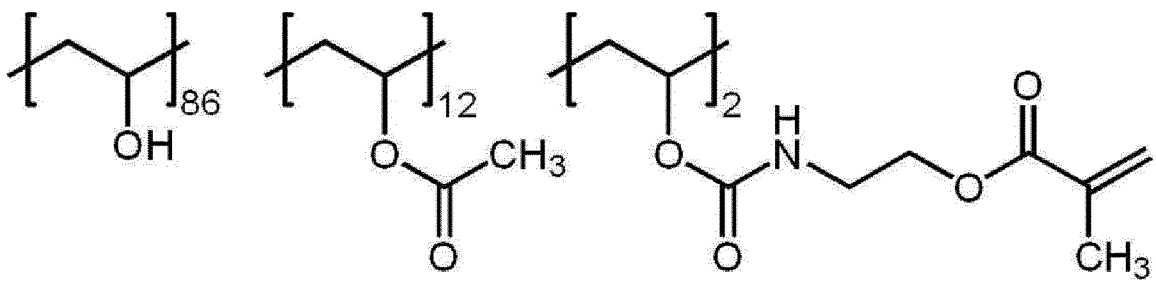

<Formation of cholesteric liquid crystal layer 1>

Rubbing treatment (rayon cloth, pressure: 0.1 kgf (0.98 N), rotation speed: 1,000 rpm, transportation speed: 10 m/min, number of times: 1 (in terms of the round trip)) was carried out on the alignment film 1 prepared as described above in a direction rotated counterclockwise by 31.5° with respect to the short side direction.

The composition shown below was stirred and dissolved in a container kept at 25°C to prepare a coating liquid

1 for a cholesteric liquid crystal layer (a liquid crystal composition 1).

[Composition of cholesteric liquid crystal layer coating liquid 1]

· Methyl ethyl ketone: 150.6 parts by mass

Liquid crystal compound 1 (the rod-like liquid crystal compound): 100.0 parts by mass
Photopolymerization initiator A (IRGACURE 907, manufactured by BASF SE): 0.50 parts by mass
Chiral agent A: 4.00 parts by mass

· Surfactant F1 below: 0.027 parts by mass

Liquid crystal compound 1 (monofunctional): the rod-like liquid crystal compound below. In the case of the radical polymerization system, even in a case where an oxetanyl group (a cationic polymerizable functional group) is attached, it is defined as monofunctional because it has only one acryloxy group (radically polymerizable group). The same applies to the cationic polymerization system.

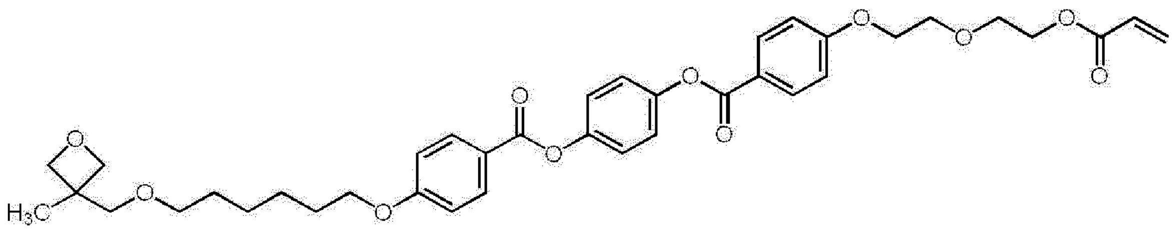

Chiral agent A (difunctional): the compound below

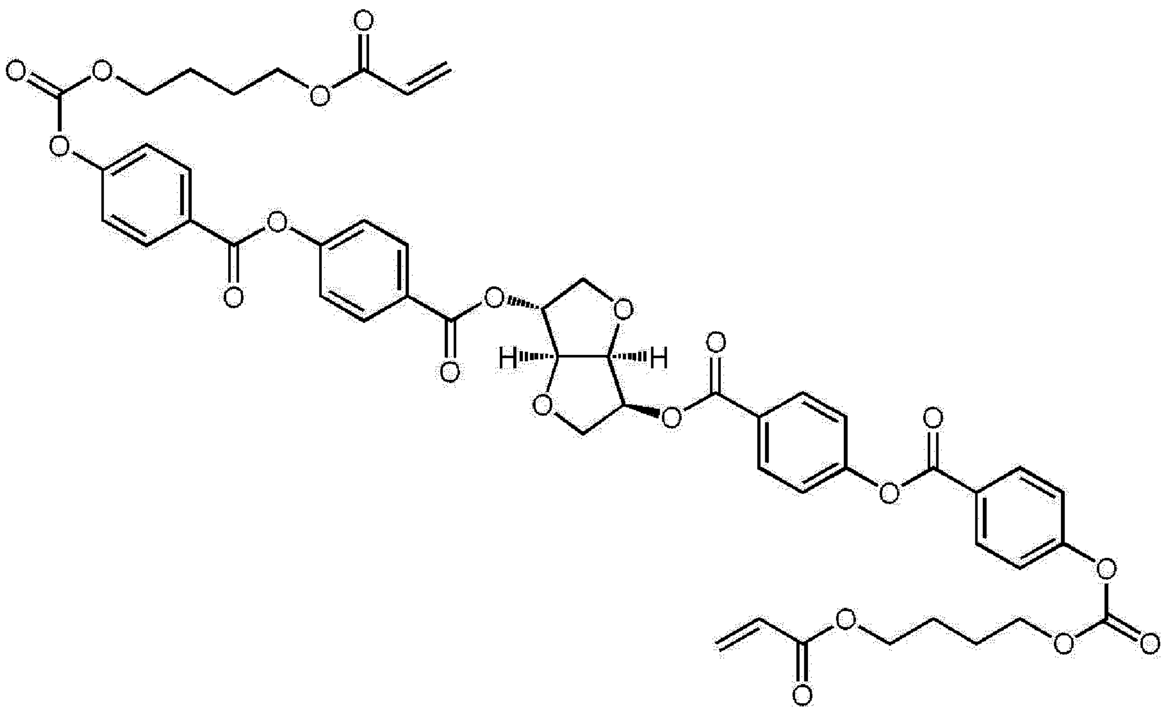

Surfactant F1: the compound below

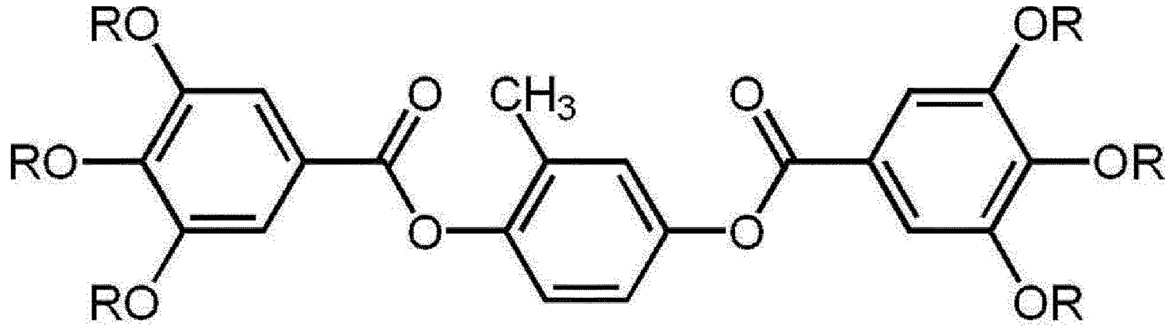

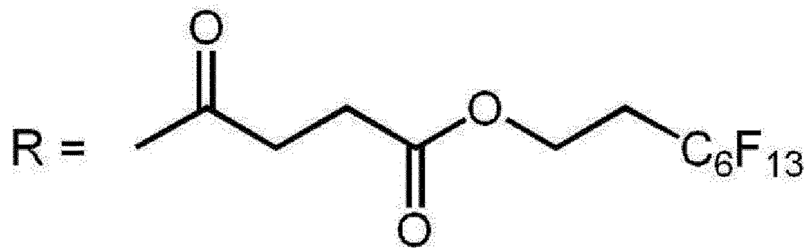

The prepared coating liquid 1 for a cholesteric liquid crystal layer was applied onto the surface of the rubbing-treated alignment layer 1 prepared above with a wire bar coater, dried at 85°C for 120 seconds, and a laminate having a cholesteric liquid crystal layer 1 having a layer thickness of 1.4 μm was prepared.

<Formation of protective layer 1>

-Synthesis of acrylate-modified acrylic resin A-

75 parts of methyl methacrylate and 88 parts of glycidyl methacrylate were copolymerized using a radical polymerization initiator V-601 (2,2'-azobis(isobutyric acid) dimethyl, manufactured by FUJIFILM Wako Pure Chemical Corporation). 50 parts of the obtained polymer was reacted with 19.2 parts of acrylic acid in the presence of tetraethylammonium chloride, thereby obtaining an acrylate-modified acrylic resin A. The weight-average molecular weight was 20,000. The acrylate-functional amount (the amount of a structural unit having an acryloxy group with respect to the entire resin, where the structural unit is obtained by reacting acrylic acid with a structural unit derived from glycidyl methacrylate) was 30% by mass.

-Preparation of coating liquid 1 forming protective layer-

The following materials was mixed and stirred for 24 hours at 25°C to obtain a hydrolysate 1 of an acrylate-modified siloxane oligomer.

-Composition-

· Acryloyloxypropyltrimethoxysilane (manufactured by Shin-Etsu Chemical Co., Ltd.): 15.0 parts
· Methyltrimethoxysilane (manufactured by Shin-Etsu Chemical Co., Ltd.): 6.0 parts
· Ethanol (manufactured by FUJIFILM Wako Pure Chemical Corporation): 17.5 parts
· Acetic acid (manufactured by FUJIFILM Wako Pure Chemical Corporation): 3.6 parts
· Water: 11.7 parts

Further, the followings were stirred for mixing at 25°C for 24 hours, thereby obtaining a coating liquid 1 forming a protective layer.

· Hydrolysate 1: 8.0 parts
· Ethanol: 8.0 parts
· Acrylate-modified acrylic resin A (weight-average molecular weight = 20,000): 11 parts
· Ultraviolet (UV) absorber (Tinuvin 479-DW, manufactured by BASF SE, solid content: 40% by mass): 1 part
· Acrylic resin (methyl methacrylate (MMA) / methacrylic acid (MAA) = 60/40 (mass ratio), manufactured by Sigma-Aldrich Co., LLC, Mn = 32,000): 6 parts
· IRGACURE 127 (a photoradical polymerization initiator, manufactured by BASF SE): 0.1 parts
· F-553 (a fluorine-based surfactant, manufactured by DIC Corporation): 0.02 parts

The base material surface opposite to the surface on which the alignment layer 1 and the cholesteric liquid crystal layer 1 were formed was coated using a wire bar coater so that the layer thickness was 15 μm, and dried at 120°C for 2 minutes, thereby forming a protective layer 1. The modulus of elasticity was 5.0 GPa.

<Formation of unevenness on cholesteric liquid crystal layer (formation of reflective layer)>

The surface on which the alignment layer 1 and the cholesteric liquid crystal layer 1 prepared above was overlapped with the mold illustrated in Fig. 1 and Fig. 2 and then embossed with a vacuum laminator to form an uneven surface, thereby forming a reflective layer 1 having an uneven structure. The conditions forming the unevenness were a temperature of 160°C, a vacuum holding time of 2 minutes, a pressurizing time of 3 minutes, and a pressure of 0.1 MPa.

Fig. 1 is a schematic view of a mold forming an uneven structure in a corner cube shape in a case of being viewed from a direction perpendicular to the plane direction, and Fig. 2 is a schematic cross-sectional view obtained by cutting the mold forming an uneven structure in a corner cube shape illustrated in Fig. 1, along the inclined surfacess of corner cubes so that a cutting line passes through a portion where the highest points and the lowest points of the height of the protruding part in the direction perpendicular to the plane direction are arranged in a line, where the schematic cross-sectional view is a schematic cross-sectional view in a direction inclined by about 30° with respect to a normal line perpendicular to the plane direction in Fig. 1. Here, the term "perpendicular to the plane direction" means that it is perpendicular to the plane direction of the base material and does not mean that it is perpendicular to the inclined surfaces of the corner cube. In the mold for forming the uneven structure in the corner cube shape illustrated in Fig. 1 and Fig. 2, the distance between the protruding parts formed in the corner cube shape (the width of the uneven structure formed in the corner cube shape) is 20 μm, and the height of the protruding part is 10 μm.

<Formation of colored layer 1>

A black paint (nax REAL 480, manufactured by Nippon Paint Co., Ltd.) was dried on the surface on the reflective layer 1 side at 100°C for 10 minutes to form a colored layer 1 (a black colored layer, a resin layer 1) having an average layer thickness of 30 μm.

<Formation of adhesive layer 1>

An acrylic pressure sensitive adhesive liquid (SK-Dyne SG-50Y, manufactured by Soken Chemical & Engineering Co., Ltd.) was applied on the surface on which the colored layer 1 was formed with a comma coater, and dried at 120°C for 2 minutes to form an adhesive layer 1 having a layer thickness of 25 μm, thereby preparing a laminate 1 for molding.

<Molding processing>

The laminate 1 for molding was subjected to air pressure molding processing (TOM molding) using a mold 10 having a cross-sectional shape 12 illustrated in Fig. 3 so that the laminate 1 for molding came into contact with the surface of the mold 10 having a protruding part. A TOM molding machine NGF-0510-R (manufactured by Fu-se Vacuum Forming Co., Ltd.) was used for the air pressure molding processing, the molding temperature was 150°C, and the stretching ratio was 200% at the highest portion. Using a light exposure device (a nitrogen purge UV irradiator, manufactured by GS Yuasa Corporation, metal halide lamp, output: 120 W/cm), an integrated exposure amount of 1,000 mJ/$cm^2$ was applied on the surface of the molded body after molding processing, on which the protective layer 1 was formed and cured, thereby obtaining a molded body 1 (a laminate 1).

<Performance evaluation>

-Reflection characteristics-

The reflectance of the laminate 1 was measured using a spectrophotometer V-670 manufactured by JASCO Corporation from the side of the protective layer 1 and from the direction perpendicular to the surface of the protective layer 1 in a wavelength range of 380 nm to 1,100 nm. As the reflectance, the highest value among the maximum values of the reflection spectrum is indicated. As the evaluation result, A, B, or C is preferable, A or B is more preferable, and A is particularly preferable.

«Evaluation standard»

A: Reflectance is 20% or more.
B: Reflectance is 10% or more and less than 20%.
C: Reflectance is 5% or more and less than 10%.
D: Reflectance is less than 5%

-Chipping resistance-

A test piece having a thickness of 7 cm and a width of 5 cm was cut out from the obtained laminate 1, and the reflectance of the surface of the test piece was measured by the same method as the method in the above-described evaluation of reflection characteristics. The obtained test piece was caused to collide with 100 g of No. 7 crushed stone at a pressure of 0.3 MPa in an environment of a test temperature of 0°C using a gravelometer (JA-400S type, manufactured by Suga Test Instruments Co., Ltd.). Then, the reflectance of the surface of the test piece was measured by the same method as the method in the above-described evaluation of reflection characteristics. The chipping resistance of the laminate 1 was evaluated based on the following standards. As the evaluation result, A, B, or C is preferable, A or B is more preferable, and A is most preferable.

<<Evaluation standard>>

A: The decrease in reflectance is less than 20% as compared with the reflectance before the test.
B: The decrease in reflectance is 20% or more and less than 30% as compared with the reflectance before the test.
C: The decrease in reflectance is 30% or more and less than 50% as compared with the reflectance before the test.
D: The decrease in reflectance is 50% or more and less than 80% as compared with the reflectance before the test.
E: The decrease in reflectance is 80% or more as compared with the reflectance before the test.

-retroreflectivity-

The light was made incident on the surface of the laminate on the side of the protective layer at an incidence angle of 45°, reflectance was measured in the 45° direction, in which retroreflection occurs, and the ratio of the reflectance in the 45° direction to the reflectance in the 90° direction when the light was made incident at an incidence angle of 90° was measured.

$$\text{Retroreflectance (\%)} = (\text{Reflectance of retroreflected light at } 45^\circ \text{ incidence} / \text{Reflectance in } 90^\circ \text{ direction at } 90^\circ \text{ incidence}) \times 100$$

A is the most preferable; however, E also has a certain value as a product.

<<Evaluation standard>>

A: 50% or more
B: 20% or more and less than 50%
C: 5% or more and less than 20%
D: 1% or more and less than 5%
E: less than 1%

-Modulus of elasticity-

The indentation hardness of each of the layers was measured using a dynamic ultra micro hardness tester (DUH-201S, manufactured by Shimadzu Corporation).
The measurement conditions were as follows.

· Kind of indenter: Vickers
· Test mode: Load-unload test
· Test force: 40 mN
· Load speed: 1.3239 mN/sec
· Retention time: 5 sec

The evaluation results are summarized in Table 1.

(Examples 2 to 33 and Comparative Examples 1 to 4)

Each laminate was prepared in the same manner as in Example 1 except for the items shown below and the items shown in Tables 1 to 4.
Each of the obtained laminates was evaluated in the same manner as in Example 1. The evaluation results are summarized in Table 1 to Table 4.
Example 2: Instead of the alignment layer 1 and the cholesteric liquid crystal layer 1, an infrared reflective film (a silver particle layer 1) containing silver particles was formed by the method described in paragraphs 0122 to 0133 of JP2016-102952A.
Example 3: Instead of the alignment layer 1 and the cholesteric liquid crystal layer 1, an infrared reflective film painting layer (a silver particle layer 2) containing silver particles was formed by the method described below.
An acrylic resin (ACRYDIC A-1371, manufactured by DIC Corporation) was prepared using butyl acetate so that the content thereof was 10% by mass (in terms of the solid content), and then applied onto a 50 mm × 50 mm × 2 mm glass plate (Central Glass Co., Ltd.) with a wire bar so that the dry film thickness was 1 μm. Then, drying was carried out at 80°C for 15 minutes to form a peeling layer.
Next, a laminate was formed on the peeling layer in the order of titanium oxide (rutile / 40 nm), silver (15 nm), titanium oxide (rutile / 40 nm), silver (15 nm), and titanium oxide (rutile / 40 nm) using a vacuum vapor deposition apparatus (VEP-1000, manufactured by ULVAC, Inc.).
Next, the laminate was immersed in acetone for 120 minutes to dissolve the peeling layer to be peeled off, and ultrasonic dispersion (UH-300, manufactured by SMT Co., Ltd., output: 300 W, 20 kHz, liquid temperature: 20°C, 30 minutes) was performed to obtain an infrared reflective pigment having an average particle diameter of 8.5 μm.
After suction-filtering, the infrared reflective pigment obtained as described above was added in distilled water, the temperature was adjusted to 45°C, and sodium aluminate (FUJIFILM Wako Pure Chemical Corporation) was added while stirring so that the content thereof was 4% by mass with respect to the pigment. At that time, the pH of the slurry was maintained at 6 to 9 with sulfuric acid. The infrared reflective pigment on which a surface treatment layer of aluminum oxide was formed was filtered, washed, and dried.
Next, the infrared reflective pigment on which the surface treatment layer was formed was further immersed in ethyl acetate to which 3% by mass of stearic acid (manufactured by FUJIFILM Wako Pure Chemical Corporation) was added and subjected to ultrasonication (UH-300, manufactured by SMT Co., Ltd., output: 300 W, 20 kHz, liquid temperature: 20°C, 15 minutes) to obtain an infrared reflective pigment 1.
10 parts of the infrared reflective pigment 1, 10 parts of ACRYDIC A-405 (manufactured by DIC Corporation), and 80 parts of methyl ethyl ketone (manufactured by FUJIFILM Wako Pure Chemical Corporation) were mixed, the coating liquid was adjusted and then applied with a bar coater so that the film thickness was 15 μm, and dried at 100°C for 2 minutes, thereby obtaining an infrared reflective film painting layer (a silver particle layer 2) containing silver particles.
Example 4: The following protective layer 2 was formed instead of the protective layer 1.

<Formation of protective layer 2>

-Synthesis of acrylate-modified acrylic resin B-

130 parts of methyl methacrylate and 33 parts of glycidyl methacrylate were copolymerized using a radical polymerization initiator V-601 (2,2'-azobis(isobutyric acid) dimethyl, manufactured by FUJIFILM Wako Pure Chemical Corporation). 50 parts of the obtained polymer was reacted with 7.2 parts of acrylic acid in the presence of tetraethylammonium chloride, thereby obtaining an acrylate-modified acrylic resin B. The weight-average molecular weight was 23,000. The acrylate-functional amount (the amount of a structural unit having an acryloxy group with respect to the entire resin, where the structural unit is obtained by reacting acrylic acid with a structural unit derived from glycidyl methacrylate) was 11% by mass.

-Preparation of coating liquid 2 forming protective layer-

Preparation was carried out in the same manner as in Example 1 except that the acrylate-modified acrylic resin A was changed to the acrylate-modified acrylic resin B.

The base material surface opposite to the surface on which the alignment layer 1 and the cholesteric liquid crystal layer 1 were formed was coated using a wire bar coater so that the layer thickness was 15 μm, and dried at 120°C for 2 minutes, thereby forming a protective layer 2. The modulus of elasticity was 3.0 GPa.

Example 5: The following protective layer 3 was formed instead of the protective layer 1.

<Formation of protective layer 3>

-Preparation of coating liquid 3 forming protective layer-

The followings were stirred for mixing at 25°C for 24 hours, thereby obtaining a coating liquid 3 forming a protective layer.

· Ethanol: 8.0 parts
· Acrylate-modified acrylic resin B (weight-average molecular weight = 20,000): 19 parts
· UV absorber (Tinuvin 479-DW, manufactured by BASF SE, solid content: 40% by mass): 1 part
· Acrylic resin (MMA/MAA = 60/40 (mass ratio), manufactured by Sigma-Aldrich Co., LLC, Mn = 32,000): 6 parts
· IRGACURE 127 (manufactured by BASF SE): 0.1 parts
· F-553 (a fluorine-based surfactant, manufactured by DIC Corporation): 0.02 parts

The base material surface opposite to the surface on which the alignment layer 1 and the cholesteric liquid crystal layer 1 were formed was coated using a wire bar coater so that the layer thickness was 15 μm, and dried at 120°C for 2 minutes, thereby forming a protective layer 3. The modulus of elasticity was 1.0 GPa.

Example 6: The following protective layer 4 was formed instead of the protective layer 1.

-Synthesis of acrylate-modified acrylic resin C-

55 parts of methyl methacrylate and 108 parts of glycidyl methacrylate were copolymerized using a radical polymerization initiator V-601 (2,2'-azobis(isobutyric acid) dimethyl, manufactured by FUJIFILM Wako Pure Chemical Corporation). 50 parts of the obtained polymer was reacted with 23.6 parts of acrylic acid in the presence of tetraethylammonium chloride, thereby obtaining an acrylate-modified acrylic resin C. The weight-average molecular weight was 15,000. The acrylate-functional amount (the amount of a structural unit having an acryloxy group with respect to the entire resin, where the structural unit is obtained by reacting acrylic acid with a structural unit derived from glycidyl methacrylate) was 37% by mass.

-Preparation of coating liquid 4 forming protective layer-

Preparation was carried out in the same manner as in Example 1 except that the acrylate-modified acrylic resin A was changed to the acrylate-modified acrylic resin C.

The base material surface opposite to the surface on which the alignment layer 1 and the cholesteric liquid crystal layer 1 were formed was coated using a wire bar coater so that the layer thickness was 15 μm, and dried at 120°C for 2 minutes, thereby forming a protective layer 4. The modulus of elasticity was 10.0 GPa.

Example 7: The following protective layer 5 was formed instead of the protective layer 1.

-Preparation of coating liquid 5 forming protective layer-

The following materials was mixed and stirred for 24 hours at 25°C to obtain a hydrolysate 1 of an acrylate-modified siloxane oligomer.

-Composition-

· Acryloyloxypropyltrimethoxysilane (manufactured by Shin-Etsu Chemical Co., Ltd.): 15.0 parts
· Methyltrimethoxysilane (manufactured by Shin-Etsu Chemical Co., Ltd.): 6.0 parts
· Ethanol (manufactured by FUJIFILM Wako Pure Chemical Corporation): 17.5 parts
· Acetic acid (manufactured by FUJIFILM Wako Pure Chemical Corporation): 3.6 parts
· Water: 11.7 parts

Further, the followings were stirred for mixing at 25°C for 24 hours, thereby obtaining a coating liquid 5 forming a protective layer.

- Hydrolysate 1: 8.0 parts
- Ethanol: 8.0 parts
- Acrylate-modified acrylic resin C (weight-average molecular weight = 20,000): 11 parts
- Alumisol F-3000 (manufactured by Kawaken Fine Chemicals Co., Ltd., solid content: 10%): 10 parts
- UV absorber (Tinuvin 479-DW, manufactured by BASF SE, solid content: 40% by mass): 1 part
- Acrylic resin (MMA/MAA = 60/40 (mass ratio), manufactured by Sigma-Aldrich Co., LLC, Mn = 32,000): 6 parts
- IRGACURE 127 (manufactured by BASF SE): 0.1 parts
- F-553 (a fluorine-based surfactant, manufactured by DIC Corporation): 0.02 parts

The base material surface opposite to the surface on which the alignment layer 1 and the cholesteric liquid crystal layer 1 were formed was coated using a wire bar coater so that the layer thickness was 15 μm, and dried at 150°C for 30 minutes, thereby forming a protective layer 5. The modulus of elasticity was 15.0 GPa.

Example 8: The following protective layer 6 was formed instead of the protective layer 1.

-Preparation of coating liquid 6 forming protective layer-

The following materials was mixed and stirred for 24 hours at 25°C to obtain a hydrolysate 1 of an acrylate-modified siloxane oligomer.

-Composition-

· Acryloyloxypropyltrimethoxysilane (manufactured by Shin-Etsu Chemical Co., Ltd.): 15.0 parts
· Methyltrimethoxysilane (manufactured by Shin-Etsu Chemical Co., Ltd.): 6.0 parts
· Ethanol (manufactured by FUJIFILM Wako Pure Chemical Corporation): 17.5 parts
· Acetic acid (manufactured by FUJIFILM Wako Pure Chemical Corporation): 3.6 parts
· Water: 11.7 parts

Further, the followings were stirred for mixing at 25°C for 24 hours, thereby obtaining a coating liquid 6 forming a protective layer.

· Hydrolysate 1: 8.0 parts
· Ethanol: 8.0 parts
· Acrylate-modified acrylic resin C (weight-average molecular weight = 20,000): 11 parts
· Alumisol F-3000 (manufactured by Kawaken Fine Chemicals Co., Ltd., solid content: 10%): 30 parts
· UV absorber (Tinuvin 479-DW, manufactured by BASF SE, solid content: 40% by mass): 1 part
· Acrylic resin (MMA/MAA = 60/40 (mass ratio), manufactured by Sigma-Aldrich Co., LLC, Mn = 32,000): 6 parts
· IRGACURE 127 (manufactured by BASF SE): 0.1 parts
· F-553 (a fluorine-based surfactant, manufactured by DIC Corporation): 0.02 parts

The base material surface opposite to the surface on which the alignment layer 1 and the cholesteric liquid crystal layer 1 were formed was coated using a wire bar coater so that the layer thickness was 15 μm, and dried at 150°C for 30 minutes, thereby forming a protective layer 6. The modulus of elasticity was 25.0 GPa.

Example 9: ADHM6 (an acrylic pressure sensitive adhesive, manufactured by JUJO CHEMICAL Co., Ltd.) was used as the pressure sensitive adhesive. The modulus of elasticity was 0.008 GPa.

Example 10: TM-51K (a urethane reaction system, a laminated adhesive manufactured by TOYO INK Co., Ltd.) was used as the pressure sensitive adhesive. The modulus of elasticity was 0.02 Gpa.

Example 11: TM-55K (a urethane reaction system, a laminated adhesive manufactured by TOYO INK Co., Ltd.) was used as the pressure sensitive adhesive. The modulus of elasticity was 0.1 Gpa.

Examples 12 to 22: Laminates were formed in the same manner as in Example 1 except that the thickness of each of the layers was changed as shown in Table 2.

Example 23 and Example 24: Uneven structures were formed with molds in which the width and the depth of the molds illustrated in Fig. 1 and Fig. 2 were changed, respectively.

Example 25: An uneven structure was formed using the mold illustrated in Fig. 4. Fig. 4 is a schematic view of a mold forming a pyramid-shaped uneven structure as viewed from an oblique direction with respect to the mold surface, and the distance between the protruding parts each of which is formed in the pyramid shape (the width of the uneven structure formed in the pyramid shape) is 20 μm, and the height of the protruding part is 10 μm.

Example 26: An uneven structure was formed using the mold illustrated in Fig. 5. Fig. 5 is a schematic view of a mold forming a hemispherical uneven structure as viewed from an oblique direction with respect to the mold surface, and each hemispherical uneven structure has a width of 20 μm and a height of 10 μm.

Example 27: The uneven structure was not formed.

Example 28: A cholesteric liquid crystal layer 2 was formed in the same manner as in Example 1 except that the following cholesteric liquid crystal layer coating liquid 2 was used as the coating liquid.

[Composition of cholesteric liquid crystal layer coating liquid 2]

· Methyl ethyl ketone: 150.6 parts by mass

Liquid crystal compound 1 (the rod-like liquid crystal compound): 100.0 parts by mass
Photopolymerization initiator A (IRGACURE 907, manufactured by BASF SE): 0.50 parts by mass
Chiral agent A: 4.00 parts by mass
Chiral agent B: 4.00 parts by mass
Surfactant F1: 0.027 parts by mass

Chiral agent B (0 functional): the compound below. In the compound below, Bu represents an n-butyl group.

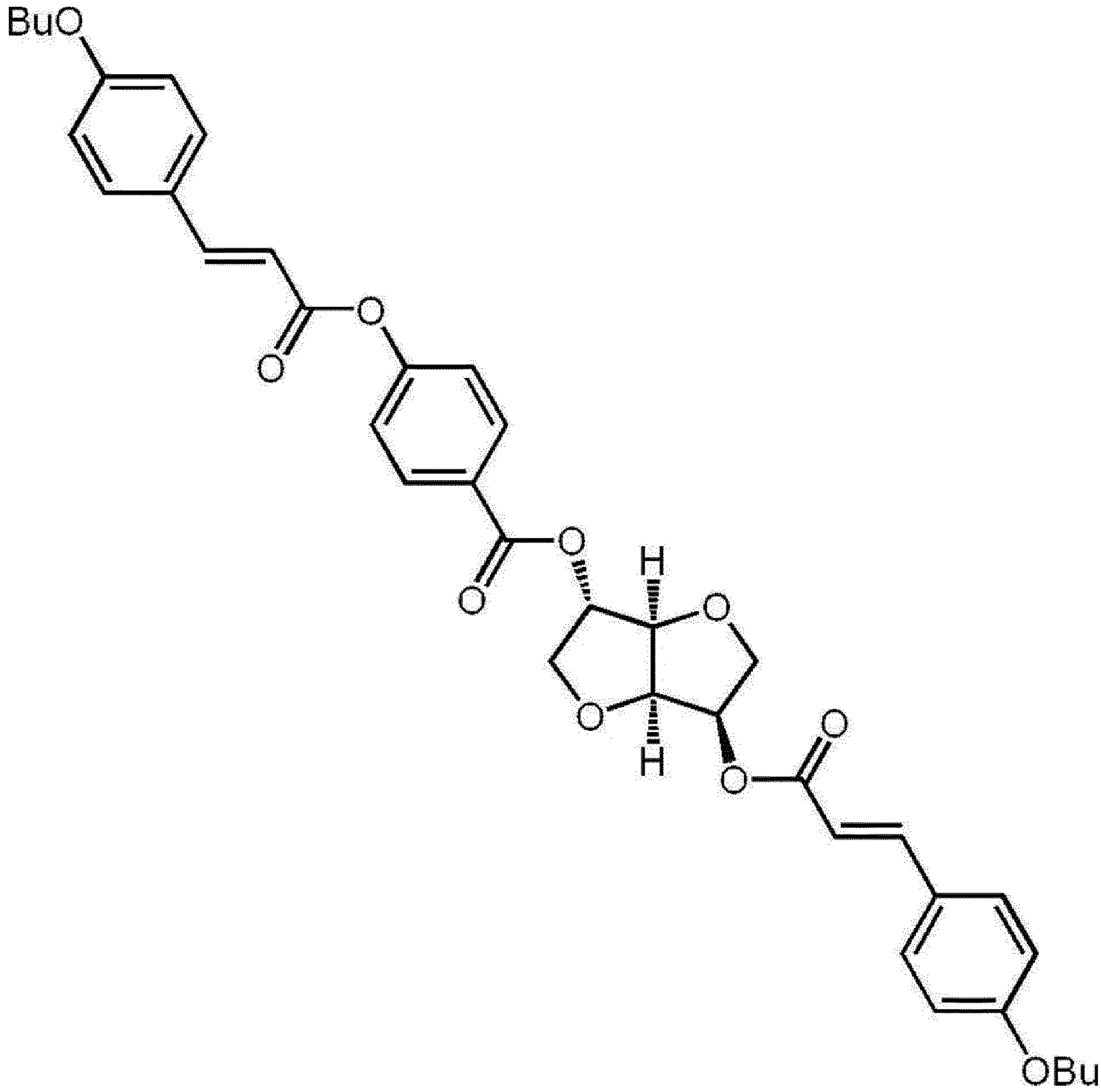

Example 29: A cholesteric liquid crystal layer 3 was formed in the same manner as in Example 1 except that the following cholesteric liquid crystal layer coating liquid 3 was used as the coating liquid.

[Composition of cholesteric liquid crystal layer coating liquid 3]

· Methyl ethyl ketone: 150.6 parts by mass

Liquid crystal compound 1 (the rod-like liquid crystal compound): 100.0 parts by mass
Photopolymerization initiator A (IRGACURE 907, manufactured by BASF SE): 0.50 parts by mass
Chiral agent A: 2.50 parts by mass
Chiral agent B: 2.50 parts by mass
Surfactant F1: 0.027 parts by mass

Example 30: A cholesteric liquid crystal layer 4 was formed in the same manner as in Example 1 except that the following cholesteric liquid crystal layer coating liquid 4 was used as the coating liquid.

[Composition of cholesteric liquid crystal layer coating liquid 4]

· Methyl ethyl ketone: 150.6 parts by mass

Liquid crystal compound 1 (the rod-like liquid crystal compound): 100.0 parts by mass
Photopolymerization initiator A (IRGACURE 907, manufactured by BASF SE): 0.50 parts by mass
Chiral agent A: 2.50 parts by mass
Surfactant F1: 0.027 parts by mass

Example 31: The colored layer 1 was not formed, and after forming an uneven structure on the cholesteric liquid crystal layer, a pressure sensitive adhesive was directly bonded.

Example 32: TECHNOLLOY C001 (manufactured by Sumika Acryl Co., Ltd., thickness: 125 μm) was used as a base material.

Example 33: A red paint (nax REAL 537, manufactured by Nippon Paint Co., Ltd.) as a colored layer (a resin layer) was dried on the surface of the reflective layer 1 at 100°C for 10 minutes to form a layer having an average layer thickness of 30 μm, and then a silver paint (MIR 51000, manufactured by Teikoku Printing Inks Mfg. Co., Ltd.) was dried at 100°C for 10 minutes to form a layer having an average layer thickness of 5 μm, thereby forming a colored layer 2.

Comparative Example 1: The protective layer was not formed.

Comparative Example 2: By using an ethylene-tetrafluoroethylene copolymer (ETFE) sheet (NEOFLON ETFE, manufactured by DAIKIN INDUSTRIES, Ltd., thickness: 25 μm) and bonding with a vacuum laminator (145°C, 0.1 MPa, 15 minutes), a protective layer 7 was formed.

Comparative Example 3: A polyvinyl chloride adhesive (B-2, manufactured by ThreeBond Co., Ltd.) was used as the pressure sensitive adhesive. The modulus of elasticity was 3 GPa.

Comparative Example 4: Low-density polyethylene (FC-D, manufactured by Mitsui Chemicals Tohcello Inc., thickness: 80 μm) was used as a base material.

[Table 1]

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Configuration | Protective layer | Protective layer 1 | Protective layer 1 | Protective layer 1 | Protective layer 2 | Protective layer 3 | Protective layer 4 | Protective layer 5 | Protective layer 6 | Protective layer 1 | Protective layer 1 | Protective layer 1 |
| | Base material | Acrylic resin | Acrylic resin | Acrylic resin | Acrylic resin | Polypropylene | Acrylic resin | Acrylic resin | Acrylic resin | Acrylic resin | Acrylic resin | Acrylic resin |
| | Reflective layer | Cholesteric liquid crystal layer 1 | Silver particle layer 1 | Silver particle layer 2 | Cholesteric liquid crystal layer 1 | Cholesteric liquid crystal layer 1 | Cholesteric liquid crystal layer 1 | Cholesteric liquid crystal layer 1 | Cholesteric liquid crystal layer 1 | Cholesteric liquid crystal layer 1 | Cholesteric liquid crystal layer 1 | Cholesteric liquid crystal layer 1 |
| | Reflection wavelength | 905 nm | 920 nm | 920 nm | 905 nm | 905 nm | 905 nm | 905 nm | 905 nm | 906 nm | 907 nm | 908 nm |
| | Resin layer | Colored layer 1 | Colored layer 1 | Colored layer 1 | Colored layer 1 | Colored layer 1 | Colored layer 1 | Colored layer 1 | Colored layer 1 | Colored layer 1 | Colored layer 1 | Colored layer 1 |
| | Adhesive layer | Adhesive layer 1 | Adhesive layer 1 | Adhesive layer 1 | Adhesive layer 1 | Adhesive layer 1 | Adhesive layer 1 | Adhesive layer 1 | Adhesive layer 1 | Adhesive layer 1 | Adhesive layer 2 | Adhesive layer 3 |
| Uneven structure of reflective layer | Uneven shape | Corner cube | Corner cube | Corner cube | Corner cube | Corner cube | Corner cube | Corner cube | Corner cube | Corner cube | Corner cube | Corner cube |
| | Height (depth) | 10 μm | 10 μm | 10 μm | 10 μm | 10 μm | 10 μm | 10 μm | 10 μm | 10 μm | 10 μm | 10 μm |
| | Width | 20 μm | 20 μm | 20 μm | 20 μm | 20 μm | 20 μm | 20 μm | 20 μm | 20 μm | 20 μm | 20 μm |
| Modulus of elasticity (GPa) | Protective layer | 5 | 5 | 5 | 3 | 1 | 10 | 15 | 25 | 5 | 5 | 5 |
| | Base material | 3 | 3 | 3 | 3 | 0.5 | 3 | 3 | 3 | 3 | 3 | 3 |
| | Resin layer | 0.5 | 0.5 | 0.5 | 0.5 | 0.5 | 0.5 | 0.5 | 0.5 | 0.5 | 0.5 | 0.5 |
| | Adhesive layer | 0.001 | 0.001 | 0.001 | 0.001 | 0.001 | 0.001 | 0.001 | 0.001 | 0.008 | 0.02 | 0.1 |
| Thickness (μm) | Protective layer | 15 | 15 | 15 | 15 | 15 | 15 | 15 | 15 | 15 | 15 | 15 |
| | Base material | 125 | 125 | 125 | 125 | 125 | 125 | 125 | 125 | 125 | 125 | 125 |
| | Resin layer | 30 | 30 | 30 | 30 | 30 | 30 | 30 | 30 | 30 | 30 | 30 |
| | Adhesive layer | 25 | 25 | 25 | 25 | 25 | 25 | 25 | 25 | 25 | 25 | 25 |

(continued)

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Evaluation result | Reflectance | A | A | A | A | B | A | A | A | A | A | A |
| | Chipping resistance | A | A | B | B | C | A | A | C | A | B | C |
| | Retroreflectivity | A | A | A | A | B | A | A | A | A | A | A |

[Table 2]

| | | Example 12 | Example 13 | Example 14 | Example 15 | Example 16 | Example 17 | Example 18 | Example 19 | Example 20 | Example 21 | Example 22 |
|---|---|---|---|---|---|---|---|---|---|---|---|---|
| Configuration | Protective layer | Protective layer 1 | Protective layer 1 | Protective layer 1 | Protective layer 1 | Protective layer 1 | Protective layer 1 | Protective layer 1 | Protective layer 1 | Protective layer 1 | Protective layer 1 | Protective layer 1 |
| | Base material | Acrylic resin | Acrylic resin | Acrylic resin | Acrylic resin | Acrylic resin | Acrylic resin | Acrylic resin | Acrylic resin | Acrylic resin | Acrylic resin | Acrylic resin |
| | Reflective layer | Cholesteric liquid crystal layer 1 | Cholesteric liquid crystal layer 1 | Cholesteric liquid crystal layer 1 | Cholesteric liquid crystal layer 1 | Cholesteric liquid crystal layer 1 | Cholesteric liquid crystal layer 1 | Cholesteric liquid crystal layer 1 | Cholesteric liquid crystal layer 1 | Cholesteric liquid crystal layer 1 | Cholesteric liquid crystal layer 1 | Cholesteric liquid crystal layer 1 |
| | Reflection wavelength | 905 nm | 920 nm | 905 nm | 905 nm | 905 nm | 905 nm | 905 nm | 905 nm | 905 nm | 905 nm | 905 nm |
| | Resin layer | Colored layer 1 | Colored layer 1 | Colored layer 1 | Colored layer 1 | Colored layer 1 | Colored layer 1 | Colored layer 1 | Colored layer 1 | Colored layer 1 | Colored layer 1 | Colored layer 1 |
| | Adhesive layer | Adhesive layer 1 | Adhesive layer 1 | Adhesive layer 1 | Adhesive layer 1 | Adhesive layer 1 | Adhesive layer 1 | Adhesive layer 1 | Adhesive layer 1 | Adhesive layer 1 | Adhesive layer 1 | Adhesive layer 1 |
| Uneven structure of reflective layer | Uneven shape | Corner cube | Corner cube | Corner cube | Corner cube | Corner cube | Corner cube | Corner cube | Corner cube | Corner cube | Corner cube | Corner cube |
| | Height (depth) | 10 μm | 10 μm | 10 μm | 10 μm | 10 μm | 10 μm | 10 μm | 10 μm | 10 μm | 10 μm | 10 μm |
| | Width | 20 μm | 20 μm | 20 μm | 20 μm | 20 μm | 20 μm | 20 μm | 20 μm | 20 μm | 20 μm | 20 μm |
| Modulus of elasticity (GPa) | Protective layer | 4 | 3 | 5 | 5 | 5 | 15 | 25 | 5 | 5 | 5 | 5 |
| | Base material | 3 | 3 | 3 | 3 | 3 | 3 | 3 | 3 | 3 | 3 | 3 |
| | Resin layer | 0.5 | 0.5 | 0.5 | 0.5 | 0.5 | 0.5 | 0.5 | 0.5 | 0.5 | 0.5 | 0.5 |
| | Adhesive layer | 0.001 | 0.001 | 0.001 | 0.001 | 0.001 | 0.001 | 0.001 | 0.001 | 0.001 | 0.001 | 0.001 |
| Thickness (μm) | Protective layer | 1 | 0.5 | 25 | 35 | 15 | 15 | 15 | 15 | 15 | 15 | 15 |
| | Base material | 125 | 125 | 125 | 125 | 125 | 125 | 125 | 125 | 125 | 125 | 125 |
| | Resin layer | 30 | 30 | 30 | 30 | 30 | 30 | 30 | 30 | 30 | 30 | 30 |
| | Adhesive layer | 25 | 25 | 25 | 25 | 20 | 15 | 10 | 80 | 120 | 150 | 200 |
| Evaluation result | Reflectance | A | A | A | A | A | A | A | A | A | A | B |
| | Chipping resistance | B | C | A | B | A | A | A | A | B | C | C |
| | Retroreflectivity | A | A | A | A | A | A | A | C | C | B | E |

[Table 3]

| | | Example 23 | Example 24 | Example 25 | Example 26 | Example 27 | Example 28 | Example 29 | Example 30 | Example 31 | Example 32 | Example 33 |
|---|---|---|---|---|---|---|---|---|---|---|---|---|
| Configuration | Protective layer | Protective layer 1 | Protective layer 1 | Protective layer 1 | Protective layer 1 | Protective layer 1 | Protective layer 1 | Protective layer 1 | Protective layer 1 | Protective layer 1 | Protective layer 1 | Protective layer 1 |
| | Base material | Acrylic resin | Acrylic resin | Acrylic resin | Acrylic resin | Acrylic resin | Acrylic resin | Acrylic resin | Acrylic resin | Acrylic resin | Polycarbonate | Acrylic resin |
| | Reflective layer | Cholesteric liquid crystal layer 1 | Cholesteric liquid crystal layer 1 | Cholesteric liquid crystal layer 1 | Cholesteric liquid crystal layer 1 | Cholesteric liquid crystal layer 1 | Cholesteric liquid crystal layer 2 | Cholesteric liquid crystal layer 3 | Cholesteric liquid crystal layer 4 | Cholesteric liquid crystal layer 1 | Cholesteric liquid crystal layer 1 | Cholesteric liquid crystal layer 1 |
| | Reflection wavelength | 905 nm | 905 nm | 905 nm | 905 nm | 905 nm | 430 nm | 700 nm | 1300 nm | 905 nm | 905 nm | 905 nm |
| | Resin layer | Colored layer 1 | Colored layer 1 | Colored layer 1 | Colored layer 1 | Colored layer 1 | Colored layer 1 | Colored layer 1 | Colored layer 1 | - | Colored layer 1 | Colored layer 2 |
| | Adhesive layer | Adhesive layer 1 | Adhesive layer 1 | Adhesive layer 1 | Adhesive layer 1 | Adhesive layer 1 | Adhesive layer 1 | Adhesive layer 1 | Adhesive layer 1 | Adhesive layer 1 | Adhesive layer 1 | Adhesive layer 1 |
| Uneven structure of reflective layer | Uneven shape | Corner cube | Corner cube | Pyramid | Hemisphere | Absent | Corner cube | Corner cube | Corner cube | Corner cube | Corner cube | Corner cube |
| | Height (depth) | 2μm | 100 μm | 10 μm | 10 μm | - | 10 μm | 10 μm | 10 μm | 10 μm | 10 μm | 10 μm |
| | Width | 1μm | 50 μm | 20 μm | 20 μm | - | 20 μm | 20 μm | 20 μm | 20 μm | 20 μm | 20 μm |
| Modulus of elasticity (GPa) | Protective layer | 5 | 5 | 5 | 5 | 5 | 5 | 5 | 5 | 5 | 5 | 5 |
| | Base material | 3 | 3 | 3 | 3 | 3 | 3 | 3 | 3 | 3 | 4 | 4 |
| | Resin layer | 0.5 | 0.5 | 0.5 | 0.5 | 0.5 | 0.5 | 0.5 | 0.5 | 0.5 | 0.5 | 0.5 |
| | Adhesive layer | 0.001 | 0.001 | 0.001 | 0.001 | 0.001 | 0.001 | 0.001 | 0.001 | 0.001 | 0.001 | 0.001 |
| Thickness (μm) | Protective layer | 15 | 15 | 15 | 15 | 15 | 15 | 15 | 15 | 15 | 15 | 15 |
| | Base material | 125 | 125 | 125 | 125 | 125 | 125 | 125 | 125 | 125 | 125 | 125 |
| | Resin layer | 30 | 30 | 30 | 30 | 30 | 30 | 30 | 30 | 30 | 30 | 30 |
| | Adhesive layer | 25 | 25 | 25 | 25 | 25 | 25 | 25 | 25 | 25 | 25 | 25 |
| Evaluation result | Reflectance | A | A | A | A | B | A | A | A | A | A | A |
| | Chipping resistance | A | A | A | A | C | A | A | A | A | A | A |
| | Retroreflectivity | B | B | B | C | E | B | A | B | A | A | A |

[Table 4]

| | | Comparative Example 1 | Comparative Example 2 | Comparative Example 3 | Comparative Example 4 |
|---|---|---|---|---|---|
| Configuration | Protective layer | Absent | Fluororesin sheet (ETFE) | Protective layer 1 | Protective layer 1 |
| | Base material | Acrylic resin | Acrylic resin | Acrylic resin | Polyethylene |
| | Reflective layer | Cholesteric liquid crystal layer 1 | Cholesteric liquid crystal layer 1 | Cholesteric liquid crystal layer 1 | Cholesteric liquid crystal layer 1 |
| | Reflection wavelength | 905 nm | 905 nm | 905 nm | 905 nm |
| | Resin layer | Colored layer 1 | Colored layer 1 | Colored layer 1 | Colored layer 1 |
| | Adhesive layer | Adhesive layer 1 | Adhesive layer 1 | Adhesive layer 1 | Adhesive layer 2 |
| Uneven structure of reflective layer | Uneven shape | Corner cube | Corner cube | Corner cube | Corner cube |
| | Height (depth) | 10 μm | 10 μm | 10 μm | 10 μm |
| | Width | 20 μm | 20 μm | 20 μm | 20 μm |
| Modulus of elasticity (GPa) | Protective layer | - | 0.5 | 5 | 5 |
| | Base material | 3 | 3 | 3 | 0.1 |
| | Resin layer | 0.5 | 0.5 | 0.5 | 0.5 |
| | Adhesive layer | 0.01 | 0.01 | 3.5 | 0.2 |
| Thickness (μm) | Protective layer | 15 | 25 | 15 | 15 |
| | Base material | 125 | 125 | 125 | 80 |
| | Resin layer | 30 | 30 | 30 | 30 |
| | Adhesive layer | 25 | 25 | 25 | 25 |
| Evaluation result | Reflectance | A | A | A | A |
| | Chipping resistance | E | E | E | E |
| | Retroreflectivity | C | A | A | A |

The reflection wavelength in Table 1 to Table 4 indicates the maximum reflection wavelength.

As shown in Table 1 to Table 4, the laminates of Example 1 to Example 33 were excellent in chipping resistance as compared with the laminates of Comparative Example 1 to Comparative Example 4.

In addition, the laminates of Example 1 to Example 33 were also excellent in reflectivity.

Further, the laminates of Example 1 to Example 21, Example 23 to Example 26, and Example 28 to Example 33 were also excellent in retroreflectivity.

## Claims

**1.** A laminate comprising, in the following order:

a protective layer having a modulus of elasticity E1 of 1 to 25 GPa and a thickness T1 of 1 to 25 μm, wherein the protective layer comprises a resin;

a base material having a modulus of elasticity E2 of 0.1 to 10 GPa and a thickness T2 of 1 to 500 μm, wherein the base material is an acrylic resin base material, a polycarbonate base material, or a polypropylene base material;

a reflective layer having a maximum reflection wavelength in a wavelength range of 380 nm to 2,000 nm, and

a thickness of 0.05 to 20 μm, wherein the reflective layer comprises a cholesteric liquid crystal compound or flat silver particles; and

an adhesive layer having a modulus of elasticity E3 of 0.0001 to 0.1 GPa and a thickness T3 of 15 to 150 μm, wherein the adhesive layer comprises a pressure sensitive adhesive,

wherein the modulus of elasticity of each layer satisfies a relationship of E1 ≥ E2 > E3, and the thickness of each layer satisfies a relationship of T2 > T3 ≥ T1, wherein the modulus of elasticity and the thickness are measured as defined in the description.

**2.** The laminate according to claim 1,
wherein the reflective layer has a maximum reflection wavelength in a wavelength range of 780 nm to 1,800 nm.

**3.** The laminate according to claim 1 or 2,
wherein the reflective layer is a layer having an uneven structure.

**4.** The laminate according to claim 3,
wherein the uneven structure is an uneven structure having a depth of 1 μm or more.

**5.** The laminate according to any one of claims 1 to 4, further comprising:
a resin layer between the reflective layer and the adhesive layer.

**6.** The laminate according to claim 5,
wherein the resin layer comprises a coloring agent.

**7.** The laminate according to claim 5 or 6,
wherein a modulus of elasticity E4 of the resin layer satisfies a relationship of E1 > E4 > E3.

**8.** The laminate according to claim 7,
wherein the modulus of elasticity of each layer satisfies a relationship of E1 ≥ E2 > E4 > E3.

**9.** The laminate according to any one of claims 1 to 8,
wherein the reflective layer has a hemispherical or corner cube-shaped uneven structure.

**10.** The laminate according to any one of claims 1 to 9,
wherein the laminate is an automobile exterior member.

## Patentansprüche

**1.** Laminat, das in der folgenden Reihenfolge umfasst:

eine Schutzschicht mit einem Elastizitätsmodul E1 von 1 bis 25 GPa und einer Dicke T1 von 1 bis 25 μm, wobei die Schutzschicht ein Harz umfasst;

ein Grundmaterial mit einem Elastizitätsmodul E2 von 0,1 bis 10 GPa und einer Dicke T2 von 1 bis 500 μm, wobei das Grundmaterial ein Acrylharz-Grundmaterial, ein Polycarbonat-Grundmaterial oder ein Polypropylen-Grundmaterial ist;

eine reflektierende Schicht mit einer maximalen Reflexionswellenlänge in einem Wellenlängenbereich von 380 nm bis 2.000 nm und einer Dicke von 0,05 bis 20 μm, wobei die reflektierende Schicht eine cholesterische Flüssigkristallverbindung oder flache Silberpartikel umfasst; und

eine Klebstoffschicht mit einem Elastizitätsmodul E3 von 0,0001 bis 0,1 GPa und einer Dicke T3 von 15 bis 150 μm, wobei die Klebstoffschicht einen Haftklebstoff umfasst,

wobei der Elastizitätsmodul jeder Schicht die Beziehung E1 ≥ E2 > E3 erfüllt und die Dicke jeder Schicht die Beziehung T2 > T3 ≥ T1 erfüllt, wobei die Elastizitätsmoduln und die Dicke wie in der Beschreibung definiert gemessen werden

**2.** Laminat nach Anspruch 1,
wobei die reflektierende Schicht eine maximale Reflexionswellenlänge in einem Wellenlängenbereich von 780 nm bis 1.800 nm aufweist.

**3.** Laminat nach Anspruch 1 oder 2, wobei die reflektierende Schicht eine Schicht mit einer unebenen Struktur ist.

**4.** Laminat nach Anspruch 3, wobei die unebene Struktur eine unebene Struktur mit einer Tiefe von 1 μm oder mehr ist.

**5.** Laminat nach einem der Ansprüche 1 bis 4, das ferner umfasst: eine Harzschicht zwischen der reflektierenden Schicht und der Klebstoffschicht.

**6.** Laminat nach Anspruch 5, wobei die Harzschicht ein Färbemittel umfasst.

**7.** Laminat nach Anspruch 5 oder 6, wobei ein Elastizitätsmodul E4 der Harzschicht die Beziehung $E1 > E4 > E3$ erfüllt.

**8.** Laminat nach Anspruch 7, wobei der Elastizitätsmodul jeder Schicht der folgenden Beziehung entspricht: $E1 \geq E2 > E4 > E3$.

**9.** Laminat nach einem der Ansprüche 1 bis 8, wobei die reflektierende Schicht eine halbkugelförmige oder eckwürfelförmige ungleichmäßige Struktur aufweist.

**10.** Laminat nach einem der Ansprüche 1 bis 9, wobei es sich bei dem Laminat um ein Kfz-Außenelement handelt.

**Revendications**

**1.** Un stratifié comprenant, dans l'ordre suivant :

une couche protectrice ayant un module d'élasticité E1 de 1 à 25 GPa et une épaisseur T1 de 1 à 25 μm, dans laquelle la couche protectrice comprend une résine ;
un matériau de base ayant un module d'élasticité E2 de 0,1 à 10 GPa et une épaisseur T2 de 1 à 500 μm, dans lequel le matériau de base est un matériau de base en résine acrylique, un matériau de base en polycarbonate ou un matériau de base en polypropylène ;
une couche réfléchissante ayant une longueur d'onde de réflexion maximale dans une plage de longueurs d'onde de 380 nm à 2 000 nm, et une épaisseur de 0,05 à 20 μm, dans laquelle la couche réfléchissante comprend un composé à cristaux liquides cholestériques ou des particules d'argent planes ; et
une couche adhésive ayant un module d'élasticité E3 de 0,0001 à 0,1 GPa et une épaisseur T3 de 15 à 150 μm, dans laquelle la couche adhésive comprend un adhésif sensible à la pression,
dans lequel le module d'élasticité de chaque couche satisfait à une relation de $E1 \geq E2 > E3$, et l'épaisseur de chaque couche satisfait à une relation de $T2 > T3 \geq T1$, dans lequel les modules d'élasticité et l'épaisseur sont mesurés comme défini dans la description.

**2.** Stratifié selon la revendication 1, dans lequel la couche réfléchissante a une longueur d'onde de réflexion maximale dans une gamme de longueurs d'onde de 780 nm à 1800 nm.

**3.** Stratifié selon la revendication 1 ou 2, dans lequel la couche réfléchissante est une couche ayant une structure irrégulière.

**4.** Stratifié selon la revendication 3, dans lequel la structure irrégulière est une structure irrégulière ayant une profondeur de 1 μm ou plus.

**5.** Stratifié selon l'une quelconque des revendications 1 à 4, comprenant en outre : une couche de résine entre la couche réfléchissante et la couche adhésive.

**6.** Stratifié selon la revendication 5, dans lequel la couche de résine comprend un agent colorant.

7. Stratifié selon la revendication 5 ou 6, dans lequel un module d'élasticité E4 de la couche de résine satisfait à une relation E1 > E4 > E3.

8. Stratifié selon la revendication 7, dans lequel le module d'élasticité de chaque couche satisfait à une relation E1 ≥ E2 > E4 > E3.

9. Stratifié selon l'une quelconque des revendications 1 à 8, dans lequel la couche réfléchissante présente une structure irrégulière en forme d'hémisphère ou de cube d'angle.

10. Stratifié selon l'une quelconque des revendications 1 à 9, dans lequel le stratifié est un élément extérieur d'automobile.

FIG. 1

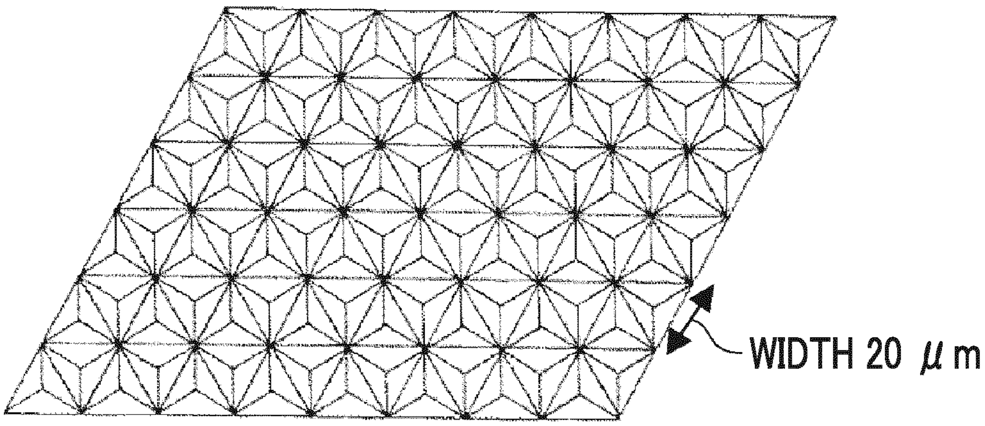


FIG. 2

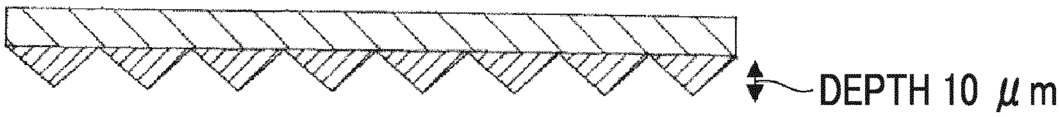


FIG. 3

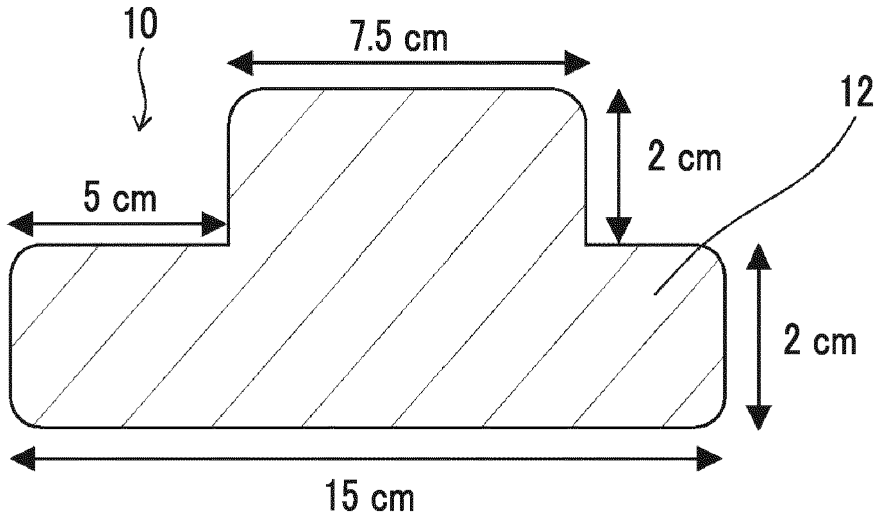

FIG. 4

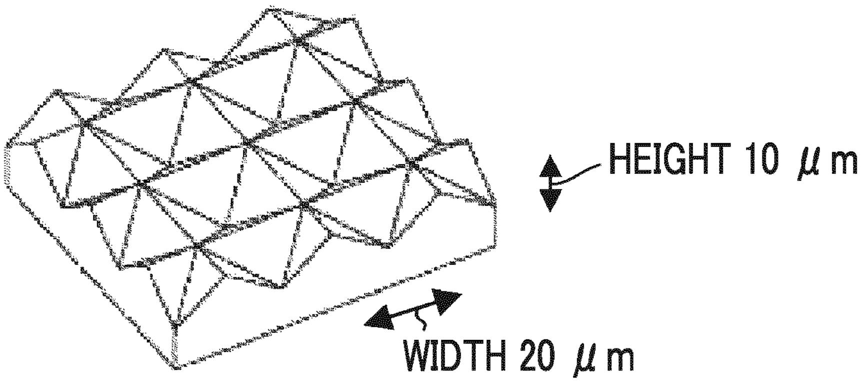


FIG. 5

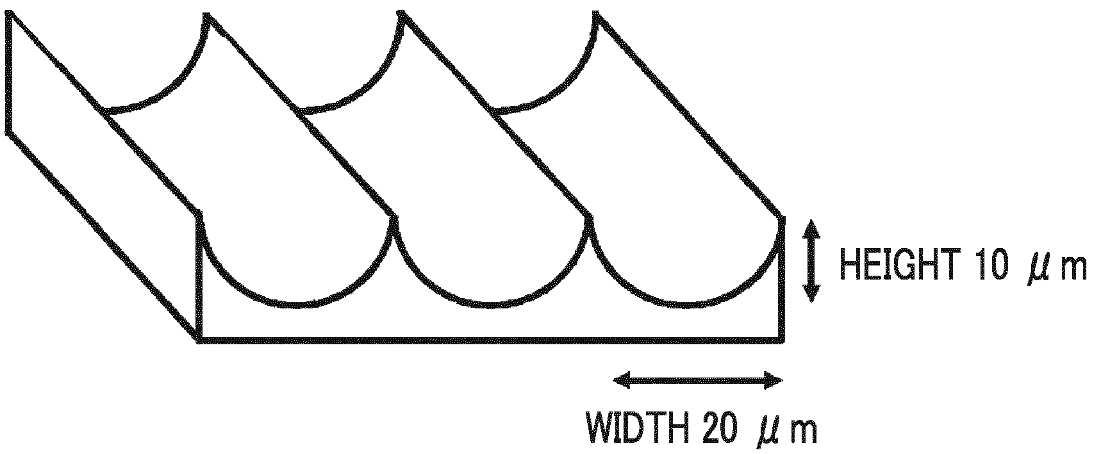

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011154215 A
- JP 2018077532 A
- JP 2017097113 A
- JP 2016102952 A
- US 2016259102 A1
- US 2004180148 A1
- JP 2011212892 A
- JP 2016139006 A
- JP 2009217258 A
- JP 2007229999 A
- JP 2013 A
- JP 237593 A
- WO 2007060884 A
- JP 2008281989 A
- JP 1999513019 A
- JP H11513019 A
- WO 199700600 A
- JP 2006526165 A
- US 2367661 A
- US 2367670 A
- US 2448828 A
- US 2722512 A
- US 3046127 A
- US 2951758 A
- US 3549367 A
- JP 60105667 A
- JP S60105667 A
- US 4239850 A
- US 4212970 A
- WO 2016006664 A
- JP 8338913 A
- JP H8338913 B
- JP 4052558 B
- JP 2006285197 A
- JP 2007076839 A
- JP 2007138138 A
- JP 2007094071 A
- JP 2007121721 A
- JP 2007140465 A
- JP 2007156439 A
- JP 2007133184 A
- JP 2009109831 A
- JP 3883848 B
- JP 4151746 B
- JP 2002229039 A
- JP 2002265541 A
- JP 2002317013 A
- JP 4205195 B
- JP 4205198 B
- JP 2003520878 A
- JP 2004529220 A
- JP 4162850 B
- JP 2005007765 A
- JP 2009 A
- JP 256572 A
- JP 4502784 B
- JP 2009237362 A
- JP 2000 A
- JP 310706 A
- JP 2006023696 A


### Non-patent literature cited in the description


- *FUJIFII,M Research Report,* 2005, vol. 50, 60-63
- Phase transition dynamics. **MASAO DOI.** Polymer physics. Iwanami Shoten, Publishers, 1992, 2
- **C. DESTRADE et al.** *Mol. Cryst,* 1981, vol. 71, 111
- **C. DESTRADE et al.** *Mol. Cryst.,* 1985, vol. 122, 141
- *Physics lett., A,* 1990, vol. 78, 82
- **B. KOHNE et al.** *Angew. Chem.,* 1984, vol. 96, 70
- **J. M. LEHN et al.** *J. Chem. Commun.,* 1985, 1794
- **J. ZHANG et al.** *J. Am. Chem. Soc.,* 1994, vol. 116, 2655
- Chiral Agent for Twisted Nematic (TN) and Super-Twisted Nematic (STN). Handbook of Liquid Crystal Device. 142th Committee of the Society, Japan Society for the Promotion of Science, 1989, 199
- Liquid Crystal Handbook. Maruzen Publishing Co, 30 October 2000
- Liquid Crystal Handbook. Maruzen Publishing Co,
- Characteristic Evaluation and Control Technology of Peeling Paper, Pealing Film, and Adhesive Tape. JOHOKIKO Co., Ltd, 2004